(19)

Europäisches
Patentamt
European
Patent Office
Office européen
des brevets

(11)  **EP 4 665 036 A2**

(12)  **EUROPEAN PATENT APPLICATION**

(43) Date of publication:
   **17.12.2025   Bulletin 2025/51**

(21) Application number: **25213346.7**

(22) Date of filing: **15.02.2021**

(51) International Patent Classification (IPC):
   *H04W 72/04* (2023.01)

(52) Cooperative Patent Classification (CPC):
   **H04L 5/0053; H04B 7/024; H04B 7/0617;
   H04B 7/0628; H04L 1/1825; H04L 1/1854;
   H04L 1/1858; H04L 1/1861; H04L 1/1864;
   H04L 1/1887; H04L 1/1896;** H04L 5/0023;
   H04W 72/21

(84) Designated Contracting States:
   **AL AT BE BG CH CY CZ DE DK EE ES FI FR GB
   GR HR HU IE IS IT LI LT LU LV MC MK MT NL NO
   PL PT RO RS SE SI SK SM TR**

(30) Priority:   **13.02.2020   KR 20200017865**

(62) Document number(s) of the earlier application(s) in
   accordance with Art. 76 EPC:
   **21753010.4 / 4 093 130**

(71) Applicant: **Samsung Electronics Co., Ltd.**
   **Suwon-si, Gyeonggi-do 16677 (KR)**

(72) Inventors:
   • **JANG, Youngrok**
     **16677 Suwon-si (KR)**

   • **NOH, Hoongdong**
     **16677 Suwon-si (KR)**
   • **JI, Hyoungju**
     **16677 Suwon-Si (KR)**
   • **PARK, Jinhyun**
     **16677 Suwon-si (KR)**
   • **LIM, Seongmok**
     **16677 Suwon-si (KR)**

(74) Representative: **Nederlandsch Octrooibureau**
   **P.O. Box 29720**
   **2502 LS The Hague (NL)**

Remarks:
   This application was filed on 04/11/2025 as a
   divisional application to the application mentioned
   under INID code 62.

(54)  **METHOD AND DEVICE FOR REPETITIVE TRANSMISSION OF UPLINK CONTROL
   INFORMATION FOR NETWORK COOPERATIVE COMMUNICATION**

(57)    A method performed by a user equipment, UE, in a wireless communication system, the method comprising transmitting, to a base station, UE capability information indicating that the UE supports physical uplink control channel, PUCCH, repetitions related to multiple transmission and reception points, TRPs; receiving, from the base station, a medium access control, MAC, control element, CE, associated with a PUCCH spatial relation activation for the PUCCH repetitions, the MAC CE including a first PUCCH spatial relation information identifier, ID, a second PUCCH spatial relation information ID and a PUCCH resource ID which is to be activated with first spatial relation information and second spatial relation information, wherein the MAC CE is applied to all PUCCH resources in a PUCCH resource group including the PUCCH resource ID; and performing a PUCCH transmission associated with the PUCCH repetitions, wherein the first spatial relation information and the second spatial relation information are used for the PUCCH repetitions, based on information associated with a transmission order and configured by a higher layer signaling

FIG.  15E

## Description

This is a divisional application from the European patent application No. 21753010.4 (i.e. PCT application No. PCT/KR2021/001884 filed on 15 February 2021)

## TECHNICAL FIELD

The disclosure relates to a wireless communication system, and more particularly, to a method and an apparatus, whereby a terminal repetitively transmits, through an uplink, control information to a plurality of transmission points, panels, or beams, for cooperative communication between the plurality of transmission points, panels, or beams.

## BACKGROUND ART

In order to meet the increasing demand with respect to wireless data traffic after the commercialization of 4th generation (4G) communication systems, efforts have been made to develop enhanced 5th generation (5G) communication systems or pre-5G communication systems. For this reason, the 5G or pre-5G communication system is also called a beyond 4G network communication system or post long term evolution (LTE) system.

In order to increase a data rate, consideration is given to implementing 5G communication systems in ultra-high frequency bands (millimeter wave (mmW)) (e.g., 60 GHz). To alleviate path loss of radio waves and to increase a transmission distance of radio waves in a ultrahigh frequency band, techniques, such as beamforming, massive multi-input and multi-output (MIMO), full dimensional MIMO (FD-MIMO), an array antenna, analog beamforming, and a large scale antenna, have been discussed in the 5G communication system.

Also, in order to improve system networks, for 5G communication systems, technologies such as evolved small cell, advanced small cell, cloud radio access network (cloud RAN), ultra-dense network, device-to-device (D2D) communication, wireless backhaul, moving network, cooperative communication, coordinated multi-points (CoMP), and received-interference cancellation have been developed. Also, for 5G communication systems, advanced coding modulation (ACM) schemes such as hybrid frequency-shift keying (FSK) and quadrature amplitude modulation (QAM) modulation (FQAM) and sliding window superlocation coding (SWSC) and enhanced network access schemes such as filter-bank multi-carrier (FBMC), non-orthogonal multiple access (NOMA), and sparse code multiple access (SCMA) have been developed.

The Internet has evolved from a human-based connection network, where humans create and consume information, to the Internet of things (IoT), where distributed elements such as objects exchange information with each other to process the information. Internet of everything (IoE) technologies in which big data processing technologies, etc. based on connection with a cloud server, etc. are combined with the IoT technologies have also emerged. To implement the IoT, technological elements, such as a sensing technology, a wired/wireless communication and network infrastructure, a service interface technology, and a security technology, are required, and thus, recently, techniques for connection between things, such as a sensor network, machine-to-machine (M2M) communication, machine-type communication (MTC), etc., have been studied. In an IoT environment, intelligent Internet technology (IT) services that create new values in human life by collecting and analyzing data generated among connected things, may be provided. IoT may be applied to a variety of areas, such as smart homes, smart buildings, smart cities, smart cars or connected cars, smart grid, health care, smart home appliances and advanced medical services through convergence and combination between existing Information Technologies (IT) and various industrial applications.

Thus, various attempts have been made to apply the 5G communication system to an IoT network. For example, technologies such as sensor network, M2M communication, and MTC are implemented by 5G communication technologies such as beamforming, MIMO, and array antenna. As described above, that the cloud RAN may be applied as the big data processing technology may also be regarded as an example of the convergence between the 5G technology and the IoT technology.

As various services may be provided with the development of wireless communication systems, there is a demand for a method of seamlessly supporting a service related to repetitive transmission of uplink data of a terminal.

## DISCLOSURE

## TECHNICAL PROBLEM

The disclosure may provide a method and an apparatus for a terminal to repetitively transmit uplink control information in a wireless communication system. In more detail, a method, performed by a terminal, of repetitively transmitting uplink control information to a plurality of transmission points, panels, or beams, for network cooperative communication (network coordination) may be provided.

TECHNICAL SOLUTION

An embodiment of the disclosure may provide a method and an apparatus for repetitive transmission of uplink control information for network cooperative communication. For example, provided is a user equipment (UE) performing repetitive transmission in a wireless communication system, the UE being configured to receive, from a base station, configuration information for repetitively transmitting a physical uplink control channel (PUCCH) to a plurality of transmission reception points (TRPs), receive, from the base station, an indication with respect to repetitive transmission of a first PUCCH through the plurality of TRPs, based on the configuration information for repetitively transmitting the PUCCH, identify that the repetitive transmission of the first PUCCH overlaps other uplink transmission, based on at least one of a repetitive transmission unit, a number of times of repetitive transmission, a number of TRPs, a type of uplink control information (UCI), a scheduling time point, and a number of activated transmission beams of each of the repetitive transmission of the first PUCCH and the other uplink transmission, determine which transmission between the repetitive transmission of the first PUCCH and the other uplink transmission is to be performed, and according to a result of the determining, perform the determined transmission between the repetitive transmission of the first PUCCH and the other uplink transmission, to the base station.

ADVANTAGEOUS EFFECTS

According to the disclosure, when network cooperative communication is used in a wireless communication system, a terminal may detect uplink control information in a highly reliable manner, through repetitive transmission of the uplink control information to each of a plurality of transmission points, panels, or beams.

DESCRIPTION OF THE DRAWINGS

FIG. 1 is a diagram illustrating a basic structure of a time-frequency domain in a wireless communication system according to an embodiment of the disclosure.

FIG. 2 is a diagram for describing structures of a frame, a subframe, and a slot in a wireless communication system according to an embodiment of the disclosure.

FIG. 3 illustrates an example of a configuration of a bandwidth part (BWP) in a wireless communication system according to an embodiment of the disclosure.

FIG. 4 is a diagram illustrating an example of configuring a control resource set of a downlink control channel in a wireless communication system according to an embodiment of the disclosure.

FIG. 5 is a diagram for describing a structure of a downlink control channel in a wireless communication system according to an embodiment of the disclosure.

FIG. 6 is a diagram illustrating an example of frequency domain resource allocation of a physical downlink shared channel (PDSCH) in a wireless communication system according to an embodiment of the disclosure.

FIG. 7 is a diagram illustrating an example of time domain resource allocation of a PDSCH in a wireless communication system according to an embodiment of the disclosure.

FIG. 8 is a diagram illustrating an example of time domain resource allocation according to a subcarrier spacing of a data channel and a control channel in a wireless communication system according to an embodiment of the disclosure.

FIG. 9 is a diagram illustrating a case where a plurality of physical uplink control channel (PUCCH) resources for transmitting hybrid automatic repeat request acknowledgement (HARQ-ACK) with respect to a PDSCH overlap each other when multi-slot repetition is not configured, according to an embodiment of the disclosure.

FIGS. 10A and 10B are diagrams illustrating a case where PUCCH resources overlap each other when multi-slot repetition is configured, according to an embodiment of the disclosure.

FIG. 11A is a diagram illustrating a medium access control (MAC)-control element (CE) payload for configuring and indicating a timing advance command, according to an embodiment of the disclosure.

FIG. 11B is a diagram illustrating a time difference between a downlink frame and an uplink frame when a timing advance is applied, according to an embodiment of the disclosure.

FIG. 12 is a diagram illustrating a radio protocol architecture of a base station and a terminal during execution of a single cell, carrier aggregation, and dual connectivity, according to an embodiment of the disclosure.

FIG. 13 is a diagram illustrating an example of antenna port configuration and resource allocation for cooperative communication according to one or more embodiments in a wireless communication system according to an embodiment of the disclosure.

FIG. 14 is a diagram illustrating an example of a configuration of downlink control information (DCI) for cooperative communication in a wireless communication system according to an embodiment of the disclosure.

FIG. 15A illustrates an HARQ-ACK information transmission method according to various DCI configurations and PUCCH configurations for non-coherent (NC)-joint transmission (JT), according to an embodiment of the disclosure.

FIG. 15B illustrates an HARQ-ACK information transmission method according to various DCI configurations and PUCCH configurations for NC-JT, according to an embodiment of the disclosure.

FIG. 15C illustrates an HARQ-ACK information transmission method according to various DCI configurations and PUCCH configurations for NC-JT, according to an embodiment of the disclosure.

FIG. 15D illustrates an HARQ-ACK information transmission method according to various DCI configurations and PUCCH configurations for NC-JT, according to an embodiment of the disclosure.

FIG. 15E illustrates a flowchart of a method of activating a plurality of pieces of PUCCH-spatialRelationInfo via an MAC-CE, according to one or more embodiments of the disclosure.

FIGS. 16A and 16B are diagrams illustrating examples with respect to a beam configuration scheme with respect to each PUCCH transmission and a scheme for performing repetitive transmission in a terminal, during PUCCH repetitive transmission with respect to a plurality of transmission reception points (TRPs), according to one or more embodiments of the disclosure.

FIG. 17 illustrates an example of a timing advance command domain for PUCCH repetitive transmission, according to an embodiment of the disclosure.

FIG. 18 illustrates a case where PUCCH repetition signals according to timing adjustment of another uplink overlap each other, according to an embodiment of the disclosure.

FIG. 19 illustrates an example of PUCCH repetitive transmission when a guard period is allocated in a slot or orthogonal frequency division multiplexing (OFDM) symbol unit, according to an embodiment of the disclosure.

FIG. 20 illustrates an example in which PUCCH transmission is not completed in a slot due to a guard period of an OFDM symbol unit, when a PUCCH OFDM symbol length is 14, according to an embodiment of the disclosure.

FIG. 21 is a diagram illustrating an example of allocation of a guard period and a PUCCH repetition signal in a slot, according to an embodiment of the disclosure.

FIG. 22 is a diagram illustrating an example with respect to an order of PUCCH repetitive transmission according to the number of times of PUCCH repetitive transmission, according to an embodiment of the disclosure.

FIG. 23 illustrates an example of a method of preventing PUCCH overlapping by adjusting a timing advance command of a PUCCH with respect to two TRPs, according to an embodiment of the disclosure.

FIG. 24 illustrates an example of each of a method of reducing a slot of a PUCCH repetition signal transmitted later and a method of reducing a slot of a PUCCH repetition signal transmitted first, when the PUCCH repetition signals with respect to two TRPs overlap each other due to uplink timing adjustment, according to an embodiment of the disclosure.

FIG. 25 is a diagram illustrating an example of a timing advance command domain of a PUCCH repetition signal, to which a bit for indicating a PUCCH repetition signal for adjusting a slot size is added, according to an embodiment of the disclosure.

FIG. 26 is a diagram illustrating an example of operating various multiple TRPs (or a multi-TRP), according to an embodiment of the disclosure.

FIG. 27 is a diagram illustrating an example of determining whether or not to drop predetermined transmission by taking into account a priority order when PUCCH repetitive transmission taking into account a plurality of TRPs overlaps PUCCH repetitive transmission taking into account another plurality of TRPs or PUCCH repetitive transmission taking into account a single TRP, according to an embodiment of the disclosure.

FIG. 28 illustrates a structure of a terminal in a wireless communication system according to an embodiment of the disclosure.

FIG. 29 illustrates a structure of a base station in a wireless communication system according to an embodiment of the disclosure.

BEST MODE

According to an embodiment of the disclosure, there is provided a user equipment (UE) performing repetitive transmission in a wireless communication system, the UE including a transceiver and at least one processor. The least one processor of the UE may be configured to receive, from a base station, configuration information for repetitively transmitting a physical uplink control channel (PUCCH) to a plurality of transmission reception points (TRPs), receive, from the base station, an indication with respect to repetitive transmission of a first PUCCH through the plurality of TRPs, based on the configuration information for repetitively transmitting the PUCCH, identify that the repetitive transmission of the first PUCCH overlaps other uplink transmission, based on at least one of a repetitive transmission unit, a number of times of repetitive transmission, a number of TRPs, a type of uplink control information (UCI), a scheduling time point, and a number of activated transmission beams of each of the repetitive transmission of the first PUCCH and the other uplink transmission, determine which transmission between the repetitive transmission of the first PUCCH and the other uplink transmission is to be performed, and according to a result of the determining, perform the determined transmission between the repetitive transmission of the first PUCCH and the other uplink transmission, to the base station.

According to an embodiment, the other uplink transmission may include at least one of repetitive transmission of a second PUCCH through a plurality of TRPs, repetitive transmission of the second PUCCH through a single TRP, single transmission of the second PUCCH through a single TRP, and physical uplink shared channel (PUSCH) transmission, and the repetitive transmission of the first PUCCH may be performed with a higher priority than the other uplink transmission, when the repetitive transmission unit of the repetitive transmission of the first PUCCH is shorter than the repetitive transmission unit of the other uplink transmission.

According to an embodiment, the other uplink transmission may include at least one of repetitive transmission of a second PUCCH through a plurality of TRPs, repetitive transmission of the second PUCCH through a single TRP, single transmission of the second PUCCH through a single TRP, and PUSCH transmission, and the repetitive transmission of the first PUCCH may be performed with a higher priority than the other uplink transmission, when the number of times of repetitive transmission of the repetitive transmission of the first PUCCH is less than a reference value or the number of times of repetitive transmission of the other uplink transmission.

According to an embodiment, the other uplink transmission may include at least one of uplink transmission through a plurality of TRPs and uplink transmission through a single TRP, and the repetitive transmission of the first PUCCH may be performed with a higher priority than the other uplink transmission, when the number of TRPs for the repetitive transmission of the first PUCCH and the number of activated transmission beams with respect to a used PUCCH resource are greater than the number of TRPs and the number of activated transmission beams for the other uplink transmission.

According to an embodiment, the configuration information for repetitively transmitting the PUCCH to the plurality of TRPs may include transmission beam information with respect to a resource of the PUCCH, and the at least one processor may further be configured to: receive, from the base station a medium access control (MAC) control element (CE) including a plurality of pieces of transmission beam information with respect to the resource of the PUCCH; and based on the transmission beam information with respect to the resource of the PUCCH and the plurality of pieces of transmission beam information with respect to the resource of the PUCCH included in the MAC CE, determine a plurality of transmission beams for the repetitive transmission of the PUCCH.

According to an embodiment, the configuration information for repetitively transmitting the PUCCH may include at least one hopping identifier and at least one scrambling identifier, and the at least one processor may further be configured to: identify whether at least one of a number of the at least one hopping identifier and a number of the at least one scrambling identifier is less than the number of TRPs and the number of activated transmission beams with respect to a PUCCH resource used for the repetitive transmission of the first PUCCH; when the number of the at least one hopping identifier is less than the number of TRPs and the number of activated transmission beams with respect to the PUCCH resource used for the repetitive transmission of the first PUCCH, with respect to one or more TRPs remaining after mapping at least one TRP corresponding to the number of the at least one hopping identifier with the at least one hopping identifier, determine one or more hopping identifiers of the remaining one or more TRPs, based on at least one of one hopping identifier from among the at least one hopping identifier or a physical cell identity (PCI) of a serving cell; and when the number of the at least one scrambling identifier is less than the number of TRPs and the number of activated transmission beams with respect to the PUCCH resource used for the repetitive transmission of the first PUCCH, with respect to one or more TRPs remaining after mapping at least one TRP corresponding to the number of the at least one scrambling identifier with the at least one scrambling identifier, determine one or more scrambling identifiers of the remaining one or more TRPs, based on at least one of one scrambling identifier from among the at least one scrambling identifier or the PCI of the serving cell.

According to another embodiment of the disclosure, there is provided a base station transmitting and receiving a signal to and from a user equipment (UE) in a wireless communication system, the base station including a transceiver and at least one processor. The at least one processor of the base station is configured to transmit, to the UE, configuration information for repetitively transmitting a physical uplink control channel (PUCCH) to a plurality of transmission reception points (TRPs), transmit, to the UE, an indication with respect to repetitive transmission of a first PUCCH through the plurality of TRPs, and receive one of the repetitive transmission of the first PUCCH and other uplink transmission, the one being determined based on a result in which the UE identifies that the repetitive transmission of the first PUCCH overlaps the other uplink transmission, wherein the one of the repetitive transmission of the first PUCCH and the other uplink transmission, the one being determined based on the result of the identifying is determined based on at least one of a repetitive transmission unit, a number of times of repetitive transmission, a number of TRPs, a type of uplink control information (UCI), a scheduling time point, and a number of activated transmission beams of each of the repetitive transmission of the first PUCCH and the other uplink transmission.

According to an embodiment, the other uplink transmission may include at least one of repetitive transmission of a second PUCCH through a plurality of TRPs, repetitive transmission of the second PUCCH through a single TRP, single transmission of the second PUCCH through a single TRP, and physical uplink shared channel (PUSCH) transmission, and the repetitive transmission of the first PUCCH may be performed with a higher priority than the other uplink transmission, when the repetitive transmission unit of the repetitive transmission of the first PUCCH is shorter than the repetitive transmission unit of the other uplink transmission.

According to an embodiment, the other uplink transmission may include at least one of repetitive transmission of a second PUCCH through a plurality of TRPs, repetitive transmission of the second PUCCH through a single TRP, single transmission of the second PUCCH through a single TRP, and PUSCH transmission, and the repetitive transmission of the first PUCCH may be performed with a higher priority than the other uplink transmission, when the number of times of repetitive transmission of the repetitive transmission of the first PUCCH is less than a reference value or the number of times of repetitive transmission of the other uplink transmission.

According to an embodiment, the other uplink transmission may include at least one of uplink transmission through a plurality of TRPs and uplink transmission through a single TRP, and the repetitive transmission of the first PUCCH may be performed with a higher priority than the other uplink transmission, when the number of TRPs for the repetitive transmission of the first PUCCH and the number of activated transmission beams with respect to a used PUCCH resource are greater than the number of TRPs and the number of activated transmission beams for the other uplink transmission.

According to an embodiment, the configuration information for repetitively transmitting the PUCCH to the plurality of TRPs may include transmission beam information with respect to a resource of the PUCCH, the at least one processor may further be configured to transmit, to the UE, a medium access control (MAC) control element (CE) including a plurality of pieces of transmission beam information with respect to the resource of the PUCCH, and a plurality of pieces of antenna activation information with respect to the resource of the PUCCH may be used to determine a plurality of transmission beams for the repetitive transmission of the PUCCH, based on the transmission beam information with respect to the resource of the PUCCH and the plurality of pieces of transmission beam information with respect to the resource of the PUCCH included in the MAC CE.

According to an embodiment, the configuration information for repetitively transmitting the PUCCH may include at least one hopping identifier and at least one scrambling identifier, a hopping identifier from among the at least one hopping identifier or a physical cell identity (PCI) of a serving cell may be used, when a number of the at least one hopping identifier is less than the number of TRPs and the number of activated transmission beams with respect to the PUCCH resource used for the repetitive transmission of the first PUCCH, in order to determine one or more hopping identifiers of one or more TRPs remaining after mapping at least one TRP corresponding to the number of the at least one hopping identifier with the at least one hopping identifier, and a scrambling identifier from among the at least one scrambling identifier or the PCI of the serving cell may be used, when a number of the at least one scrambling identifier is less than the number of TRPs and the number of activated transmission beams with respect to the PUCCH resource used for the repetitive transmission of the first PUCCH, in order to determine one or more scrambling identifiers of one or more TRPs remaining after mapping at least one TRP corresponding to the number of the at least one scrambling identifier with the at least one scrambling identifier.

According to another embodiment of the disclosure, there is provided an operating method of a user equipment (UE) performing data transmission and reception in a wireless communication system. The operating method may include receiving, from a base station, configuration information for repetitively transmitting a physical uplink control channel (PUCCH) to a plurality of transmission reception points (TRPs), receiving, from the base station, an indication with respect to repetitive transmission of a first PUCCH through the plurality of TRPs, based on the configuration information for repetitively transmitting the PUCCH, identifying that the repetitive transmission of the first PUCCH overlaps other uplink transmission, based on at least one of a repetitive transmission unit, a number of times of repetitive transmission, a number of TRPs, a type of uplink control information (UCI), a scheduling time point, and a number of activated transmission beams of each of the repetitive transmission of the first PUCCH and the other uplink transmission, determining which transmission between the repetitive transmission of the first PUCCH and the other uplink transmission is to be performed, and according to a result of the determining, performing the determined transmission between the repetitive transmission of the first PUCCH and the other uplink transmission, to the base station.

According to an embodiment, the configuration information for repetitively transmitting the PUCCH to the plurality of TRPs may include transmission beam information with respect to a resource of the PUCCH, and the operating method may further include receiving, from the base station a medium access control (MAC) control element (CE) including a plurality of pieces of transmission beam information with respect to the resource of the PUCCH; and based on antenna-related information with respect to the resource of the PUCCH and the plurality of pieces of transmission beam information with respect to the resource of the PUCCH included in the MAC CE, determining a plurality of transmission beams for the repetitive transmission of the PUCCH.

According to an embodiment, the configuration information for repetitively transmitting the PUCCH may include at least one hopping identifier and at least one scrambling identifier, and the operating method may further include identifying whether at least one of a number of the at least one hopping identifier and a number of the at least one scrambling identifier is less than the number of TRPs and the number of activated transmission beams with respect to a PUCCH resource used for the repetitive transmission of the first PUCCH, when the number of the at least one hopping identifier is less than the number of TRPs and the number of activated transmission beams with respect to the PUCCH resource used for the repetitive transmission of the first PUCCH, with respect to one or more TRPs remaining after mapping at least one TRP corresponding to the number of the at least one hopping identifier with the at least one hopping identifier, determining one or more hopping identifiers of the remaining one or more TRPs, based on at least one of one hopping identifier from among the at least one hopping identifier and a physical cell identity (PCI) of a serving cell, and when the number of the at least one scrambling identifier is less than the number of TRPs and the number of activated transmission beams with respect to the PUCCH resource used for the repetitive transmission of the first PUCCH, with respect to one or more TRPs remaining after mapping at least one TRP corresponding to the number of the at least one scrambling identifier with the at least one scrambling identifier, determining one or more scrambling identifiers of the remaining one or more TRPs, based on at least one of one scrambling identifier from among the at least one scrambling identifier and the PCI of the serving cell.

## MODE FOR INVENTION

Hereinafter, embodiments of the disclosure will be described in detail with reference to accompanying drawings.

In the following descriptions, well-known functions or configurations in the art, which are not directly associated with the disclosure, are not described. By omitting unnecessary descriptions, the gist of the disclosure may not be blurred and may be relatively more clearly conveyed.

For the same reason, some parts in the accompanying drawings are exaggerated, omitted or schematically illustrated. The size of the respective elements may not fully reflect their actual size. In each drawing, elements that are the same or are in correspondence are rendered the same reference numeral.

Advantages and features of one or more embodiments of the disclosure and methods of accomplishing the same may be understood more readily by reference to the following detailed description of the embodiments of the disclosure and the accompanying drawings. In this regard, the embodiments of the disclosure may have different forms and should not be construed as being limited to the descriptions set forth herein. Rather, these embodiments of the disclosure are provided so that this disclosure will be thorough and complete and will fully convey the concept of the present embodiments of the disclosure to one of ordinary skill in the art, and the disclosure will only be defined by the appended claims. Like numbers refer to like elements throughout the specification.

It may be understood that respective blocks and combinations of the blocks in processing flowcharts will be performed by computer program instructions. The computer program instructions may be loaded on a processor of a universal computer, a special-purpose computer, or other programmable data processing equipment, and thus they generate means for performing functions described in the block(s) of the flowcharts when executed by the processor of the computer or other programmable data processing equipment. The computer program instructions may be stored in a computer-usable or computer-readable memory capable of directing a computer or another programmable data processing apparatus to implement a function in a particular manner, and thus the instructions stored in the computer-usable or computer-readable memory may also be capable of producing manufacturing items containing instruction units for performing the functions described in the flowchart block(s). The computer program instructions may also be loaded into a computer or another programmable data processing apparatus, and thus, instructions for operating the computer or the other programmable data processing apparatus by generating a computer-executed process when a series of operations are performed in the computer or the other programmable data processing apparatus may provide operations for performing the functions described in the flowchart block(s).

Furthermore, each block may represent a module, segment, or a part of code including one or more executable instructions to perform particular logic function(s). It should also be noted that the functions described in the blocks may occur out of order in alternate embodiments of the disclosure. For example, two blocks illustrated successively may actually be executed substantially concurrently, or the blocks may sometimes be performed in a reverse order according to the corresponding function.

Here, the term "unit" in the embodiments means a software component or hardware component such as a field-programmable gate array (FPGA) or an application-specific integrated circuit (ASIC), and performs a specific function. However, the "unit" is not limited to the software or hardware. The "unit" may be configured to be stored in an addressable storage medium, or to operate one or more processors. Thus, according to some embodiments, the term "unit" may refer to components such as software components, object-oriented software components, class components, and task components, and may include processes, functions, attributes, procedures, subroutines, segments of program code, drivers, firmware, micro codes, circuits, data, a database, data structures, tables, arrays, or variables. Functions served by components and "units" may be combined into a less number of components and the "units" or further divided into a more number of components and "units." Moreover, the components and the "units" may be implemented to execute one or more central processing units (CPUs) in a device or security multimedia card. Also, in some embodiments, the "unit" may include at least one processor.

Hereinafter, an operation principle of the disclosure will be described in detail with reference to the accompanying drawings. In describing the disclosure, when the detailed description of the relevant known functions or configurations is determined to unnecessarily obscure the gist of the disclosure, the detailed description thereof may be omitted. The terms as used herein are those defined by taking into account functions in the disclosure, but the terms may vary depending on the intention of users or one of ordinary skill in the art, precedents, or the like. Therefore, the definitions should be made based on the contents throughout the specification.

Hereinafter, the term "base station" refers to an entity for allocating resources to a terminal and may be used interchangeably with at least one of a gNode B, an eNode B, a node B, a base station (BS), a radio access unit, a base station controller, or a node over a network. Examples of a terminal may include a user equipment (UE), a mobile station (MS), a cellular phone, a smartphone, a computer, and a multimedia system capable of performing a communication function. However, the disclosure is not limited to the examples. Hereinafter, a technique for a terminal to receive broadcast information from a base station in a wireless communication system will be described. The disclosure relates to a communication method and system for merging a 5th generation (5G) communication system for supporting a higher data transmission rate than a 4th generation (4G) system with Internet of things (IoT) technologies. The disclosure may be applied to intelligent services (e.g., smart homes, smart buildings, smart cities, smart cars or connected cars, health care, digital education, retail business, and security and safety related services) based on 5G communication technology and IoT related technology.

Hereinbelow, terms indicating broadcast information, terms indicating control information, terms related to communication coverage, terms indicating a change in a state (for example, an event), terms indicating network entities, terms indicating messages, and terms indicating components of an apparatus are exemplified for convenience of description. Accordingly, the disclosure is not limited to terms to be described below, and other terms having equal technical meanings may be used.

Hereinafter, for convenience of description, some of terms and names defined by the 3rd Generation Partnership Project Long Term Evolution (3GPP LTE) standard may be used. However, the disclosure is not limited by the terms and names and may be equally applied to systems conforming to other standards.

A wireless communication system has evolved from a system providing voice-oriented services to a broadband wireless communication system providing high speed high quality packet data services of communication standards such as high speed packet access (HSPA) of 3GPP, LTE or evolved universal terrestrial radio access (E-UTRA), LTE-A, LTE-Pro, high rate packet data (HRPD) of 3GPP2, ultra mobile broadband (UMB), and IEEE 802.16e.

As a representative example of such a broadband wireless communication system, an LTE system adopts Orthogonal Frequency Division Multiplexing (OFDM) for downlink (DL) and Single Carrier Frequency Division Multiple Access (SC-FDMA) for uplink (UL). The UL refers to a radio link for a UE or MS to transmit data or a control signal to an eNode B or BS, and the DL refers to a radio link for a BS to transmit data or a control signal to a UE or MS. The multiple access scheme as described above normally allocates and operates time-frequency resources for carrying data or control information of different users to prevent the time-frequency resources from overlapping with each other, that is, establish orthogonality therebetween, thereby identifying the data or the control information of each user.

As a future communication system after the LTE system, that is, a 5G communication system, has to be able to freely reflect various requirements of a user and a service provider, and thus, services satisfying various requirements need to be supported. The services considered for the 5G communication system include enhanced mobile broadband (eMBB), massive machine type communication (mMTC), ultra reliability low latency communication (hereinafter, URLLC), etc.

According to some embodiments, the eMBB aims to provide a higher data rate than a data rate supported by the LTE, LTE-A, or LTE-Pro system. For example, in the 5G communication system, the eMBB should be able to provide a peak data rate of 20 Gbps in the DL and a peak data rate of 10 Gbps in the UL from the viewpoint of one BS. At the same time, the eMBB should provide an increased user perceived data rate of a UE. In order to satisfy such requirements, improvement of various transmitting/receiving technologies including a further improved multiple-input and multiple-output (MIMO) transmission technology may be demanded. Also, the eMBB may satisfy a data rate required in the 5G communication system by using a frequency bandwidth wider than 20 MHz in a frequency band of 3 to 6 GHz or equal to or greater than 6 GHz instead of 2GHz used by current LTE.

At the same time, the mMTC is being considered to support application services such as IoT in the 5G communication system. The mMTC is required for an access support of a large-scale terminal in a cell, coverage enhancement of a terminal, improved battery time, and cost reduction of a terminal in order to efficiently provide the IoT. The IoT needs to be able to support a large number of terminals (e.g., 1,000,000 terminals/km$^2$) in a cell because it is attached to various sensors and various devices to provide communication functions. Also, due to the nature of the service, the terminal supporting mMTC is likely to be located in a shaded area that is not covered by the cell, such as the basement of a building. Therefore, wider coverage than other services provided by the 5G communication systems may be required. The terminals that support the mMTC should be configured as inexpensive terminals and require very long battery lifetime because it is difficult to frequently replace batteries of the terminals.

Finally, the URLLC that is a cellular-based wireless communication service used for mission-critical purposes needs to provide communication providing ultra-low latency and ultra-high reliability as a service used in remote control for robots or machinery, industrial automation, unmanaged aerial vehicles, remote health care, or emergency alert. For example, a service supporting URLLC has to satisfy air interface latency of less than 0.5 milliseconds and simultaneously has a packet error rate of $10^{-5}$ or less. Accordingly, for the service supporting the URLLC, the 5G communication system is required to provide a transmit time interval (TTI) shorter than those for other services while allocating a broad resource in a frequency band. However, the above-described mMTC, URLLC, and eMBB are merely examples of different service types, and the service types to which the disclosure is applied are not limited thereto.

The services considered in the 5G communication system described above may be converted with each other and provided based on one framework. In other words, for efficient resource management and control, services may be integrated, controlled, and transmitted via one system instead of being independently operated.

Also, hereinafter, one or more embodiments of the disclosure will be described as an example of an LTE, LTE-A, LTE Pro, or new radio (NR) system, but the one or more embodiments of the disclosure may also be applied to other communication systems having a similar technical background or channel form. Also, it will be understood by one of ordinary skill in the art that embodiments of the disclosure may be applied to other communication systems through some modifications without departing from the scope of the disclosure.

The disclosure relates to a method and an apparatus for reporting channel state information for increasing the power saving efficiency of a terminal in a wireless communication system.

According to the disclosure, when a terminal operates in a power saving mode in a wireless communication system, a method of reporting channel state information may be optimized according to the power saving mode, and thus, the effect of saving power may further be increased.

A frame structure of a 5G system will now be described in more detail with reference to the drawings.

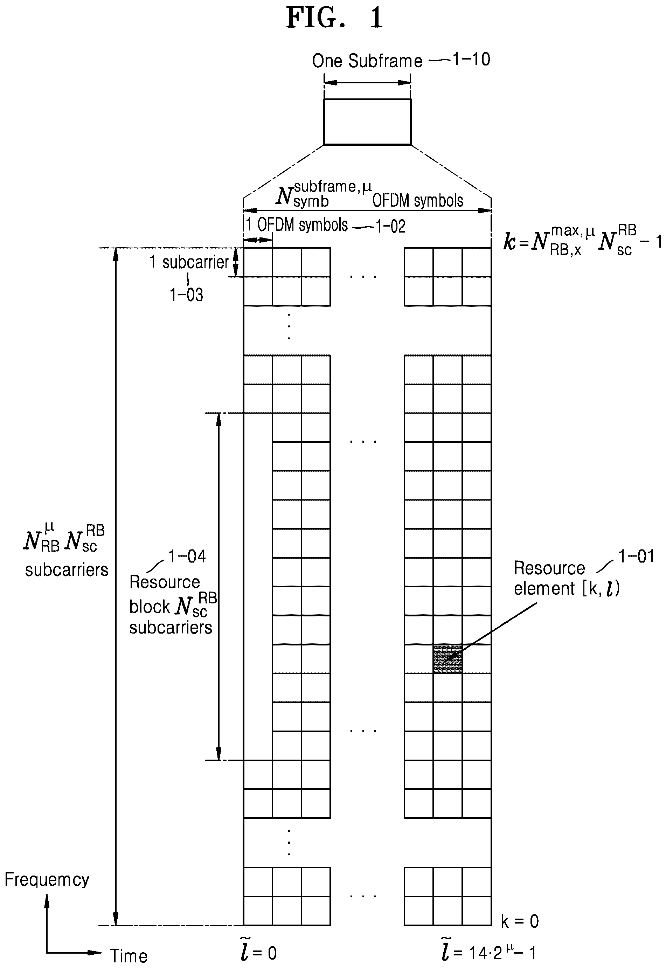

FIG. 1 is a diagram illustrating a basic structure of a time-frequency domain in a wireless communication system according to an embodiment of the disclosure.

Referring to FIG. 1, the horizontal axis represents a time domain and the vertical axis represents a frequency domain in FIG. 1. A basic unit of resources in the time-frequency domain is a resource element (RE) 1-01 and may be defined as one OFDM symbol 1-02 on the time domain and one subcarrier 1-03 on the frequency domain. In the frequency domain, $N_{SC}^{RB}$ (e.g., 12) consecutive REs may constitute one resource block (RB) 1-04. According to an embodiment, a plurality of OFDM symbols may form one subframe 1-10.

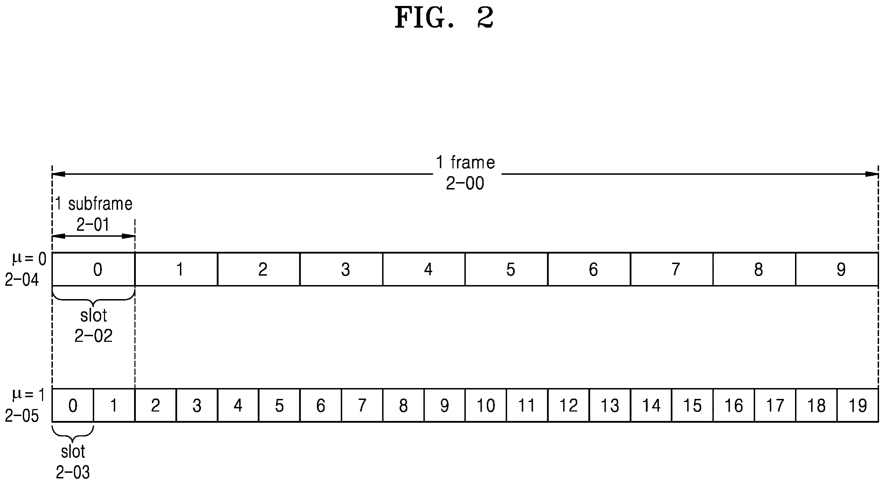

FIG. 2 is a diagram for describing structures of a frame, a subframe, and a slot in a next-generation wireless communication system according to an embodiment of the disclosure.

Referring to FIG. 2, an example of a frame 2-00, a subframe 2-01, and a slot 2-02 is illustrated. According to an embodiment, one frame 2-00 may be defined as 10 ms. One subframe 2-01 may be defined as 1 ms. Therefore, one frame 2-00 may include a total of 10 subframes 2-01. One slot 2-02 or 2-03 may be defined as 14 OFDM symbols (that is, the number of symbols per slot ($N_{symb}^{slot}$)=14). One subframe 2-01 may include one or more slots 2-02 or 2-03, and the number of slots 2-02 or 2-03 per subframe 2-01 may vary according to a subcarrier spacing configuration value $\mu$ (2-04 and 2-05). In the example of FIG. 2, the subcarrier spacing configuration values are 0 and 1, i.e., $\mu=0$ (2-04) and $\mu=1$ (2-05). When $\mu=0$ (2-04), one subframe 2-01 may include one slot 2-02, and when $\mu=1$ (2-05), one subframe 2-01 may include two slots 2-03.

That is, depending on the subcarrier spacing configuration value $\mu$, the number of slots per subframe ($N_{slot}^{subframe,\mu}$) may vary, and the number of slots per frame ($N_{slot}^{frame,\mu}$) may vary accordingly. $N_{slot}^{subframe,\mu}$ and $N_{slot}^{frame,\mu}$ according to each subcarrier spacing configuration $\mu$ may be defined as in [Table 1] below.

[Table 1]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |

(continued)

| $\mu$ | $N_{symb}^{slot}$ | $N_{slot}^{frame,\mu}$ | $N_{slot}^{subframe,\mu}$ |
|---|---|---|---|
| 4 | 14 | 160 | 16 |
| 5 | 14 | 320 | 32 |

In an NR system, one component carrier (CC) or serving cell may include maximum 250 or more RBs. Accordingly, when a UE always receives an entire serving cell bandwidth as in the LTE system, power consumption of the UE may be severe, and to solve this, a base station may configure one or more bandwidth parts (BWPs) to the UE to support the UE to change a reception area in a cell. In the NR system, the base station may configure an "initial BWP" that is a bandwidth of a control resource set (CORESET) #0 (or common search space (CSS)) to the UE via a master information block (MIB). Thereafter, the base station may configure a first BWP of the UE via radio resource control (RRC) signaling and may notify at least one piece of BWP configuration information which may be subsequently indicated through downlink control information (DCI). Next, the base station may notify a BWP identifier (ID) via the DCI to indicate to the UE which band to use. When the UE does not receive the DCI from a currently assigned BWP for a specific period of time, the UE may return to a "default BWP" and try to receive the DCI.

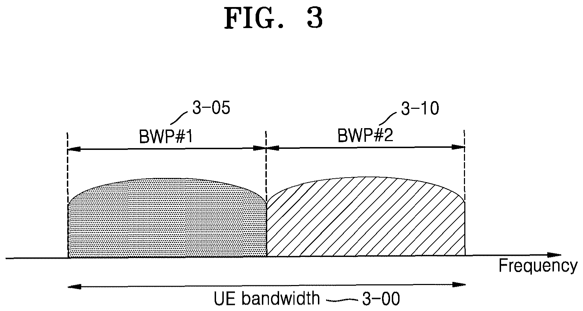

FIG. 3 illustrates an example of a configuration of a BWP in a wireless communication system according to an embodiment of the disclosure.

Referring to FIG. 3, two BWPs, i.e., a BWP#1 3-05 and a BWP#2 3-10, may be configured in a UE bandwidth 3-00. The base station may configure one or more BWPs to the UE and may configure the following information as in [Table 2] for each BWP.

[Table 2]

```
BWP ::=                    SEQUENCE {

    bwp-Id                 BWP-Id,



    locationAndBandwidth   INTEGER (1..65536),



    subcarrierSpacing      ENUMERATED {n0, n1, n2, n3, n4, n5},



    cyclicPrefix           ENUMERATED { extended }



    }
```

However, the disclosure is not limited thereto, and various parameters related to a BWP in addition to the information of [Table 2] may be configured for the UE. The base station may transmit the information to the UE through higher layer signaling, for example, RRC signaling. At least one BWP from among the configured one or more BWPs may be activated. Whether to activate the configured BWP may be transmitted from the base station to the UE semi-statically via RRC signaling or dynamically via a medium access control (MAC) control element (CE) or DCI.

According to an embodiment of the disclosure, the UE before RRC connection may be configured with an initial BWP for initial connection through a master information block (MIB) from the base station. In more detail, the UE may receive configuration information for a search space and a control region (e.g., a control resource set (CORESET)) where a physical downlink control channel (PDCCH) may be transmitted in order to receive system information (e.g., remaining system information (RMSI) or system information block 1 (SIB1)) required for initial access through the MIB in an initial access stage. An ID of the control region and the search space configured through the MIB may be considered as 0.

The base station may notify the UE of configuration information such as frequency allocation information, time allocation information, and a numerology for a CORESET#0, through the MIB. Also, the base station may notify UE of configuration information for a monitoring period and an occasion for the CORESET#0, that is, configuration information for a search space #0, through the MIB. The UE may consider a frequency domain configured as the CORESET#0 obtained from the MIB as the initial BWP for initial access. In this case, an ID of the initial BWP may be considered as 0.

The configuration for the BWP supported in the next-generation wireless communication system (the 5G or the NR system) described above may be used for various purposes.

According to an embodiment, when a BWP supported by the UE is less than a system bandwidth, a bandwidth supported by the UE may be supported through configuration with respect to the BWP. For example, by configuring a frequency location (configuration information 2) of a BWP in Table 2 to the UE, the UE may transmit/receive data at a specific frequency location in the system bandwidth.

According to another embodiment, the base station may configure a plurality of BWPs to the UE for a purpose of supporting different numerologies. For example, to support data transmission/reception using both subcarrier spacing of 15 kHz and subcarrier spacing of 30 kHz for an arbitrary UE, two BWPs may be configured to respectively use the subcarrier spacings of 15 kHz and 30 kHz. Different BWPs may be frequency-division-multiplexed (FDM). When data is to be transmitted and received at specific subcarrier spacing, the BWP configured with the corresponding subcarrier spacing may be activated.

According to another embodiment, the base station may configure BWPs having different sizes of bandwidths to the UE for a purpose of reducing power consumption of the UE. For example, when the UE supports a very large bandwidth, for example, a bandwidth of 100 MHz, and always transmits/receives data via the corresponding bandwidth, very large power consumption may occur. In particular, it is very inefficient in terms of power consumption for the UE to monitor an unnecessary DL control channel for a large bandwidth of 100 MHz in a situation where there is no traffic. Accordingly, the base station may configure a BWP of a relatively small bandwidth, for example, a BWP of 20 MHz, to the UE for a purpose of reducing the power consumption of the UE. In a situation where there is no traffic, the UE may perform a monitoring operation in a BWP of 20 MHz, and when data is generated, the UE may transmit/receive the data by using a BWP of 100 MHz according to an instruction of the base station.

In the above method of configuring a BWP, UEs before RRC connection may receive configuration information regarding an initial BWP through an MIB in an initial access stage. More specifically, the UE may be configured with a CORESET for a DL control channel through which DCI for scheduling a system information block (SIB) may be transmitted from an MIB of a physical broadcast channel (PBCH). The bandwidth of the CORESET configured via the MIB may be regarded as the initial BWP, and the UE may receive the PDSCH, through which the SIB is transmitted, via the configured initial BWP. In addition to the purpose of receiving the SIB, the initial BWP may be utilized for other system information (OSI), paging, and random access.

Hereinafter, a synchronization signal (SS) / PBCH block of the next-generation wireless communication system (the 5G or NR system) is described.

The SS/PBCH block may denote a physical layer channel block composed of a primary SS (PSS), a secondary SS (SSS), and a PBCH. In more detail, the SS/PBCH block may be defined as below.

- PSS: the PSS is a signal that is a reference for downlink time/frequency synchronization and may provide partial cell ID information.
- SSS: the SSS is a reference for downlink time/frequency synchronization and may provide the rest cell ID information, which is not provided by the PSS. Additionally, the SSS may perform a function of a reference signal for demodulation of the PBCH.
- PBCH: the PBCH may provide essential system information for transmission and reception of a data channel and a control channel of a UE. The essential system information may include search space-related control information indicating radio resource mapping information of a control channel, scheduling control information with respect to an additional data channel for transmitting system information, etc.
- SS/PBCH block: the SS/PBCH block may be composed of a combination of the PSS, the SSS, and the PBCH. One or a plurality of SS/PBCH blocks may be transmitted within a time period of 5 ms, and each transmitted SS/PBCH block may be identified by an index.

The UE may detect the PSS and the SSS at an initial access stage and may decode the PBCH. The UE may obtain an MIB from the PBCH and may be configured with a CORESET#0 through the MIB. The UE may assume that a selected SS/PBCH block and a demodulation reference signal (DMRS) transmitted from the CORESET#0 are in a quasi co-location (QCL) relationship and may perform monitoring on the CORESET#0. The UE may receive system information based on the DCI transmitted from the CORESET#0. The UE may obtain, from the received system information, random access channel (RACH)-related configuration information required for initial connection. The UE may transmit a physical RACH (PRACH) to the base station by taking into account a selected SS/PBCH index, and the base station receiving the PRACH may obtain information about an index of the SS/PBCH block selected by the UE. The base station may identify which block the UE has selected from among SS/PBCH blocks and may identify that the UE monitors the CORESET#0 corresponding to (or associated with) the selected SS/PBCH block.

Hereinafter, the DCI in the next-generation wireless communication system (the 5G or NR system) is described in detail.

In the next-generation wireless communication system (the 5G or NR system), scheduling information with respect to uplink data (or a physical uplink shared channel (PUSCH)) or downlink data (or a physical downlink shared channel (PDSCH)) may be transmitted from the base station to the UE through the DCI. The UE may monitor a fallback DCI format and a non-fallback DCI format with respect to the PUSCH or the PDSCH. The fallback DCI format may include a fixed field predefined between the base station and the UE, and the non-fallback DCI format may include a configurable field.

The DCI may be transmitted via a PDCCH through a channel coding and modulation process. A cyclic redundancy check (CRC) may be attached to a DCI message payload. The CRC is scrambled by a radio network temporary identifier (RNTI) corresponding to the identity of the UE. Different RNTIs may be used according to the purpose of the DCI message, for example, UE-specific data transmission, a power control command, or a random access response, in order to scramble the CRC attached to the DCI message payload. In other words, the RNTI may not be explicitly transmitted but may be transmitted by being included in a CRC calculation process. When the UE receives the DCI message transmitted on the PDCCH, the UE may check the CRC by using the assigned RNTI. Based on a result of checking the CRC, the UE may see that the message has been transmitted to the UE.

For example, DCI that schedules a PDSCH for system information (SI) may be scrambled by an SI-RNTI. DCI that schedules a PDSCH for a random access response (RAR) message may be scrambled by an RA-RNTI. DCI that schedules a PDSCH for a paging message may be scrambled by a P-RNTI. DCI that notifies a slot format indicator (SFI) may be scrambled by an SFI-RNTI. DCI that notifies transmit power control (TPC) may be scrambled by a TPC-RNTI. DCI that schedules a UE-specific PDSCH or PUSCH may be scrambled by a cell RNTI (C-RNTI).

DCI format 0_0 may be used as a fallback DCI that schedules a PUSCH. In this case, a CRC may be scrambled by a C-RNTI. According to an embodiment, the DCI format 0_0 with the CRC scrambled by a C-RNTI may include information as in [Table 3] below.

[Table 3]

- Identifier for DCI formats (DCI format ID) - [1] bit

- Frequency domain resource assignment - $\left\lceil \log_2 (N_{RB}^{UL, BWP} (N_{RB}^{UL, BWP} + 1) / 2) \right\rceil$ bits
- Time domain resource assignment - X bits
- Frequency hopping flag - 1 bit.
- Modulation and coding scheme - 5 bits
- New data indicator - 1 bit
- Redundancy version - 2 bits
- HARQ process number - 4 bits
- TPC command for scheduled PUSCH - [2] bits
- UL/SUL indicator - 0 or 1 bit

DCI format 0_1 may be used as a non-fallback DCI that schedules a PUSCH. In this case, a CRC may be scrambled by a C-RNTI. According to an embodiment, the DCI format 0_1 with the CRC scrambled by a C-RNTI may include information as in [Table 4] below.

[Table 4]

- Carrier indicator - 0 or 3 bits
- UL/SUL indicator - 0 or 1 bit
- Identifier for DCI formats - [1] bits
- Bandwidth part indicator - 0, 1 or 2 bits
- Frequency domain resource assignment

(continued)

- For resource allocation type 0, $\lceil N_{\mathrm{RB}}^{\mathrm{UL,BWP}} / P \rceil$ bits

- For resource allocation type 1, $\lceil \log_2(N_{\mathrm{RB}}^{\mathrm{UL,BWP}}(N_{\mathrm{RB}}^{\mathrm{UL,BWP}}+1)/2) \rceil$ bits

- Time domain resource assignment -1, 2, 3, or 4 bits
- VRB-to-PRB mapping - 0 or 1 bit, only for resource allocation type 1.
    - 0 bit if only resource allocation type 0 is configured;
    - 1 bit otherwise.
- Frequency hopping flag - 0 or 1 bit, only for resource allocation type 1.
    - 0 bit if only resource allocation type 0 is configured;
    - 1 bit otherwise.
- Modulation and coding scheme - 5 bits
- New data indicator - 1 bit
- Redundancy version - 2 bits
- HARQ process number - 4 bits
- 1st downlink assignment index - 1 or 2 bits
    - 1 bit for semi-static HARQ-ACK codebook;
    - 2 bits for dynamic HARQ-ACK codebook with single HARQ-ACK codebook.
- 2nd downlink assignment index - 0 or 2 bits
    - 2 bits for dynamic HARQ-ACK codebook with two HARQ-ACK sub-codebooks;
    - 0 bit otherwise.
- TPC command for scheduled PUSCH - 2 bits

- SRS resource indicator - $\left\lceil \log_2\left(\sum_{k=1}^{L_{\max}}\binom{N_{\mathrm{SRS}}}{k}\right)\right\rceil$ or $\lceil \log_2(N_{\mathrm{SRS}}) \rceil$ bits

$$\left\lceil \log_2\left(\sum_{k=1}^{L_{\max}}\binom{N_{\mathrm{SRS}}}{k}\right)\right\rceil$$

  - bits for non-codebook based PUSCH transmission;

  - $\lceil \log_2(N_{\mathrm{SRS}}) \rceil$ bits for codebook based PUSCH transmission.
- Precoding information and number of layers -up to 6 bits
- Antenna ports - up to 5 bits
- SRS request - 2 bits
- CSI request - 0, 1, 2, 3, 4, 5, or 6 bits
- CBG transmission information - 0, 2, 4, 6, or 8 bits
- PTRS-DMRS association - 0 or 2 bits.
- beta_offset indicator - 0 or 2 bits
- DMRS sequence initialization - 0 or 1 bit

DCI format 1_0 may be used as a fallback DCI that schedules a PDSCH. In this case, a CRC may be scrambled by a C-RNTI. According to an embodiment, the DCI format 1_0 with the CRC scrambled by a C-RNTI may include information as in [Table 5] below.

[Table 5]

- Identifier for DCI formats - [1] bit

- Frequency domain resource assignment - $\lceil \log_2(N_{\mathrm{RB}}^{\mathrm{DL,BWP}}(N_{\mathrm{RB}}^{\mathrm{DL,BWP}}+1)/2) \rceil$ bits
- Time domain resource assignment - X bits

(continued)

> - VRB-to-PRB mapping - 1 bit.
> - Modulation and coding scheme - 5 bits
> - New data indicator - 1 bit
> - Redundancy version - 2 bits
> - HARQ process number - 4 bits
> - Downlink assignment index - 2 bits
> - TPC command for scheduled PUCCH - [2] bits
> - PUCCH resource indicator - 3 bits
> - PDSCH-to-HARQ feedback timing indicator - [3] bits

DCI format 1_1 may be used as a non-fallback DCI that schedules a PDSCH. In this case, a CRC may be scrambled by a C-RNTI. According to an embodiment, the DCI format 1_1 with the CRC scrambled by a C-RNTI may include information as in [Table 6] below.

[Table 6]

> - Carrier indicator - 0 or 3 bits
> - Identifier for DCI formats - [1] bits
> - Bandwidth part indicator - 0, 1 or 2 bits
> - Frequency domain resource assignment
>
> $$\left\lceil N_{\mathrm{RB}}^{\mathrm{DL,BWP}} / P \right\rceil \text{ bits}$$
> • For resource allocation type 0
> $$\left\lceil \log_2 (N_{\mathrm{RB}}^{\mathrm{DL,BWP}} (N_{\mathrm{RB}}^{\mathrm{DL,BWP}} + 1)/2) \right\rceil \text{ bits}$$
> • For resource allocation type 1,
>
> - Time domain resource assignment -1, 2, 3, or 4 bits
> - VRB-to-PRB mapping - 0 or 1 bit, only for resource allocation type 1.
> • 0 bit if only resource allocation type 0 is configured;
> • 1 bit otherwise.
>
> - PRB bundling size indicator - 0 or 1 bit
> - Rate matching indicator - 0, 1, or 2 bits
> - ZP CSI-RS trigger - 0, 1, or 2 bits
> For transport block 1:
> - Modulation and coding scheme - 5 bits
> - New data indicator - 1 bit
> - Redundancy version - 2 bits
> For transport block 2:
> - Modulation and coding scheme - 5 bits
> - New data indicator - 1 bit
> - Redundancy version - 2 bits
> - HARQ process number - 4 bits
> - Downlink assignment index - 0 or 2 or 4 bits
> - TPC command for scheduled PUCCH - 2 bits
> - PUCCH resource indicator - 3 bits
> - PDSCH-to-HARQ_feedback timing indicator - 3 bits
> - Antenna ports - 4, 5 or 6 bits
> - Transmission configuration indication - 0 or 3 bits
> - SRS request - 2 bits
> - CBG transmission information - 0, 2, 4, 6, or 8 bits
> - CBG flushing out information - 0 or 1 bit
> - DMRS sequence initialization - 1 bit

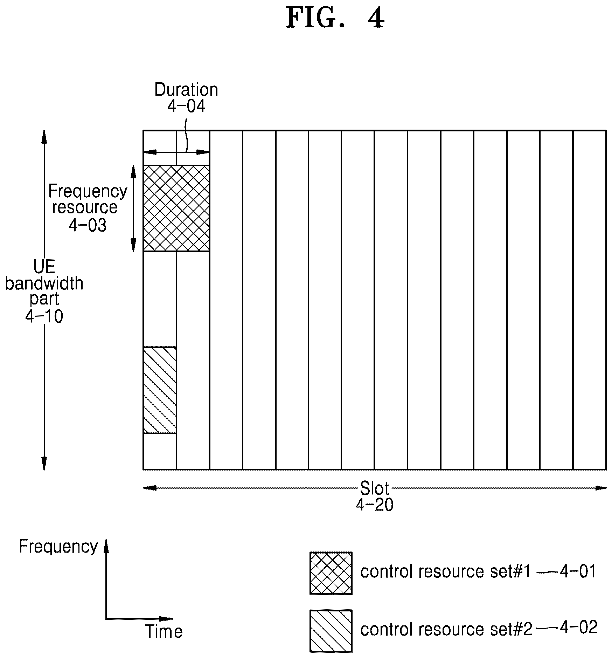

FIG. 4 is a diagram for describing a configuration of a CORESET of a downlink control channel in a next-generation wireless communication system according to an embodiment of the disclosure. In detail, FIG. 4 is a diagram illustrating an embodiment of a CORESET in which a downlink control channel is transmitted in a 5G wireless communication system, according to an embodiment of the disclosure.

Referring to FIG. 4, a UE BWP 4-10 may be configured on a frequency domain and two CORESETs (CORESET#1 4-01 and CORESET#2 4-02) may be configured in one slot 4-20 on a time domain. The CORESETs 4-01 and 4-02 may be configured to a specific frequency resource 4-03 within the entire UE bandwidth part 4-10 on the frequency domain. The CORESETs 4-01 and 4-02 may be configured with one or more OFDM symbols on the time domain and may be defined by a CORESET duration 4-04. Referring to FIG. 4, a duration of the CORESET#1 4-01 may be configured as a CORESET of two symbols, and a duration of the CORESET#2 4-02 may be configured as a CORESET of one symbol.

The CORESET in the next-generation wireless communication system (the 5G or NR system) described above may be configured via higher layer signaling (e.g., system information, an MIB, and RRC signaling) between the base station and the UE. Configuring the CORESET to the UE may mean providing information such as a CORESET identifier, a frequency location of the CORESET, a symbol duration of the CORESET, and the like. For example, the configuration of the CORESET may include information as in [Table 7] below.

[Table 7]

```
ControlResourceSet ::=                   SEQUENCE {
    -- Corresponds to L1 parameter 'CORESET-ID'


    controlResourceSetId                 ControlResourceSetId,
    (CORESET identifier)
    frequencyDomainResources        BIT STRING (SIZE (45)),
    (frequency domain resource assignment information)
     duration                            INTEGER (1..maxCoReSetDuration),
    (time domain resource assignment information)
     cce-REG-MappingType                 CHOICE {
    (CCE-to-REG mapping scheme)
```

```
        interleaved                        SEQUENCE {

           reg-BundleSize                  ENUMERATED {n2, n3, n6},
        (REG bundle size)


           precoderGranularity             ENUMERATED {sameAsREG-bundle,
        allContiguousRBs},


           interleaverSize                 ENUMERATED {n2, n3, n6}
           (interleaver size)


        shiftIndex
        INTEGER(0..maxNrofPhysicalResourceBlocks-1)
        OPTIONAL
        (interleaver shift))
     },
        nonInterleaved                     NULL
     },
     tci-StatesPDCCH                       SEQUENCE(SIZE (1..maxNrofTCI-
        StatesPDCCH)) OF TCI-StateId                OPTIONAL,
     (QCL configuration information)
     tci-PresentInDCI                      ENUMERATED {enabled}
                                 OPTIONAL, -- Need S

  }
```

In [Table 7], tci-StatesPDCCH (hereinafter, referred to as a "TCI state") configuration information may include index information of one or more SS/PBCH blocks which are in a QCL relationship with a DMRS transmitted from a corresponding CORESET or index information of a channel state information (CSI)-reference signal (RS). Also, the TCI state configuration information may include information about the characteristics of the QCL relationship. For example, the TCI state configuration may include information as in [Table 8] below.

[Table 8]

```
TCI-State ::=           SEQUENCE {
   tci-StateId          TCI-StateId,
   qcl-Type1            QCL-Info,
   qcl-Type2            QCL-Info                       OPTIONAL,
   ...
}
```

```
QCL-Info ::=              SEQUENCE {
    cell   (cell index)      ServCellIndex                    OPTIONAL,
    bwp-Id  (BWP index)      BWP-Id                           OPTIONAL,


    referenceSignal          CHOICE {
      csi-rs                 NZP-CSI-RS-ResourceId,
      ssb                    SSB-Index
    },
    qcl-Type                 ENUMERATED {typeA, typeB, typeC, typeD},
```

Referring to the TCI state configuration, along with an index of an RS in the QCL relationship, that is, the index of the SS/PBCH block or the index of the CSI-RS, a cell index and/or a BWP index of the RS and a QCL type may be configured. The QCL type indicates the channel characteristics assumed to be shared between the reference RS and a CORESET DMRS, and examples of available QCL types are as follows.

- QCL typeA: Doppler shift, Doppler spread, average delay, delay spread.
- QCL typeB: Doppler shift, Doppler spread.
- QCL typeC: Doppler shift, average delay.
- QCL typeD: Spatial Rx parameter.

The TCI state may be configured with respect to other target RSs, for example, a PDSCH DMRS and the CSI-RS, substantially in the same manner as the CORESET DMRS. However, detailed descriptions thereof are omitted to avoid blurring the point of the description.

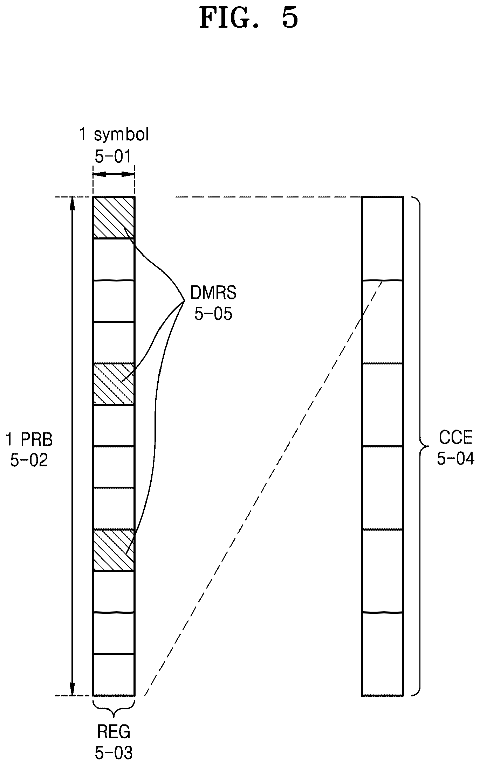

FIG. 5 is a diagram for describing a structure of a downlink control channel in a next-generation wireless communication system according to an embodiment of the disclosure. In detail, FIG. 5 is a diagram illustrating an example of a basic unit of time and frequency resources constituting a downlink control channel that is usable in the 5G system, according to an embodiment of the disclosure.

Referring to FIG. 5, the basic unit of the time and frequency resources constituting the control channel may be defined as a resource element group (REG) 5-03. The REG 5-03 may be defined by one OFDM symbol 5-01 on a time domain and one physical resource block (PRB) 5-02 on a frequency domain, that is, 12 subcarriers. The base station may configure a downlink control channel assignment unit by concatenating the REG 5-03.

As illustrated in FIG. 5, when the basic unit to which the downlink control channel is assigned in the 5G system is a control channel element (CCE) 5-04, one CCE 5-04 may include a plurality of REGs 5-03. For example, the REG 5-03 illustrated in FIG. 5 may include 12 REs, and when one CCE 5-04 includes 6 REGs 5-03, one CCE 5-04 may include 72 REs. When the downlink control resource set is configured, the downlink CORESET may include a plurality of CCEs 5-04. A specific downlink control channel may be transmitted by being mapped to one or more CCEs 5-04 according to an aggregation level (AL) in the CORESET. The CCEs 5-04 in the CORESET may be identified by numbers. In this case, the numbers may be assigned to the CCEs 5-04 according to a logical mapping scheme.

The basic unit of the downlink control channel illustrated in FIG. 5, that is, the REG 5-03, may include both of REs to which the DCI is mapped and regions to which a DMRS 5-05, which is a reference signal for decoding the same, is mapped. As illustrated in FIG. 5, three DMRSs 5-05 may be transmitted in one REG 5-03. The number of CCEs required to transmit the PDCCH may be 1, 2, 4, 8, or 16 according to the AL, and a different number of CCEs may be used to implement link adaptation of the downlink control channel. For example, when AL=L, one downlink control channel may be transmitted through L CCEs.

A UE should detect a signal without knowing information on the downlink control channel, and a search space indicating a set of CCEs for blind decoding may be defined. A search space is a set of downlink control channel candidates including CCEs to be decoded by the UE on the assigned AL. There are various ALs in which 1, 2, 4, 8, or 16 CCEs are included in a group, and thus, the UE may have a plurality of search spaces. A search space set may be defined as a set of search spaces at all set ALs.

The search space may be classified into a common search space and a UE-specific search space. According to an embodiment of the disclosure, a certain group of UEs or all UEs may investigate a common search space of a PDCCH in order to receive cell-common control information, such as dynamic scheduling or paging messages with respect to system information.

For example, the UE may investigate the common search space of the PDCCH to receive PDSCH scheduling assignment information for transmitting an SIB including cell operator information, etc. The common search space may be defined as a set of previously appointed CCEs because a certain group of UEs or all the UEs have to receive the PDCCH. The UE may receive a UE-specific PDSCH or PUSCH scheduling allocation information by detecting the UE-specific search space of the PDCCH. The UE-specific search space is a function of the UE identity and various system parameters, and may be defined in a UE-specific manner.

In a 5G system, parameters for a search space of a PDCCH may be configured by a base station to a UE through higher layer signaling (e.g., SIB, MIB, or RRC signaling). For example, the base station may set, to the UE, the number of PDCCH candidates at each AL L, a monitoring periodicity for the search space, monitoring occasion of symbol units in the slot for the search space, a search space type (common search space or UE-specific search space), a combination of RNTI and DCI format to be monitored in the search space, a control resource set index for monitoring the search space, etc. For example, the configuration described above may include information as in [Table 9] below.

[Table 9]

```
SearchSpace ::=                            SEQUENCE {
   -- Identity of the search space. SearchSpaceId = 0 identifies the
     SearchSpace configured via PBCH (MIB) or ServingCellConfigCommon.
   searchSpaceId                           SearchSpaceId,

   controlResourceSetId                    ControlResourceSetId,

   monitoringSlotPeriodicityAndOffset      CHOICE {

     sl1                                   NULL,
     sl2                                   INTEGER (0..1),
     sl4                                   INTEGER (0..3),
     sl5                               INTEGER (0..4),
     sl8                                   INTEGER (0..7),
     sl10                                  INTEGER (0..9),
     sl16                                  INTEGER (0..15),
     sl20                                  INTEGER (0..19)
   }
   duration                               INTEGER (2..2559)
   monitoringSymbolsWithinSlot                 BIT STRING (SIZE (14))

   nrofCandidates                         SEQUENCE {

     aggregationLevel1                    ENUMERATED {n0, n1, n2, n3, n4,
     n5, n6, n8},
     aggregationLevel2                    ENUMERATED {n0, n1, n2, n3, n4,
     n5, n6, n8},
     aggregationLevel4                    ENUMERATED {n0, n1, n2, n3, n4,
     n5, n6, n8},
     aggregationLevel8                    ENUMERATED {n0, n1, n2, n3, n4,
     n5, n6, n8},
     aggregationLevel16                      ENUMERATED {n0, n1, n2, n3,
     n4, n5, n6, n8}
   },

   searchSpaceType                        CHOICE {

     -- Configures this search space as common search space (CSS) and
     DCI formats to monitor.
     common                               SEQUENCE {

       }
     ue-Specific                          SEQUENCE {

       -- Indicates whether the UE monitors in this USS for DCI
       formats 0-0 and 1-0 or for formats 0-1 and 1-1.
       formats                            ENUMERATED {formats0-0-And-
     1-0, formats0-1-And-1-1},
       ...
       }
```

The base station may configure one or more search space sets to the UE based on the configuration information. According to an embodiment of the disclosure, the base station may configure search space set 1 and search space set 2 to the UE, may configure DCI format A scrambled by an X-RNTI in the search space set 1 to be monitored in the common search space, and may configure DCI format B scrambled by a Y-RNTI in the search space set 2 to be monitored in the UE-specific search space.

According to the configuration information, one or more search space sets may exist in the common search space or the UE-specific search space. For example, search space set #1 and search space set #2 may be configured as the common search space, and search space set #3 and search space set #4 may be configured as the UE-specific search space.

The combination of the following DCI format and RNTI may be monitored in the common search space. However, the disclosure is not limited to the following examples.

- DCI format 0_0/1_0 with CRC scrambled by C-RNTI, CS-RNTI, SP-CSI-RNTI, RA-RNTI, TC-RNTI, P-RNTI, SI-RNTI
- DCI format 2_0 with CRC scrambled by SFI-RNTI
- DCI format 2_1 with CRC scrambled by INT-RNTI
- DCI format 2_2 with CRC scrambled by TPC-PUSCH-RNTI, TPC-PUCCH-RNTI
- DCI format 2_3 with CRC scrambled by TPC-SRS-RNTI

The combination of the following DCI format and RNTI may be monitored in the UE-specific search space. However, the disclosure is not limited to the following examples.

- DCI format 0_0/1_0 with CRC scrambled by C-RNTI, CS-RNTI, TC-RNTI
- DCI format 1_0/1_1 with CRC scrambled by C-RNTI, CS-RNTI, TC-RNTI

The RNTIs specified above may follow the following definitions and usages.

C-RNTI (Cell RNTI): For UE-specific PDSCH scheduling
TC-RNTI (Temporary Cell RNTI): For UE-specific PDSCH scheduling
CS-RNTI (Configured Scheduling RNTI): For semi-statically configured UE-specific PDSCH scheduling
RA-RNTI (Random Access RNTI): For PDSCH scheduling in random access phase
P-RNTI (Paging RNTI): For PDSCH scheduling for paging transmission
SI-RNTI (System Information RNTI): For PDSCH scheduling for transmitting system information
INT-RNTI (Interruption RNTI): For notifying whether PDSCH is punctured
TPC-PUSCH-RNTI (Transmit Power Control for PUSCH RNTI): For indicating power control command for PUSCH
TPC-PUCCH-RNTI (Transmit Power Control for PUCCH RNTI): For indicating power control command for PUCCH
TPC-SRS-RNTI (Transmit Power Control for SRS RNTI): For indicating power control command for SRS

According to an embodiment, the DCI formats described above may be defined as in [Table 10] below.

[Table 10]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

According to an embodiment of the disclosure, in the 5G system, a plurality of search space sets may be configured by different parameters (for example, the parameters of [Table 9]). Thus, a set of the search space sets monitored by the UE may be different at every time point. For example, when a search space set#1 is configured as an X-slot cycle, a search space set#2 is configured as a Y-slot cycle, and X and Y are different from each other, the UE may monitor both of the search space set#1 and the search space set#2 in a predetermined slot and may monitor either one of the search space set#1 and the search space set#2 in a predetermined slot.

When the plurality of search space sets are configured to the UE, the following conditions may be considered to determine a search space set that has to be monitored by the UE.

[Condition 1: To limit the maximum number of PDCCH candidate groups]

The number of PDCCH candidate groups which may be monitored per slot may not exceed $M^\mu$ $M^\mu$ may be defined as the maximum number of PDCCH candidate groups per slot in a cell configured as a subcarrier spacing of $15 \cdot 2^\mu$ kHz and may be defined as in [Table 11] below.

[Table 11]

| $\mu$ | Maximum number of PDCCH candidates per slot and per serving cell ($M^\mu$) |
|---|---|
| 0 | 44 |
| 1 | 36 |
| 2 | 22 |
| 3 | 20 |

[Condition 2: To limit the maximum number of CCEs]

The number of CCEs included in the entire search space per slot (here, the entire search space may denote the entire CCE set corresponding to a union area of the plurality of search space sets) may not exceed $C^\mu$. $C^\mu$ may be defined as the maximum number of CCEs per slot in a cell configured as a subcarrier spacing of $15 \cdot 2^\mu$ kHz and may be defined as in [Table 12] below.

[Table 12]

| $\mu$ | Maximum number of CCEs per slot and per serving cell ($C^\mu$) |
|---|---|
| 0 | 56 |
| 1 | 56 |
| 2 | 48 |
| 3 | 32 |

For convenience of explanation, a situation satisfying both of Conditions 1 and 2 at a predetermined time point may be defined, for example, as "Condition A." Accordingly, not satisfying Condition A may denote not satisfying at least one of Condition 1 and Condition 2 described above.

There may be a case in which Condition A is not satisfied at a predetermined time point, according to a configuration of the search space sets of the base station. When Condition A is not satisfied at a predetermined time point, the UE may select and monitor only some of the search space sets at the corresponding time point, the some search space sets being configured to satisfy Condition A, and the base station may transmit a PDCCH to the selected search space sets.

According to an embodiment of the disclosure, as a method of selecting one or more search spaces from among all of the configured search space sets, the following method may be used.

[Method 1]

When Condition A with respect to the PDCCH is not satisfied at a predetermined time point (slot), a UE (or a base station) may select a search space set in which a search space type is configured as a common search space preferentially to a search space set configured as a UE-specific search space, from among search space sets based on the corresponding time point.

When all the search space sets configured as the common search space are selected (that is, when Condition A is satisfied also after all search spaces configured as the common search space are selected), the UE (or the base station) may select the search space sets configured as the UE-specific search space. Here, when the search space sets configured as the UE-specific search space are in a plural number, a search space set having a lower search space set index may have a higher priority order. By considering the priority order, the UE or the base station may select the UE-specific search space sets within a range in which Condition A is satisfied.

Hereinafter, methods of allocating time and frequency resources for data transmission in the NR system are described.

In the NR system, the following detailed frequency domain resource allocation (FD-RA) methods may be provided in addition to a frequency domain resource candidate allocation via BWP indication.

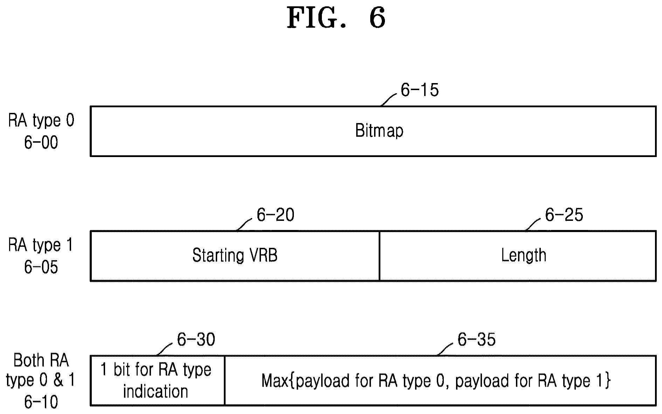

FIG. 6 is a diagram illustrating an example of allocation of PDSCH frequency domain resources in a wireless communication system, according to an embodiment of the disclosure.

In detail, FIG. 6 illustrates three methods of allocating frequency domain resources, the three methods including type 0 6-00 and type 1 6-05 configurable through a higher layer in the NR system and a dynamic switch 6-10.

Referring to FIG. 6, when a UE is configured to use only resource type 0 6-00 via higher layer signaling, partial DCI allocating a PDSCH to the UE may have a bitmap consisting of $N_{RBG}$ bits. A condition for this will be described later. Here, $N_{RBG}$ denotes the number of resource block groups (RBGs) determined as Table 3 below according to a BWP size assigned by a BWP indicator and a higher layer parameter rbg-Size, and data is transmitted to a RBG indicated by 1 by the bitmap.

[Table 13]

| Bandwidth Part Size | Configuration 1 | Configuration 2 |
|---|---|---|
| 1 - 36 | 2 | 4 |
| 37 - 72 | 4 | 8 |
| 73 - 144 | 8 | 16 |
| 145 - 275 | 16 | 16 |

When the UE is configured to use only resource type 1 6-05 via higher layer signaling, partial DCI assigning a PDSCH to the UE may include frequency domain resource assignment information consisting of

$$\left\lceil \log_2 \left( \frac{N_{RB}^{DL,BWP}\left(N_{RB}^{DL,BWP} + 1\right)}{2} \right) \right\rceil$$

bits. A condition for this will be described later. Thus, the base station may configure a starting virtual resource block (VRB) 6-20 and a frequency domain resource length 6-25 consecutively allocated from the starting VRB 6-20.

When the UE is configured to use both resource type 0 and resource type 1 6-10 via higher layer signaling, partial DCI assigning a PDSCH to the UE may have frequency domain resource assignment information configured of bits of a larger value 6-35 among a payload 6-15 for configuring the resource type 0 and payloads 6-20 and 6-25 for configuring the resource type 1. A condition for this will be described later. Here, a bit may be added to a most significant byte (MSB) of information about the frequency domain resource allocation in DCI, and when the corresponding bit is 0, it may be indicated that resource type 0 is used, and when the corresponding bit is 1, it may be indicated that resource type 1 is used.

Hereinafter, a method of allocating time domain resources with respect to a data channel in a next-generation wireless communication system (the 5G or NR system) is described.

A base station may configure, to a UE, a table regarding time domain resource assignment information for a PDSCH and a PUSCH, via higher layer signaling (for example, RRC signaling). For the PDSCH, a table consisting of up to maxNrofDL-Allocations=16 entries may be configured, and for the PUSCH, a table consisting of up to maxNrofUL-Allocations=16 entries may be configured. According to an embodiment, the time domain resource assignment information may include a PDCCH-to-PDSCH slot timing (corresponds to a time interval in a slot unit between a time point when the PDCCH is received and a time point when the PDSCH scheduled by the received PDCCH is transmitted, indicated by K0), a PDCCH-to-PUSCH slot timing (corresponds to a time interval in a slot unit between a time point when the PDCCH is received and a time point when the PUSCH scheduled by the received PDCCH is transmitted, indicated by K2), information about a location and length of a start symbol where the PDSCH or PUSCH is scheduled within a slot, and a mapping type of the PDCH or PUSCH. For example, a plurality of pieces of information such as [Table 14] or [Table 15] may be notified by the base station to the UE.

[Table 14]

```
PDSCH-TimeDomainResourceAllocationList information element

PDSCH-TimeDomainResourceAllocationList ::=  SEQUENCE (SIZE(1..maxNrofDL-Allocations)) OF
PDSCH-TimeDomainResourceAllocation


PDSCH-TimeDomainResourceAllocation ::=    SEQUENCE {
   k0                         INTEGER(0..32)                    OPTIONAL,  -- Need S
   (PDCCH-to-PDSCH timing, slot unit)
     mappingType                ENUMERATED {typeA, typeB},
   (PDSCH mapping type)
     startSymbolAndLength            INTEGER (0..127)
     (start symbol and length of PDSCH)
}
```

[Table 15]

```
PUSCH-TimeDomainResourceAllocation information element

PUSCH-TimeDomainResourceAllocationList ::=   SEQUENCE (SIZE(1..maxNrofUL-
Allocations)) OF PUSCH-TimeDomainResourceAllocation


PUSCH-TimeDomainResourceAllocation ::=    SEQUENCE {
   k2                   INTEGER(0..32)      OPTIONAL,  -- Need S
   (PDCCH-to-PUSCH timing, slot unit)
   mappingType                ENUMERATED {typeA, typeB},
   (PUSCH mapping type)
   startSymbolAndLength            INTEGER (0..127)
   (start symbol and length of PUSCH)
}
```

The base station may notify the UE of one of the entries in the table of the time domain resource assignment information, via L1 signaling (for example, DCI) (for example, indicated via a 'time domain resource assignment' field within DCI). The UE may obtain the time domain resource assignment information for the PDSCH or PUSCH, based on the DCI received from the base station.

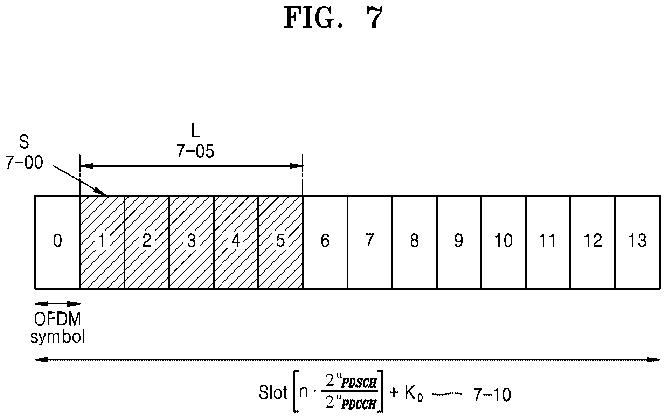

FIG. 7 is a diagram illustrating an example of allocation of time domain resources of a PDSCH in a wireless communication system according to an embodiment of the disclosure.

Referring to FIG. 7, the base station may indicate a time domain location of a PDSCH resource according to subcarrier spacings (SCSs) $\mu_{PDSCH}$, $\mu_{PDCCH}$ of a data channel and a control channel configured by using a higher layer, a scheduling offset value K0, and a starting location 7-00 and a duration 7-05 of an OFDM symbol in a slot dynamically indicated via DCI.

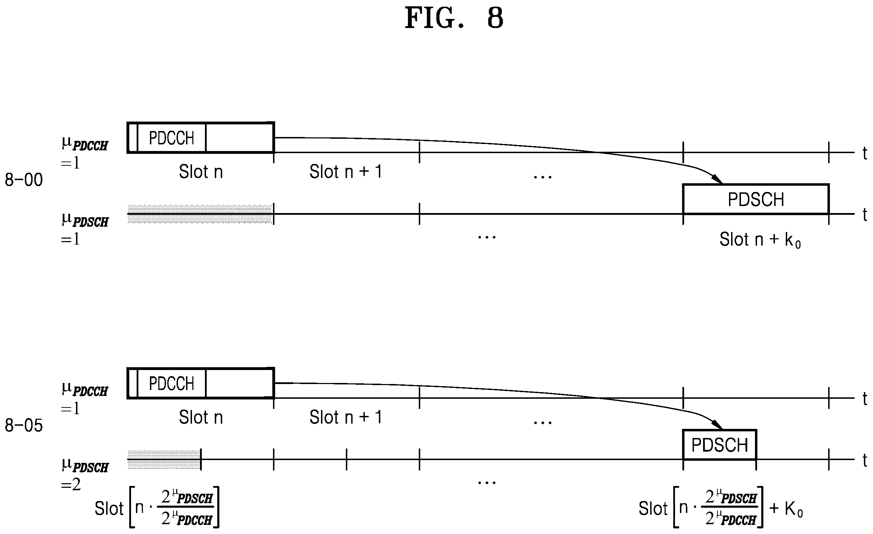

FIG. 8 is a diagram illustrating an example of allocation of time domain resources according to SCSs of a data channel and a control channel in a wireless communication system according to an embodiment of the disclosure.

Referring to FIG. 8, when the SCSs of the data channel and the control channel are the same as each other (8-00) $\mu_{PDSCH} = \mu_{PDCCH}$, slot numbers for the data channel and the control channel are the same as each other, and thus, the base station and the UE may see that a scheduling offset occurs according to a predetermined slot offset $K_0$. On the contrary, when the SCSs of the data channel and the control channel are different from each other (8-05) $\mu_{PDSCH} \neq \mu_{PDCCH}$, slot numbers for the data channel and the control channel are different from each other, and thus, the base station and the UE may see that a scheduling offset occurs according to a predetermined slot offset $K_0$, based on an SCS of a PDCCH.

In the LTE and the NR systems, while the UE is connected to a serving base station, the UE may perform a procedure of reporting a capability supported by the UE to the corresponding base station. This procedure is referred to as (reporting) of a UE capability in the description below.

The base station may transmit, to the UE in connection, a UE capability enquiry message requesting reporting of a capability. The UE capability enquiry message may include a request of the capability of the UE for each radio access technology (RAT) type of the base station. The request for each RAT type may include requested frequency band information. Also, in the case of the UE capability enquiry message, one RRC message container may request a plurality of RAT types, or the UE capability enquiry message including the request for each RAT type may be included multiple times and transmitted to the UE. That is, the UE capability enquiry may be repeated multiple times, and the UE may configure and report a corresponding UE capability information message multiple times. In a next-generation wireless communication system, the UE capability for the NR, the LTE, the EN-DC, and the MR-DC may be requested. Also, the UE capability enquiry message is generally transmitted at an early stage after a UE is connected to a base station, but may be requested at any condition when it is needed by the base station.

The UE receiving the request of reporting the UE capability from the base station may configure a UE capability according to an RAT type and band information requested from the base station. Methods, performed by the UE, of configuring the UE capability in the NR system are described below.

1. When the UE receives a list about an LTE band and/or an NR band as the UE capability request from the base station, the UE configures a band combination (BC) with respect to EN-DC and NR stand alone (SA). That is, the UE configures a candidate list of the BC with respect to the EN-DC and the NR SA based on bands requested by the base station via FreqBandList. Also, a priority order of the bands is in compliance with an order described in FreqBandList.

2. When the base station requests the UE capability report by setting an "eutra-nr-only" flag or an "eutra" flag, the UE completely removes candidates with respect to NR SA BCs from the configured candidate list of the BC. This operation may only happen when an LTE base station (eNB) request an "eutra" capability.

3. Next, the UE removes fallback BCs from the configured candidate list of the BC. Here, the fallback BC corresponds to a case in which a band corresponding to at least one SCell is removed from a certain super set BC, and because the super set BC may already cover the fallback BC, it is possible to omit the fallback BC. This operation may also be applied to MR-DC. That is, the operation may also be applied to LTE bands. The BC remaining after this operation is a final "candidate BC list."

4. The UE may select BCs to report, by selecting BCs appropriate for the requested RAT type from the final "candidate BC list." In this operation, the UE configures supportedBandCombinationList according to a determined order. That is, the UE may configure the BC and the UE capability to report according to a predetermined rat-Type order. (nr -> eutra-nr -> eutra). Also, the UE configures featureSetCombination with respect to the configured supportedBandCombinationList and configures a list of "candidate feature set combinations" from a candidate BC list, from which a list with respect to a fallback BC (including a capability of an equal or lower level) is removed. "Candidate feature set combinations" include all feature set combinations with respect to the NR and the EUTRA-NR BC and may be obtained from a feature set combination of containers of UE-NR-Capabilities and UE-MRDC-Capabilities.

5. Also, when the requested RAT Type is eutra-nr and is effective, featureSetCombinations may be included in the both containers of the UE-MRDC-Capabilities and the UE-NR-Capabilities. However, a feature set of the NR may be included in only the UE-NR-Capabilities.

After the UE capability is configured, the UE may transmit a UE capability information message including the UE capability to the base station. Subsequently, the base station may perform appropriate scheduling and transmission/reception management with respect to the corresponding UE based on the UE capability received from the UE.

In the NR system, the UE may transmit uplink control information (UCI) to the base station through a PUCCH. The UCI may include at least one of HARQ-ACK indicating a success or failure of demodulation/decoding with respect to a transport block (TB) received by the UE through a PDSCH, a scheduling request (SR) by which the UE requests allocation of a resource from a PUSCH base station for uplink data transmission, or channel state information (CSI) for reporting a channel state of the UE.

PUCCH resources may be largely divided into a long PUCCH and a short PUCCH according to a duration of an allocated symbol. In the NR system, the long PUCCH has a duration of 4 or more symbols in a slot, and the short PUCCH has a duration of 2 or less symbols in a slot.

To describe the long PUCCH in more detail, the long PUCCH may be used for improving an uplink cell coverage, and accordingly, may be transmitted by using a DFT-S-OFDM scheme, which is single subcarrier transmission, rather than by using OFDM transmission. The long PUCCH supports transmission formats, such as PUCCH format 1, PUCCH format 3, and PUCCH format 4, according to the number of bits of the UCI which may be supported and whether or not multiplexing of the UE is supported through a Pre-DFT orthogonal cover code (OCC) support at an IFFT's front end.

First, PUCCH format 1 is a DFT-S-OFDM-based long PUCCH format capable of supporting up to 2 bits of UCI and uses a frequency resource of up to 1 RB. The UCI may include each or a combination of HARQ-ACK and SR. In PUCCH format 1, an OFDM symbol including a DMRS, which is a demodulation reference signal (or a reference signal), and an OFDM symbol including the UCI are repetitively configured.

For example, when the number of transmission symbols of PUCCH format 1 is eight, the eight symbols may include a DMRS symbol, a UCI symbol, a DMRS symbol, a UCI symbol, a DMRS symbol, a UCI symbol, a DMRS symbol, and a UCI symbol in a sequence of this stated order. The DMRS symbol may be spread by using an orthogonal code (or an orthogonal sequence or spreading code, $w_i(m)$) on a time domain in a sequence corresponding to a duration of 1 RB on a frequency domain in one OFDM symbol and may be transmitted after IFFT is performed thereon.

The UCI symbol may be transmitted after the UE generates d (0) by performing BPSK modulation on the UCI of 1 bit and QPSK modulation on the UCI of 2 bits, scrambles the generated d (0) by multiplying the generated d (0) by a sequence corresponding to a duration of 1 RB on a frequency domain, spreads the scrambled sequence on a time domain by using an orthogonal code (or an orthogonal sequence or spreading code $w_i(m)$), and performs IFFT on the spread sequence.

The UE generates a sequence based on a group hopping or sequence hopping configuration configured from the base station through higher layer signaling and a configured ID and cyclic-shifts the generated sequence by using an initial cyclic shift (CS) value configured through a higher signal to generate a sequence corresponding to a length of 1 RB.

$$w_i(m) = e^{\frac{j2\pi\phi(m)}{N_{SF}}}$$

$w_i(m)$ is determined to be , when a length $N_{SF}$ of the spreading code is given, and specifically, is given as in [Table 16] below. i represents an index of the spreading code itself, and m represents indices of elements of the spreading code. Here, numbers in [ ] described in [Table 16] denote $\phi(m)$. For example, when a length of the spreading code is 2, and an index of the configured spreading code is i=0, the spreading code w_i (m) becomes $w_i(0)$ $=e^{j2\pi\cdot0/N_{SF}}=1$, $w_i(1)=e^{j2\pi\cdot0/N_{SF}}=1$, and accordingly, $w_i(m)$ = [1 1].

[Table 16]

| $N_{SF}$ | Spreading code for PUCCH format 1 $w_i(m)=e$ | | | $\varphi(m)$ | | | |
|---|---|---|---|---|---|---|---|
| | i = 0 | i = 1 | i = 2 | i = 3 | i = 4 | i = 5 | i = 6 |
| 1 | [0] | | | | - | | |
| 2 | [0 0] | [0 1] | | - | - | - | - |
| 3 | [0 0 0] | [0 1 2] | [0 2 1] | - | - | - | - |
| 4 | [0 0 0 0] | [0 2 0 2] | [0 0 2 2] | [0 2 2 0] | - | | - |
| 5 | [0 0 0 0 0] | [0 1 2 3 4] | [0 2 4 1 3) | [0 3 1 4 2] | [0 4 3 2 1] | - | - |
| 6 | [0 0 0 0 0 0] | [0 1 2 3 4 5] | [0 2 4 0 2 4] | [0 3 0 3 0 3] | [0 4 2 0 4 2] | [0 5 4 3 2 1] | - |
| 7 | [0 0 0 0 0 0 0] | [0 1 2 3 4 5 6] | [0 2 4 6 1 3 5] | [0 3 6 2 5 1 4] | [0 4 1 5 2 6 3] | [0 5 3 1 6 4 2] | [0 6 5 4 3 2 1] |

Next, PUCCH format 3 is a DFT-S-OFDM-based long PUCCH format capable of supporting UCI of more than 2 bits, and the number of used RBs may be configurable through a higher layer. The UCI may include a combination or each of HARQ-ACK, SR, and CSI. In PUCCH format 3, DMRS symbol locations are presented in [Table 17] below according to whether frequency hopping is performed in a slot and whether supplementary DMRS symbol is configured.

[Table 17]

| PUCCH format 3/4 transmission duration | DMRS location in PUCCH format 3/4 transmission | | | |
|---|---|---|---|---|
| | supplementary DMRS not configured | | supplementary DMRS configured | |
| | Frequency hopping not configured | Frequency hopping configured | Frequency hopping not configured | frequency hopping configured |
| 4 | 1 | 0, 2 | 1 | 0, 2 |
| 5 | 0, 3 | | 0, 3 | |

(continued)

| PUCCH format 3/4 transmission duration | DMRS location in PUCCH format 3/4 transmission | | | |
| --- | --- | --- | --- | --- |
| | supplementary DMRS not configured | | supplementary DMRS configured | |
| | Frequency hopping not configured | Frequency hopping configured | Frequency hopping not configured | frequency hopping configured |
| 6 | 1, 4 | | 1, 4 | |
| 7 | 1, 4 | | 1, 4 | |
| 8 | 1, 5 | | 1, 5 | |
| 9 | 1, 6 | | 1, 6 | |
| 10 | 2, 7 | | 1,3,6,8 | |
| 11 | 2, 7 | | 1,3,6,9 | |
| 12 | 2, 8 | | 1, 4, 7, 10 | |
| 13 | 2, 9 | | 1, 4, 7, 11 | |
| 14 | 3, 10 | | 1, 5, 8, 12 | |

For example, when the number of transmission symbols of PUCCH format 3 is eight, a DMRS is transmitted at a first symbol and a fifth symbol, with 0 as the starting first symbol of the 8 symbols. [Table 17] is applied to DMRS symbol locations of PUCCH format 4 in the same manner.

Next, PUCCH format 4 is a DFT-S-OFDM-based long PUCCH format capable of supporting UCI of more than 2 bits and uses a frequency resource of up to 1 RB. The UCI may include a combination or each of HARQ-ACK, SR, and CSI. A difference of PUCCH format 4 from PUCCH format 3 is that in the case of PUCCH format 4, PUCCH format 4 of multiple UEs may be multiplexed in one RB. It is possible to multiplex PUCCH format 4 of a plurality of UEs by applying a Pre-DFT OCC to the UCI at an IFFT's front end. However, the number of UCI symbols which may be transmitted per UE may be reduced according to the number of multiplexed UEs. The number of UEs which may be multiplexed, that is, the number of different available OCCs may be 2 or 4, and the number of OCCs and an OCC index to be applied may be configured through a higher layer.

Next, a short PUCCH will be described. The short PUCCH may be transmitted from both of a downlink centric slot and an uplink centric slot and may generally be transmitted from a last symbol of a slot or an OFDM symbol at a back end (for example, the last OFDM symbol or the second to last OFDM symbol, or the last 2 OFDM symbols). However, the short PUCCH may be transmitted from any location in the slot. Also, the short PUCCH may be transmitted by using one OFDM symbol or two OFDM symbols. The short PUCCH may be used to reduce a latency in comparison with the long PUCCH in a situation of a good uplink cell coverage and may be transmitted by using a CP-OFDM scheme.

The short PUCCH may support the transmission formats such as PUCCH format 0 and PUCCH format 2, according to the number of bits of the UCI which may be supported. First, PUCCH format 0 is a short PUCCH format capable of supporting the UCI of up to 2 bits and uses a frequency resource of up to 1 RB. The UCI may include a combination or each of HARQ-ACK and SR. PUCCH format 0 has a structure in which a DMRS is not transmitted, and only a sequence mapped to 12 subcarriers on a frequency domain in one OFDM symbol is transmitted. The UE may generate a sequence based on a group hopping or sequence hopping configuration configured from the base station through a higher signal and configured IDs, may cyclic-shift the generated sequence by using a final CS value obtained by adding a different CS value to an indicated initial CS value according to ACK or NACK, may map the cyclic-shifted sequence to 12 subcarriers, and may transmit the mapped sequence.

For example, when HARQ-ACK is 1 bit, the UE may obtain the final CS value by adding 6 to the initial CS value in the case of ACK and may obtain the final CS value by adding 0 to the initial CS value in the case of NACK, as in [Table 18]. 0, which is the CS value for NACK, and 6, which is the CS value for ACK, are defined in the standards, and the UE may generate PUCCH format 0 according to the value defined in the standards and transmit 1-bit HARQ-ACK.

[Table 18]

| 1 bit HARQ-ACK | NACK | ACK |
| --- | --- | --- |
| Final CS | (initial CS + 0) mod 12 = initial CS | (initial CS + 6) mod 12 |

For example, when HARQ-ACK is 2 bits, the UE may add 0 to the initial CS value in the case of (NACK, NACK), may add 3 to the initial CS value in the case of (NACK, ACK), may add 6 to the initial CS value in the case of (ACK, ACK), and may add 9 to the initial CS value in the case of (ACK, NACK) as in [Table 19]. 0, which is the CS value for (NACK, NACK), 3, which is the CS value for (NACK, ACK), 6, which is the CS value for (ACK, ACK), and 9, which is the CS value for (ACK, NACK) may be defined in the standards, and the UE may generates PUCCH format 0 according to the value defined in the standards and transmit 2-bit HARQ-ACK.

When the final CS value obtained by adding the CS value to the initial CS value according to ACK or NACK exceeds 12, the length of the sequence is 12, and thus, modulo 12 may be applied to the final CS value.

[Table 19]

| 2 bits HARQ-ACK | NACK, NACK | NACK, ACK | ACK, ACK | ACK, NACK |
|---|---|---|---|---|
| Final CS | (initial CS + 0) mod 12 = initial CS | (initial CS + 3) mod 12 | (initial CS +6) mod 12 | (initial CS + 9) mod 12 |

Next, PUCCH format 2 is a short PUCCH format supporting the UCI of more than 2 bits, and the number of used RBs may be configured through a higher layer. The UCI may include a combination or each of HARQ-ACK, SR, and CSI. When an index of the first subcarrier is #0, in PUCCH format 2, locations of subcarriers transmitting a DMRS in one OFDM symbol may be fixed to subcarriers having indexes of #1, #4, #7, and #10. The UCI may be mapped to remaining subcarriers except for the subcarrier in which the DMRS is located after a modulation process after channel encoding.

In summary, with respect to each PUCCH format described above, configurable values and their ranges may be summarized as in [Table 20] below. When it is not needed to configure a value, N.A. is described, in [Table 20] below.

[Table 20]

| | | PUCCH Format 0 | PUCCH Format 1 | PUCCH Format 2 | PUCCH Format 3 | PUCCH Format 4 |
|---|---|---|---|---|---|---|
| *Starting symbol* | Configurability | √ | √ | √ | √ | √ |
| | Value range | *0-13* | *0 – 10* | *0-13* | *0 – 10* | *0 – 10* |
| *Number of symbols in a slot* | Configurability | √ | √ | √ | √ | √ |
| | Value range | *1, 2* | *4 – 14* | *1, 2* | *4 – 14* | *4 – 14* |
| *Index for identifying starting PRB* | Configurability | √ | √ | √ | √ | √ |
| | Value range | *0 - 274* | *0 - 274* | *0 - 274* | *0 - 274* | *0 - 274* |
| *Number of PRBs* | Configurability | *N.A.* | *N.A.* | √ | √ | *N.A.* |
| | Value range | *N.A.(Default is 1)* | *N.A.(Default is 1)* | *1 – 16* | *1 - 6, 8 - 10, 12, 15, 16* | *N.A. (Default is 1)* |
| *Enabling frequency hopping (intra-slot)* | Configurability | √ | √ | √ | √ | √ |
| | Value range | *On/Off (only for 2 symbol)* | *On/Off* | *On/Off (only for 2 symbol)* | *On/Off* | *On/Off* |
| *Freq.cy resource of 2nd hop if intra-slot frequency hopping is enabled* | Configurability | √ | √ | √ | √ | √ |
| | Value range | *0 – 274* | *0 - 274* | *0 - 274* | *0 - 274* | *0 - 274* |
| *Index of initial cyclic shift* | Configurability | √ | √ | *N.A.* | *N.A.* | *N.A.* |
| | Value range | *0 – 11* | *0 – 11* | *N.A.* | *N.A.* | *N.A.* |
| *Index of time-domain OCC* | Configurability | *N.A.* | √ | *N.A.* | *N.A.* | *N.A.* |
| | Value range | *N.A.* | *0 - 6* | *N.A.* | *N.A.* | *N.A.* |
| *Length of Pre-DFT OCC* | Configurability | *N.A.* | *N.A.* | *N.A.* | *N.A.* | √ |
| | Value range | *N.A.* | *N.A.* | *N.A.* | *N.A.* | *2, 4* |
| *Index of Pre-DFT OCC* | Configurability | *N.A.* | *N.A.* | *N.A.* | *N.A.* | √ |
| | Value range | *N.A.* | *N.A.* | *N.A.* | *N.A.* | *0, 1, 2, 3* |

For the uplink coverage improvement, multi-slot repetition may be supported for PUCCH formats 1, 3, and 4, and PUCCH repetition may be configured for each PUCCH format. The UE may perform repetitive transmission with respect to a PUCCH including UCI corresponding to the number of slots configured through nrofSlots, which is higher layer signaling. With respect to the PUCCH repetitive transmission, PUCCH transmission of each slot may be performed by using the same number of consecutive symbols, and the corresponding number of consecutive symbols may be configured through nrofSymbols in PUCCH format 1, PUCCH format 3, or PUCCH format 4, which is higher layer signaling. With respect to the PUCCH repetitive transmission, the PUCCH transmission of each slot may be performed by using the same start symbol, and the corresponding start symbol may be configured through startingSymbolIndex in PUCCH format 1, PUCCH format 3, or PUCCH format 4, which is higher layer signaling. With respect to the PUCCH repetitive transmission, a single piece of PUCCH-spatialRelationInfo may be configured with respect to a single PUCCH resource. With respect to the PUCCH repetitive transmission, when the UE is configured to perform frequency hopping in PUCCH transmission in different slots, the UE may perform frequency hopping in a slot unit. Also, when the UE is configured to perform frequency hopping in PUCCH transmission in different slots, the UE may start PUCCH transmission from a first PRB index configured through starting PRB which is higher layer signaling in an even number[th] slot and may start PUCCH transmission from a second PRB index configured through secondHopPRB which is higher layer signaling in an odd number[th] slot. Additionally, when the UE is configured to perform frequency hopping in PUCCH transmission in different slots, an index of a slot in which the UE is indicated to perform first PUCCH transmission is 0, and during the total number of times of configured PUCCH repetitive transmission, a value of the number of times of PUCCH repetitive transmission value may increase regardless of the PUCCH transmission in each slot. When the UE is configured to perform frequency hopping in PUCCH transmission in different slots, the UE may expect that frequency hopping is configured in a slot during PUCCH transmission. When the UE is not configured to perform frequency hopping in PUCCH transmission in different slots and is configured to perform frequency hopping in a slot, the first and second PRB indexes may be applied in the slot in the same manner. When the number of uplink symbols capable of PUCCH transmission is less than nrofSymbols configured through higher layer signaling, the UE may not transmit a PUCCH. Even when the UE has failed to transmit a PUCCH for a certain reason in a predetermined slot during the PUCCH repetitive transmission, the UE may increase the number of times of PUCCH repetitive transmission.

Next, PUCCH resource configuration of the base station or the UE is described. The base station may be capable of configuring, for a predetermined UE, a PUCCH resource for each BWP via a higher layer. The PUCCH resource configuration may be the same as in [Table 21] below.

[Table 21]

```
PUCCH-Config ::=                         SEQUENCE {
    resourceSetToAddModList                  SEQUENCE (SIZE (1..maxNrofPUCCH-ResourceSets)) OF
PUCCH-ResourceSet   OPTIONAL, -- Need N
    resourceSetToReleaseList                 SEQUENCE (SIZE (1..maxNrofPUCCH-ResourceSets)) OF
PUCCH-ResourceSetId OPTIONAL, -- Need N
    resourceToAddModList                     SEQUENCE (SIZE (1..maxNrofPUCCH-Resources)) OF
PUCCH-Resource       OPTIONAL, -- Need N
    resourceToReleaseList                    SEQUENCE (SIZE (1..maxNrofPUCCH-Resources)) OF
PUCCH-ResourceId      OPTIONAL, -- Need N
    format1                              SetupRelease { PUCCH-FormatConfig }
OPTIONAL, -- Need M
    format2                              SetupRelease { PUCCH-FormatConfig }
OPTIONAL, -- Need M
    format3                              SetupRelease { PUCCH-FormatConfig }
OPTIONAL, -- Need M
    format4                              SetupRelease { PUCCH-FormatConfig }
OPTIONAL, -- Need M

    schedulingRequestResourceToAddModList  SEQUENCE (SIZE (1..maxNrofSR-Resources)) OF
SchedulingRequestResourceConfig

OPTIONAL, -- Need N
    schedulingRequestResourceToReleaseList SEQUENCE (SIZE (1..maxNrofSR-Resources)) OF
SchedulingRequestResourceId

OPTIONAL, -- Need N
    multi-CSI-PUCCH-ResourceList         SEQUENCE (SIZE (1..2)) OF PUCCH-ResourceId
OPTIONAL, -- Need M
    dl-DataToUL-ACK                      SEQUENCE (SIZE (1..8)) OF INTEGER (0..15)
OPTIONAL, -- Need M

    spatialRelationInfoToAddModList      SEQUENCE (SIZE (1..maxNrofSpatialRelationInfos)) OF
PUCCH-SpatialRelationInfo

OPTIONAL, -- Need N
    spatialRelationInfoToReleaseList     SEQUENCE (SIZE (1..maxNrofSpatialRelationInfos)) OF
PUCCH-SpatialRelationInfoId

OPTIONAL, -- Need N
    pucch-PowerControl                   PUCCH-PowerControl
OPTIONAL, -- Need M
    ...
}
```

According to [Table 21], one or more PUCCH resource sets may be configured in a PUCCH resource configuration for a predetermined BWP, and a maximum payload value for UCI transmission may be configured in one or more of the PUCCH resource sets. One or more PUCCH resources may be included in each PUCCH resource set, and each PUCCH resource may be included in one of the PUCCH formats described above.

With respect to the PUCCH resource sets, the first PUCCH resource set may have a maximum payload value that is fixed to 2 bits. Accordingly, the corresponding value may not be additionally configured through a higher layer, etc. When the remaining PUCCH resource sets are configured, an index of the corresponding PUCCH resource sets may be configured in an ascending order according to maximum payload values, and the maximum payload value may not be configured in the last PUCCH resource set. A higher layer configuration with respect to the PUCCH resource sets may be the same as [Table 22] below.

[Table 22]

```
-- A set with one or more PUCCH resources
PUCCH-ResourceSet ::=                  SEQUENCE {
    pucch-ResourceSetId                   PUCCH-ResourceSetId,
    resourceList                          SEQUENCE (SIZE (1..maxNrofPUCCH-ResourcesPerSet)) OF
PUCCH-ResourceId,
    maxPayloadMinus1                      INTEGER (4..256)
OPTIONAL  -- Need R
}
```

In a resourceList parameter of [Table 22], ID of the PUCCH resources included in the PUCCH resource sets may be included.

During an initial connection or when a PUCCH resource set is not configured, a PUCCH resource set composed of a plurality of cell-specific PUCCH resources in an initial BWP as shown in [Table 23] below may be used. A PUCCH resource in the PUCCH resource set, the PUCCH resource being to be used for the initial connection, may be indicated through SIB1.

[Table 23]

| Index | PUCCH format | First symbol | Number of symbols | PRB offset $RB_{BWP}^{offset}$ | Set of initial CS indexes |
|---|---|---|---|---|---|
| 0 | 0 | 12 | 2 | 0 | {0, 3} |
| 1 | 0 | 12 | 2 | 0 | {0, 4, 8} |
| 2 | 0 | 12 | 2 | 3 | {0, 4, 8} |
| 3 | 1 | 10 | 4 | 0 | {0, 6} |
| 4 | 1 | 10 | 4 | 0 | {0, 3, 6, 9} |
| 5 | 1 | 10 | 4 | 2 | {0, 3, 6, 9} |
| 6 | 1 | 10 | 4 | 4 | {0, 3, 6, 9) |
| 7 | 1 | 4 | 10 | 0 | {0, 6} |
| 8 | 1 | 4 | 10 | 0 | {0, 3, 6. 9} |
| 9 | 1 | 4 | 10 | 2 | {0, 3, 6, 9} |
| 10 | 1 | 4 | 10 | 4 | {0, 3, 6, 9} |
| 11 | 1 | 0 | 14 | 0 | {0, 6} |
| 12 | 1 | 0 | 14 | 0 | {0, 3, 6, 9} |
| 13 | 1 | 0 | 14 | 2 | {0, 3, 6, 9} |
| 14 | 1 | 0 | 14 | 4 | (0, 3, 6, 9 |
| 15 | 1 | 0 | 14 | $\left\lfloor N_{BWP}^{size}/4 \right\rfloor$ | {0, 3, 6, 9} |

The maximum payload of each PUCCH resource included in the PUCCH resource sets may be 2 bits in the case of PUCCH format 0 or 1, and may be determined according to a symbol length, the number of PRBs, and a maximum code rate, in the case of the remaining formats. The symbol length and the number of PRBs may be configured for each PUCCH resource, and the maximum code rate may be configured for each PUCCH format.

Next, PUCCH resource selection for UCI transmission is described. In the case of SR transmission, a PUCCH resource with respect to the SR corresponding to schedulingRequestID may be configured through a higher layer as in [Table 24] below. The PUCCH resource may be a resource included in PUCCH format 0 or PUCCH format 1.

[Table 24]

```
SchedulingRequestResourceConfig ::=      SEQUENCE {
    schedulingRequestResourceId               SchedulingRequestResourceId,
    schedulingRequestID                       SchedulingRequestId,
    periodicityAndOffset                      CHOICE {
        sym2                                      NULL,
        sym6or7                                   NULL,
        sl1                                       NULL,              -- Recurs in every slot
        sl2                                       INTEGER (0..1),
        sl4                                       INTEGER (0..3),
        sl5                                       INTEGER (0..4),
        sl8                                       INTEGER (0..7),
        sl10                                      INTEGER (0..9),
        sl16                                      INTEGER (0..15),
        sl20                                      INTEGER (0..19),
        sl40                                      INTEGER (0..39),
        sl80                                      INTEGER (0..79),
        sl160                                     INTEGER (0..159),
        sl320                                     INTEGER (0..319),
        sl640                                     INTEGER (0..639)
    }
OPTIONAL,   -- Need M
    resource                                  PUCCH-ResourceId
OPTIONAL    -- Need M
}
```

A transmission period and an offset of the configured PUCCH resource may be configured through a periodicityAndOffset of [Table 24]. When there is uplink data to be transmitted by the UE at a time point corresponding to the configured period and offset, the corresponding PUCCH resource may be transmitted, and when there is not uplink data to be transmitted by the UE at the time point corresponding to the configured period and offset, the corresponding PUCCH resource may not be transmitted.

In the case of CSI transmission, a PUCCH resource to transmit a periodic CSI report or a semi-persistent CSI report through PUCCH may be configured in a pucch-CSI-ResourceList parameter as in [Table 25] below. The pucch-CSI-ResourceList parameter may include a list of PUCCH resources for each BWP with respect to a cell or a CC to transmit the corresponding CSI report. The PUCCH resource may be a resource included in PUCCH format 2, PUCCH format 3, or PUCCH format 4.

[Table 25]

```
CSI-ReportConfig ::=             SEQUENCE {
    reportConfigId                   CSI-ReportConfigId,
    carrier                          ServCellIndex              OPTIONAL,   -- Need S
    …
    reportConfigType                 CHOICE {
        periodic                         SEQUENCE {
            reportSlotConfig                 CSI-ReportPeriodicityAndOffset,
            pucch-CSI-ResourceList           SEQUENCE (SIZE (1..maxNrofBWPs)) OF
PUCCH-CSI-Resource
        },
        semiPersistentOnPUCCH            SEQUENCE {
            reportSlotConfig                 CSI-ReportPeriodicityAndOffset,
            pucch-CSI-ResourceList           SEQUENCE (SIZE (1..maxNrofBWPs)) OF
PUCCH-CSI-Resource
        },
    …
}
```

A transmission period and offset of the PUCCH resource may be configured through reportSlotConfig of [Table 25].

In the case of HARQ-ACK transmission, a resource set of PUCCH resources to be transmitted may be selected first according to a payload of UCI including the corresponding HARQ-ACK. That is, a PUCCH resource set having a minimum payload that is not less than a UCI payload may be selected. Next, a PUCCH resource in the PUCCH resource set may be selected through a PUCCH resource indicator (PRI) in DCI scheduling a TB corresponding to the corresponding HARQ-ACK, and the PRI may be a PUCCH resource indicator explicitly shown in [Table 5] or [Table 6]. A relationship between the PRI and the PUCCH resource selected from the PUCCH resource set may be the same as in [Table 26] below.

[Table 26]

| PUCCH resource indicator | PUCCH resource |
|---|---|
| '000' | 1st PUCCH resource provided by *pucch-ResourceId* obtained from the 1st value of *resourceList* |
| '001' | 2nd PUCCH resource provided by *pucch-ResourceId* obtained from the 2nd value of *resourceList* |
| '010' | 3rd PUCCH resource provided by *pucch-ResourceId* obtained from the 3rd value of *resourceList* |
| '011' | 4th PUCCH resource provided by *pucch-ResourceId* obtained from the 4th value of *resourceList* |
| '100' | 5th PUCCH resource provided by *pucch-ResourceId* obtained from the 5th value of *resourceList* |
| '101' | 6th PUCCH resource provided by *pucch-ResourceId* obtained from the 6th value of *resourceList* |
| '110' | 7th PUCCH resource provided by *pucch-ResourceId* obtained from the 7th value of *resourceList* |
| '111' | 8th PUCCH resource provided *by pucch-ResourceId* obtained from the 8th value of *resourceList* |

When the number of PUCCH resources selected in the PUCCH resource set is greater than 8, the PUCCH resource may be selected by the following equation.

[Equation 1]

$$r_{\text{PUCCH}} = \begin{cases} \left\lfloor \dfrac{n_{\text{CCE},p} \cdot \left\lfloor R_{\text{PUCCH}}/8 \right\rfloor}{N_{\text{CCE},p}} \right\rfloor + \Delta_{\text{PRI}} \cdot \left\lfloor \dfrac{R_{\text{PUCCH}}}{8} \right\rfloor & \text{if} \quad \Delta_{\text{PRI}} < R_{\text{PUCCH}} \bmod 8 \\[4mm] \left\lfloor \dfrac{n_{\text{CCE},p} \cdot \left\lfloor R_{\text{PUCCH}}/8 \right\rfloor}{N_{\text{CCE},p}} \right\rfloor + \Delta_{\text{PRI}} \cdot \left\lfloor \dfrac{R_{\text{PUCCH}}}{8} \right\rfloor + R_{\text{PUCCH}} \bmod 8 & \text{if} \quad \Delta_{\text{PRI}} \geq R_{\text{PUCCH}} \bmod 8 \end{cases}$$

In [Equation 1], $r_{\text{PUCCH}}$ indicates an index of the PUCCH resource selected in the PUCCH resource set, $R_{\text{PUCCH}}$ indicates the number of PUCCH resources included in the PUCCH resource set, $\Delta_{\text{PRI}}$ indicates a PRI value, $N_{\text{CCE},p}$ indicates the total number of CCEs of CORESET p in which received DCI is included, and $n_{\text{CCE},p}$ indicates a first CCE index with respect to the received DCI.

A time point at which the corresponding PUCCH resource is transmitted is after a $K_1$ slot from TB transmission corresponding to the corresponding HARQ-ACK. A candidate of the $K_1$ value may be set through a higher layer, and in more detail, may be set in a dl-DataToUL-ACK parameter in PUCCH-Config explicitly shown in [Table 21]. One $K_1$ value from among these candidates may be selected by a PDSCH-to-HARQ feedback timing indicator in the DCI scheduling the TB, and this value may be a value explicitly shown in [Table 5] or [Table 6]. A unit of the $K_1$ value may be a slot unit or a sub-slot unit. Here, the sub-slot is a unit having a less length than the slot, and a sub-slot may include one or more symbols.

Next, a case in which two or more PUCCH resources are located in one slot is described. When the UE is capable of transmitting the UCI through one or more PUCCH resources in one slot or sub-slot, and the UCI is transmitted through two PUCCH resources in one slot/sub-slot, i) each PUCCH resource may not overlap each other in a symbol unit, and ii) at least one PUCCH resource may be a short PUCCH. The UE may not expect to transmit a plurality of PUCCH resources for HARQ-ACK transmission in one slot.

Next, a PUCCH transmission process in the case in which two or more PUCCH resources overlap each other is described. When two or more PUCCH resources overlap each other, one of the PUCCH resources overlapping each other may be selected or a new PUCCH resource may be selected according to the condition described above, that is, the condition that the transmitted PUCCH resources must not overlap each other in the symbol unit. Also, all of UCI payloads transmitted through the PUCCH resources overlapping each other may be multiplexed and transmitted, or some of the UCI payloads may be dropped. First, Case 1, in which multi-slot repetition is not configured in the PUCCH resource and Case 2, in which multi-slot repetition is configured are described.

With respect to Case 1, when the PUCCH resources overlap each other, there are Case 1-1), in which two or more PUCCH resources for HARQ-ACK transmission overlap each other and Case 1-2), which includes remaining cases except for Case 1-1).

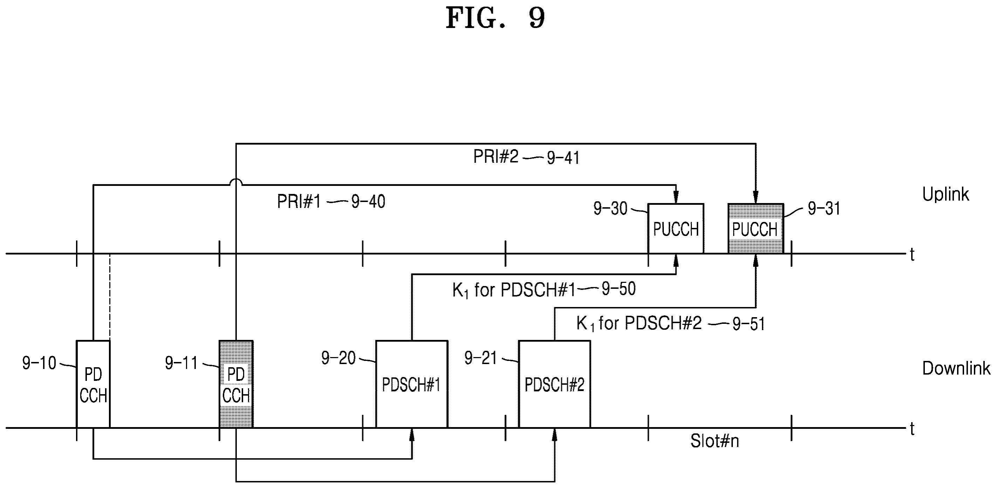

A case corresponding to Case 1-1) is illustrated in FIG. 9.

FIG. 9 is a diagram illustrating a case in which a plurality of PUCCH resources for transmitting HARQ-ACK with respect to a PDSCH overlap each other when multi-slot repetition is not configured, according to an embodiment of the disclosure.

Referring to FIG. 9, with respect to two or more different PDCCHs 9-10 and 9-11 scheduling a PDSCH, when a transmission slot of a PUCCH resource corresponding to each PDCCH is the same as each other, it may correspond to a case in which the corresponding PUCCH resources overlap each other.

That is, when uplink slots corresponding to $K_1$ values 9-50 and 9-51 indicated by a plurality of PDCCHs are the same as each other, it may be understood that the PUCCH resources corresponding to the corresponding PDCCHs may overlap each other.

Here, from among PUCCH resources indicated by PRIs 9-40 and 9-41 in a PDCCH, only a PUCCH resource 9-31 may be selected and transmitted based on the PRI 9-41 corresponding to a PDCCH 9-11 transmitted at the latest time point. Thus, both of HARQ-ACK information with respect to a PDSCH 9-21 and HARQ-ACK information for another PUCCH 9-30 overlapping the PUCCH resource 9-31 may be encoded by a pre-defined HARQ-ACK codebook, and then, transmitted, through the selected PUCCH resource 9-31.

Next, a case in which a PUCCH resource for HARQ-ACK transmission and a PUCCH resource for SR and/or CSI transmission overlap each other or a plurality of PUCCH resources for SR and/or CSI transmission overlap each other, the case corresponding to Case 1-2), is described. When a plurality of PUCCH resources transmitted in the same slot overlap each other by one or more symbols on the time domain, it may be defined that the corresponding PUCCH resources overlap each other, and whether to multiplex UCIs in the resources may be summarized as in [Table 27] below.

[Table 27]

| PUCCH 1 / PUCCH 2 | SR | HARQ-ACK | CSI |
|---|---|---|---|
| SR | - | Case 1-2-1 (Multiplex or not depending on PUCCH format) | Always multiplex |
| HARQ-ACK | | Always multiplex (HARQ-ACK codebook) | Case 1-2-2 (Multiplex or not by higher layer) |
| CSI | Always multiplex | Case 1-2-2 | Case 1-2-2 |

According to [Table 27], when the PUCCH resources for transmitting HARQ-ACK overlap each other or PUCCHs transmitting SR and CSI overlap each other, the UCIs may always be multiplexed.

When the PUCCH resources transmitting the SR and the HARQ-ACK overlap each other, that is, in the case of Case 1-2-1), whether or not to multiplex the UCI may be determined as below according to a format of the PUCCH resource.

- SR on PUCCH format 0 + HARQ-ACK on PUCCH format 1: the SR is dropped, and only the HARQ-ACK is transmitted.
- The remaining cases: both the SR and the HARQ-ACK are multiplexed.

Also, in the remaining cases corresponding to Case 1-2-2, that is, a case in which the PUCCH resources transmitting the HARQ-ACK and the CSI overlap each other, or the plurality of PUCCH resources transmitting the CSI overlap each other, whether or not to multiplex the UCI may be determined according to a higher layer configuration. Also, whether or not to multiplex the HARQ-ACK and the CSI may be separately configured from whether or not to multiplex the plurality of CSIs.

For example, whether or not to multiplex the HARQ-ACK and the CSI may be configured through a simultaneousHARQ-ACK-CSI parameter for each of PUCCH formats 2, 3, and 4, and the corresponding parameter may be configured as the same value with respect to all of the PUCCH formats. When it is configured not to perform multiplexing through the corresponding parameter, only the HARQ-ACK may be transmitted, and the overlapping CSIs may be dropped. Also, whether or not to multiplex the plurality of CSIs may be configured through a multi-CSI-PUCCH-ResourceList parameter in PUCCH-Config. That is, when the multi-CSI-PUCCH-ResourceList parameter is configured, the multiplexing of the CSIs may be performed, and when the multi-CSI-PUCCH-ResourceList parameter is not configured, only a PUCCH corresponding to CSI having a high priority order may be transmitted according to a priority order of the CSIs.

As described above, when the multiplexing of the UCI is performed, a method of selecting a PUCCH resource to transmit the corresponding UCI resource and a method of multiplexing the UCI may vary according to information about overlapping UCIs and a format of the PUCCH resource, as summarized as in [Table 28] below.

[Table 28]

| PUCCH 2 | PUCCH 1 | SR (format 0/1) | HARQ-ACK | | CSI (format 2/3/4) |
| --- | --- | --- | --- | --- | --- |
| | | | Format 1 | Format 0/2/3/4 | |
| SR (format 0/1) | | - | Option 1 | Option 2 | Option 3 |
| HARQ-ACK | Format 1 | Option 1 | Option 4 | Option 4 | Option 5 (grant-based) Option 6 (SPS) |
| | Format 0/2/3/4 | Option 2 | Option 4 | Option 4 | Option 5 (grant-based) Option 6 (SPS) |
| CSI (format 2/3/4) | | Option 3 | Option 5 (grant-based) Option 6 (SPS) | Option 5 (grant-based) Option 6 (SPS) | Option 7 |

Each option of [Table 28] is as below.

- Option 1: selection of the PUCCH resource may vary according to an SR value of an SR PUCCH resource overlapping an HARQ-ACK PUCCH resource. That is, when the SR value is positive, a PUCCH resource for an SR may be selected, and when the SR value is negative, a PUCCH resource for HARQ-ACK may be selected. HARQ-ACK information may be transmitted through the selected PUCCH resource.
- Option 2: HARQ-ACK information and SR information may be multiplexed with a PUCCH resource for HARQ-ACK transmission and transmitted.
- Option 3: SR information and HARQ-ACK information may be multiplexed with a PUCCH resource for CSI transmission and transmitted
- Option 4: Transmission of the PUCCH resource for overlapping between HARQ-ACKs - a detailed operation is described above with respect to Case 1-1).
- Option 5: when a PUCCH resource for HARQ-ACK corresponding to a PDSCH scheduled by a PDCCH and a PUCCH resource for CSI transmission overlap each other, and multiplexing between the HARQ-ACK and the CSI is configured through a higher layer, HARQ-ACK information and CSI information may be multiplexed with the PUCCH resource for the HARQ-ACK and transmitted.
- Option 6: when a PUCCH resource for HARQ-ACK corresponding to a semi-persistent scheduling (SPS) PDSCH and a PUCCH resource for CSI transmission overlap each other, and multiplexing between the HARQ-ACK and the CSI is configured through a higher layer, HARQ-ACK information and CSI information may be multiplexed with the PUCCH resource for the CSI transmission and transmitted.
    When a PUCCH resource list for multiplexing, that is, multi-CSI-PUCCH-ResourceList, is configured through a higher layer, all of UCI payloads multiplexed from the resources in the list may be transmitted, and after one resource having the lowest index is selected, the UCI payload may be transmitted. When there is no resource to transmit all of the multiplexed UCI payloads in the list, a resource having the highest index may be selected, and HARQ-ACK and CSI reports corresponding to the number of available times of transmission may be transmitted through the corresponding resource.
- Option 7: when a plurality of PUCCH resources for CSI transmission overlap each other, and multiplexing between a plurality of CSIs is configured through a higher layer, all of UCI payloads multiplexed in a PUCCH resource list for CSI multiplexing, that is, multi-CSI-PUCCH-ResourceList, configured through a higher layer, may be transmitted, and after a resource having the lowest index is selected, the UCI payload may be transmitted through the resource. When there is no resource to transmit all of the multiplexed UCI payloads in the list, a resource having the highest index may be selected, and CSI reports corresponding to the number of available times of transmission may be transmitted through the corresponding resource.

For convenience of explanation, the case in which two PUCCH resources overlap each other is mainly described. However, the described method may be similarly applied to a case in which three or more PUCCH resources overlap each other. For example, when a PUCCH resource with which SR+HARQ-ACK is multiplexed and a CSI PUCCH resource overlap each other, the multiplexing method of the HARQ-ACK and the CSI may be used.

When it is configured not to perform multiplexing between predetermined UCIs, UCI having a high priority order may be transmitted and UCI having a low priority order may be dropped, according to the priority order of HARQ-ACK > SR > CSI. When it is configured not to perform multiplexing when a plurality of CSI PUCCH resources overlap each other, a PUCCH corresponding to CSI having a high priority order may be transmitted, and a PUCCH corresponding to other CSI may be dropped.

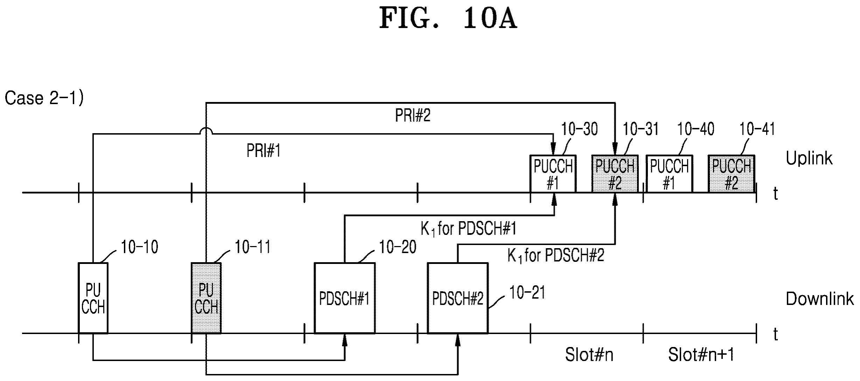

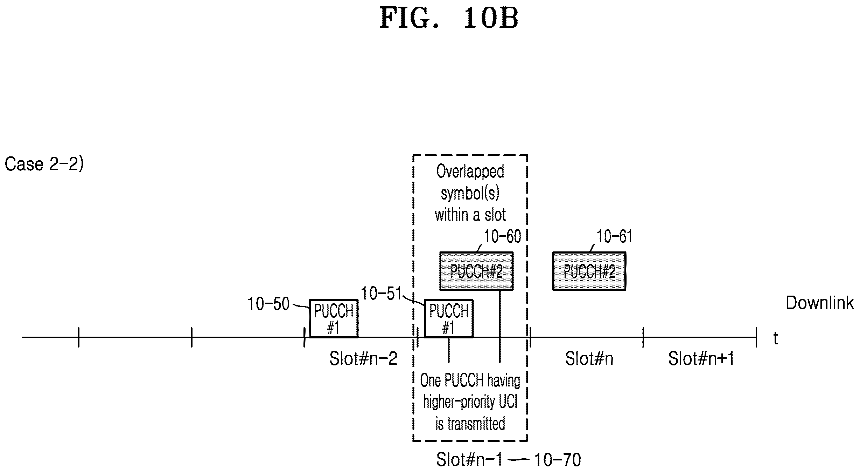

Next, when multi-slot repetition is configured (Case 2), the case is divided into a case (Case 2-1) in which two or more PUCCH resources for HARQ-ACK transmission are located in the same start slot, and remaining cases (Case 2-2). The cases are illustrated in FIGS. 10A and 10B, respectively.

FIGS. 10A and 10B are diagrams illustrating cases in which PUCCH resources overlap each other when multi-slot repetition is configured, according to an embodiment of the disclosure.

Referring to Case 2-1) of FIG. 10A, when multi-slot repetition is configured for a PUCCH resource for HARQ-ACK transmission, that is, when PUCCH#1 is repetitively transmitted throughout a plurality of slots 10-30 and 10-40, and PUCCH#2 is also repetitively transmitted through a plurality of slots 10-31 and 10-41, a single PUCCH resource (a PUCCH that is transmitted at the last time point in a slot), that is, PUCCH#2, may be selected, when start slots of the two PUCCHs indicated by $K_1$ are the same as each other, as in Case 1-1). Thus, HARQ-ACK corresponding to PDSCH#1 and PDSCH#2 may be multiplexed with the corresponding PUCCH through an HARQ-ACK code book and transmitted.

For convenience of explanation, the case in which a plurality of PUCCHs on which multi-slot repetition is performed overlap each other is described as an example. However, the same method may be applied to a case in which the PUCCH on which the multi-slot repetition is performed and a PUCCH transmitted in a single slot overlap each other.

Case 2-2) of FIG. 10B corresponds to a case in which overlapping in a symbol unit occurs between a PUCCH for HARQ-ACK transmission and a PUCCH for SR or CSI transmission or between PUCCHs for transmitting a plurality of SRs or CSIs. That is, the case corresponds to a case in which PUCCH#1 and PUCCH#2 overlap each other in one or more symbols in one slot 10-70, when PUCCH#1 is repetitively transmitted throughout a plurality of slots 10-50 and 10-51, and PUCCH#2 is also repetitively transmitted throughout a plurality of slots 10-60 and 10-61.

Priority orders of UCIs in the PUCCHs are compared between the PUCCHs overlapping each other in one or more symbols in the corresponding slot 10-70, and UCI having a high priority order may be transmitted, and other UCIs may be dropped in the corresponding slot. Here, the priority order of the UCIs may be determined as HARQ-ACK > SR > CSI in an ascending order.

Also, when a plurality of CSI PUCCH resources overlap each other, a PUCCH corresponding to CSI having a high priority order may be transmitted, and PUCCHs corresponding to other CSI may be dropped in the corresponding slot. The PUCCH transmission or dropping according to the priority order described above may be performed in the slot in which overlapping in the symbol unit occurs and may not be performed in other slots. That is, a PUCCH configured with multi-slot repetition may be dropped in the slot in which overlapping in the symbol unit occurs but may be transmitted as configured in the remaining slots.

When two PUCCHs configured with multi-slot repetition overlap each other, the UE does not expect that repetitive transmission of the two PUCCHs have the same priority order and the same start slot. When the repetitive transmission of the two PUCCHs have the same priority order, the UE may transmit the PUCCH which first started the repetitive transmission and may drop the remaining PUCCH. When the repetitive transmission of the two PUCCHs has a different priority order, the UE may perform repetitive transmission of a PUCCH having a high priority order.

For convenience of explanation, the case in which a plurality of PUCCHs on which multi-slot repetition is performed overlap each other is described as an example. However, the same method may be applied to a case in which the PUCCH on which the multi-slot repetition is performed and a PUCCH transmitted in a single slot overlap each other.

Also, overlapping between PUCCH transmission and PUSCH transmission is described. When the UE transmits a PUCCH in the first slot and transmits a PUSCH in the second slot during repetitive transmission of $N_{PUCCH}^{repeat} > 1$, and PUCCH transmission overlaps PUSCH transmission in one or more slots, and when UCIs in the PUSCH are multiplexed in the slots in which the PUCCH transmission and the PUSCH transmission overlap each other, the PUCCH may be transmitted, and the PUSCH may not be transmitted, in the slots in which the PUCCH transmission and the PUSCH transmission overlap each other. Next, an uplink transmission beam configuration to be used for PUCCH transmission is described. When the UE does not have a dedicated PUCCH resource configuration, a PUCCH resource set may be provided through pucch-ResourceCommon which is higher layer signaling, and in this case, the beam configuration for the PUCCH transmission may be in accordance with a beam configuration used by PUSCH transmission scheduled through random access response (RAR) UL grant. When the UE has a dedicated PUCCH resource configuration, the beam configuration with respect to the PUCCH transmission may be provided through pucch-spatialRelationinfoID which is higher signaling indicated in [Table 21]. When the UE is configured with one pucch-spatialRelationInfoID, the beam configuration for the PUCCH transmission of the UE may be provided through one pucch-spatialRelationInfoID. When the UE is configured with a plurality of pucch-spatialRelationinfoIDs, the UE may be indicated to activate one pucch-spatialRelationInfoID from among the plurality of pucch-spatialRelationInfoIDs through an MAC CE. The UE may be configured with maximum 8 pucch-spatialRelationInfoIDs through higher signaling and may be indicated to activate only one pucch-spatialRelationInfoID from among the 8 pucch-spatialRelationinfoIDs. When the UE is indicated to activate a random pucch-spatialRelationInfoID through the MAC CE, the UE may apply activation of the pucch-spatialRelationInfoID

through the MAC CE from a slot first occurring after a slot of $3N_{slot}^{subframe,\mu}$ from a slot transmitting HARQ-ACK with respect to a PDSCH transmitting the MAC CE containing activation information with respect to pucch-spatialRelationIn-foID. $\mu$ denotes numerology applied to the PUCCH transmission, and $N_{slot}^{subframe,\mu}$ denotes the number of slots per subframe in the given numerology. A higher layer configuration with respect to pucch-spatialRelationInfo may be the same as [Table 29] below.

[Table 29]

```
PUCCH-SpatialRelationInfo ::=        SEQUENCE {
     pucch-SpatialRelationInfoId      PUCCH-SpatialRelationInfoId,
     servingCellId                        ServCellIndex          OPTIONAL,    -- Need S
     referenceSignal                      CHOICE {
          ssb-Index                            SSB-Index,
          csi-RS-Index                         NZP-CSI-RS-ResourceId,
          srs                                  SEQUENCE {
                                                   resource        SRS-ResourceId,
                                                   uplinkBWP       BWP-Id
                                               }
     },
     pucch-PathlossReferenceRS-Id     PUCCH-PathlossReferenceRS-Id,
     p0-PUCCH-Id                      P0-PUCCH-Id,
     closedLoopIndex                  ENUMERATED { i0, i1 }
}

PUCCH-SpatialRelationInfoId ::=      INTEGER (1..maxNrofSpatialRelationInfos)
```

According to the [Table 29], one reference signal configuration may exist in a predetermined pucch-spatialRe-lationInfo configuration, and corresponding referenceSignal may be ssb-Index indicating a predetermined SS/PBCH, csi-RS-Index indicating a predetermined CSI-RS, or srs indicating a predetermined SRS. When referenceSignal is configured as ssb-Index, the UE may configure a beam used for receiving an SS/PBCH from among SSs/PBCHs in the same serving cell, the SS/PBCH corresponding to ssb_Index, as a beam for the PUCCH transmission, or when servingCellID is provided, the UE may configure a beam used for receiving an SS/PBCH from among SSs/PBCHs in a cell indicated by servingCellID, the SS/PBCH corresponding to ssb_Index, as a beam for the PUCCH transmission. When referenceSignal is configured as csi-RS-Index, the UE may configure a beam used for receiving a CSI-RS from among CSI-RSs in the same serving cell, the CSI-RS corresponding to csi-RS-Index, as a beam for the PUCCH transmission, or when servingCellID is provided, the UE may configure a beam used for receiving a CSI-RS from among CSI-RSs in a cell indicated by servingCellID, the CSI-RS corresponding to csi-RS-Index, as a beam for the PUCCH transmission. When referenceSignal is configured as srs, the UE may configure a transmission beam used for transmitting an SRS corresponding to a resource index provided through a higher signaling source in the same serving cell and/or an activated uplink BWP, as a beam for the PUCCH transmission, or when servingCellID and/or uplinkBWP are/is provided, the UE may configure a transmission beam used for transmitting an SRS corresponding to a resource index provided through a higher signaling resource in a cell indicated by servingCellID and/or uplinkBWP and/or an uplink BWP, as a beam for the PUCCH transmission. There may be one pucch-PathlossReferenceRS-ID configuration in a predetermined pucch-spatialRelationInfo configuration. PUCCH-PathlossReferenceRS of [Table 30] may be mapped with pucch-PathlossReferenceRS-ID of [Table 29], and maximum 4 configurations are possible through pathlossReferenceRSs in higher signaling PUCCH-Powercontrol in [Table 30]. When PUCCH-PathlossReferenceRS is connected with the SS/PBCH through higher signaling reference-Signal, ssb-Index may be configured, and when PUCCH-PathlossReferenceRS is connected with the CSI-RS, csi-RS-index may be configured.

[Table 30]

```
PUCCH-PowerControl ::=                SEQUENCE {
    deltaF-PUCCH-f0                       INTEGER (-16..15)   OPTIONAL, -- Need R
    deltaF-PUCCH-f1                       INTEGER (-16..15)   OPTIONAL, -- Need R
    deltaF-PUCCH-f2                       INTEGER (-16..15)   OPTIONAL, -- Need R
    deltaF-PUCCH-f3                       INTEGER (-16..15)   OPTIONAL, -- Need R
    deltaF-PUCCH-f4                       INTEGER (-16..15)   OPTIONAL, -- Need R
    p0-Set                                   SEQUENCE (SIZE (1..maxNrofPUCCH-P0-PerSet)) OF P0-
                                         PUCCH  OPTIONAL, -- Need M
    pathlossReferenceRSs                 SEQUENCE (SIZE (1..maxNrofPUCCH-PathlossReferenceRSs))
                                         OF PUCCH-PathlossReferenceRS   OPTIONAL, -- Need M
    twoPUCCH-PC-AdjustmentStates         ENUMERATED {twoStates}     OPTIONAL, -- Need S
    ...
}


P0-PUCCH ::=                          SEQUENCE {
    p0-PUCCH-Id                          P0-PUCCH-Id,
    p0-PUCCH-Value                       INTEGER (-16..15)
}


P0-PUCCH-Id ::=                       INTEGER (1..8)


PUCCH-PathlossReferenceRS ::=             SEQUENCE {
    pucch-PathlossReferenceRS-Id          PUCCH-PathlossReferenceRS-Id,
    referenceSignal                       CHOICE {
        ssb-Index                             SSB-Index,
        csi-RS-Index                          NZP-CSI-RS-ResourceId
    }
}
```

Next, a timing advance is described in detail. A timing advance may be used for an operation of adjusting a transmission timing of a signal transmitted by the UE to the base station. A timing advance offset (TA), $N_{TA,offset}$, with respect to a serving cell of the UE may be configured as n-TimingAdvanceOffset with respect to the serving cell by higher layer signaling servingCellConfigCommon or ServingCellConfigCommonSIB. When n-TimingAdvanceOffset with respect to the serving cell is not configured, the UE may configure a default value of the TA $N_{TA,offset}$ with respect to an FR1 band without an LTE-NR coexistence case, as 25600. When a plurality of uplink carriers are configured to the same timing advance group (TAG), the UE may predict that n-TimingAdvanceOffset is the same for all the carriers and may configure $N_{TA,offset}$ with respect to FDD serving cell as 39936. When the UE is configured with two uplink carriers with respect to one serving cell, the same TA value $N_{TA,offset}$ may be applied to the two uplink carriers. When the UE receives a timing advance command with respect to the TAG, the UE may adjust an uplink transmission timing with respect to a PUSCH/an SRS/a PUCCH with respect to all serving cells in the TAG based on the TA value $N_{TA,offset}$. Here, the UE may expect that $N_{TA,offset}$ is the same for all serving cells in the TAG and is based on a reception timing advance command which makes the same the uplink timing of the PUSCH/the SRS/the PUCCH with respect to all serving cells in the TAG.

[Table 31]

| Subcarrier spacing of E-UTRA PCell (KHz) | UL subcarrier spacing with respect to data of NR PSCell (KHz) | Maximum UL transmission timing difference ($\mu$s) |
|---|---|---|
| 15 | 15 | 5.21 |
| 15 | 30 | 5.21 |
| 15 | 60 | 5.21 |

[Table 31] indicates a maximum value of an uplink transmission time difference between E-UTRA PCell and NR PSCell according to a subcarrier spacing of E-UTRA PCell and an uplink subcarrier spacing of NR PSCell. For example, according to [Table 31], when the subcarrier spacings of both of E-UTRA PCell and NR PSCell are 15 kHz, the maximum value of the uplink transmission time difference between E-UTRA PCell and NR PSCell is 5.21 μs, but this is not applied to a predetermined UE. *Here, the predetermined UE is a UE supporting one uplink transmission time point, and the corresponding UE may be configured with ul-TimingAlignmentEUTRA-NR.* When the PUSCH/SRS/PUCCH entirely or partially overlaps a random access preamble transmitted in another cell group, the UE may not expect PUSCH/SRS/PUCCH transmission in a cell group.

With respect to a subcarrier spacing of $2^\mu*15$ kHz, a timing advance command for one TAG is a multiple number of $16*64*T_c/2^\mu$ with respect to a current uplink timing of the corresponding TAG and may indicate an uplink timing change. In the case of a random access response, $T_A$, which is a timing advance command with respect to the TAG, may have an integer value of 0 to 3846, and a value of $N_{TA}$ may be indicated by using $T_A$. Here, a time alignment value with respect to the TAG having the subcarrier spacing of $2^\mu*15$ kHz may be defined as $N_{TA} = T_A*16*64*T_c/2^\mu$. $N_{TA}$ may be used to calculate $T_{TA} = (N_{TA} + N_{TA,offset})T_{-c}$ denoting an uplink frame transmission time point before a start of a downlink frame and may use a subcarrier spacing of first uplink transmission performed by the UE after receiving the random access response. Here,

$$T_C = \frac{1}{\Delta f_{max} \times N_f}$$

$\Delta f_{max} = 480 \cdot 10^3$ Hz, and when Nf=4096,           . In other cases than the random access response, $T_A$, which is the timing advance command with respect to the TAG, may have an integer value of 0 to 63, and when a new $N_{TA}$ value is calculated, $N_{TA,new} = N_{TA,old} + (T_A - 31)*16*64/2^\mu$, and $N_{TA,new}$ and $N_{TA,old}$ respectively denote a new $N_{TA}$ and a previous $N_{TA}$.

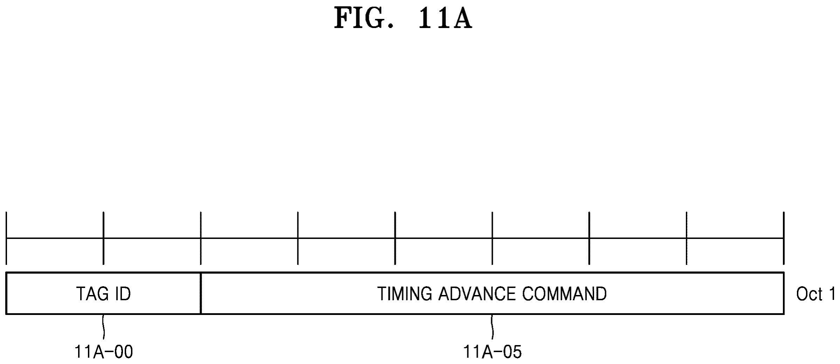

FIG. 11A is a diagram illustrating an MAC-CE payload for configuring and indicating a timing advance command, according to an embodiment of the disclosure.

Referring to FIG. 11A, a TAG ID domain 11A-00 denotes a TAG ID of a corresponding TAG and a TAG including an SpCell has an TAG ID of 0. A length of a domain for the TAG ID is 2 bits. A timing advance command domain 11A-05 may indicate an index value TA (0, 1, 2, ... 63) required for calculating a timing advance value. A length of a domain for the timing advance command is 6 bits.

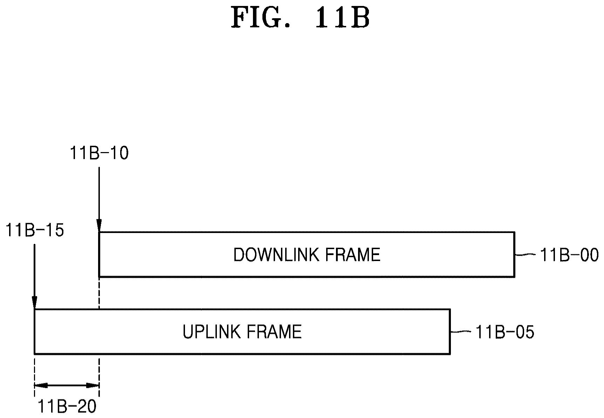

FIG. 11B is a diagram illustrating a time difference 11B-20 between a downlink frame 11B-10 and an uplink frame 11B-15 when a timing advance is applied, according to an embodiment of the disclosure.

Referring to FIG. 11B, a time point for the UE to transmit an uplink frame by applying a timing advance may be a time point that is earlier by $T_{TA} = (N_{TA} + N_{TA,offset})T_{-c}$ than a downlink frame.

When the UE has two uplink carriers in one serving cell and the same TAG is configured so that the UE has a plurality of uplink BWPs, the timing advance value may be calculated by using a maximum subcarrier spacing of different subcarrier spacings of activated uplink BWPs. Here, a timing advance value with respect to an uplink BWP having a smaller subcarrier distancing than the maximum subcarrier distancing may be rounded off to match the timing advance granularity, and requirements for the accuracy of timing advance adjustment shown in [Table 32] below have to be satisfied. When $N_{TA}$ is a positive number, it denotes that an uplink transmission timing is advanced, and when $N_{TA}$ is a negative number, it denotes that the uplink transmission timing is delayed.

[Table 32]

| UL subcarrier spacing (kHz) | 15 | 30 | 60 | 120 |
|---|---|---|---|---|
| UE timing advance adjustment accuracy | ± 256 $T_c$ | ± 256 $T_c$ | ± 128 $T_c$ | ± 32 $T_c$ |

When the UE receives the timing advance command in an uplink slot n, and transmits other uplinks than a PUSCH scheduled by a random access response grant, uplink transmission timing adjustment with respect to the corresponding command may be applied from the start of an uplink slot n+k+1. Here,

$$k = \left\lceil N_{slot}^{subframe,\mu} \cdot (N_{T,1} + N_{T,2} + N_{TA,max} + 0.5)/T_{sf} \right\rceil$$

, $N_{T,1}$ is a time (msec) of a $N_1$ symbol, which is a PDSCH processing time with respect to UE capability 1 when a supplementary PUDSCH DM-RS is configured, $N_{T,2}$ is a time (msec) of a $N_2$ symbol, which is a PUSCH preparation time with respect to UE capability 1, $N_{TA,max}$ is a maximum timing advance value (msec) which may be configured as a timing advance command domain of 12 bits,

$$N_{slot}^{subframe,\mu}$$

is the number of slots per subframe, and $T_{sf}$ is a subframe duration time of 1 msec. $N_1$ and $N_2$ may be determined according to a minimum subcarrier spacing of subcarrier spacings of all configured uplink BWPs with respect to all uplink carriers in the TAG and subcarrier spacings of all configured downlink BWPs with respect to all downlink

$$N_{slot}^{subframe,\mu}$$

carriers. With respect to $\mu = 0$, the UE assumes $N_{1,0} = 14$. A slot n and $N_{slot}^{subframe,\mu}$ may be determined according to a minimum subcarrier spacing of subcarrier spacings of all configured uplink BWPs with respect to all uplink carriers in the TAG. $N_{TA,max}$ may be determined according to a minimum subcarrier spacing of subcarriers of all configured BWPs with respect to all uplink carriers in the TAG and subcarriers of all initial uplink BWPs through initialUplinkBWP which may be configured through higher layer signaling UplinkConfig or UplinkconfigCommon. The uplink slot n is the last slot of the uplink slots overlapping a PDSCH slot, when $T_{TA} = 0$ is assumed. Here, the timing advance command may be configured through a PDSCH, and $T_{TA}$ may be defined as $T_{TA} = (N_{TA} + N_{TA,offset})T_c$.

When the UE changes an activated uplink BWP between the time point for receiving the timing advance command and the time point for adjusting the uplink transmission timing, the UE may determine a timing advance command value according to a subcarrier spacing of a newly activated uplink BWP. When the UE changes the activated BWP after adjusting the uplink transmission timing, the UE assumes that absolute values of the timing advance command before and after the activated uplink BWP is changed are the same. When a downlink reception time point is changed and the downlink reception time point is not compensated for or only partially compensated for via uplink timing adjustment performed without a timing advance command, the UE may change the $N_{TA}$ value according thereto. When two adjacent slots overlap each other due to the timing advance command, a next slot may be reduced by an overlapping time, compared to a previous slot.

With respect to a predetermined cell group, configuration information with respect to the TAG may be included in information for configuring MAC parameters of [Table 33] below.

[Table 33]

```
MAC-CellGroupConfig ::= SEQUENCE {

    drx-Config              SetupRelease ( DRX-Config )         OPTIONAL,


    schedulingRequestConfig         SchedulingRequestConfig     OPTIONAL,


    bsr-Config              BSR-Config                  OPTIONAL,


    tag-Config              TAG-Config                  OPTIONAL,


    phr-Cinfig              SetupRelease ( PHR-Config )  OPTIONAL,


    skipUplinkTxDynamic         BOOLEAN,


    ...,
    [[
    csi-Mask                BOOLEAN              OPTIONAL,


    dataInactivityTimer     SetupRelease ( DataInactivityTimer ) OPTIONAL,


    ]]
}
DataIncativityTimer ::= ENUMERATED {s1, s2, s3, s5, s7, s10, s15, s20, s40, s50,
s60, s80, s100, s120, s150, s180}
```

Here, information provided for configuring the TAG may be the same as [Table 34] below.

[Table 34]

```
TAG-Config ::= SEQUENCE {
    tag-ToReleaseList    SEQUENCE (SIZE (1..maxNrofTAGs)) OF TAG-Id


    tag-ToAddModList SEQUENCE (SIZE (1..maxNrofTAGs)) OF TAG OPTIONAL


}
TAG ::= SEQUENCE {
    tag-Id                    TAG-Id,


    timeAlignmentTimer           TimeAlignmentTimer,


    ...
}
TAG-Id ::=                         INTEGER (0..maxNrofTAGs-1)


TimeAlignmentTimer ::= ENUMERATED {ms500, ms750, ms1280, ms1920, ms2560,
ms5120, ms10240, infinity}
```

The maximum number of TAGs may be defined as *maxNrofTAGs* which is higher layer signaling and may have a maximum value of 4. Pieces of information for a serving cell may be configured through ServingCellConfig, and each cell may have one TAG ID. Here, for each cell group, one piece of TAG-Config information may be configured, and the TAG ID for cells in a cell group may be configured with reference to a TAG configuration information list of TAG-Config.

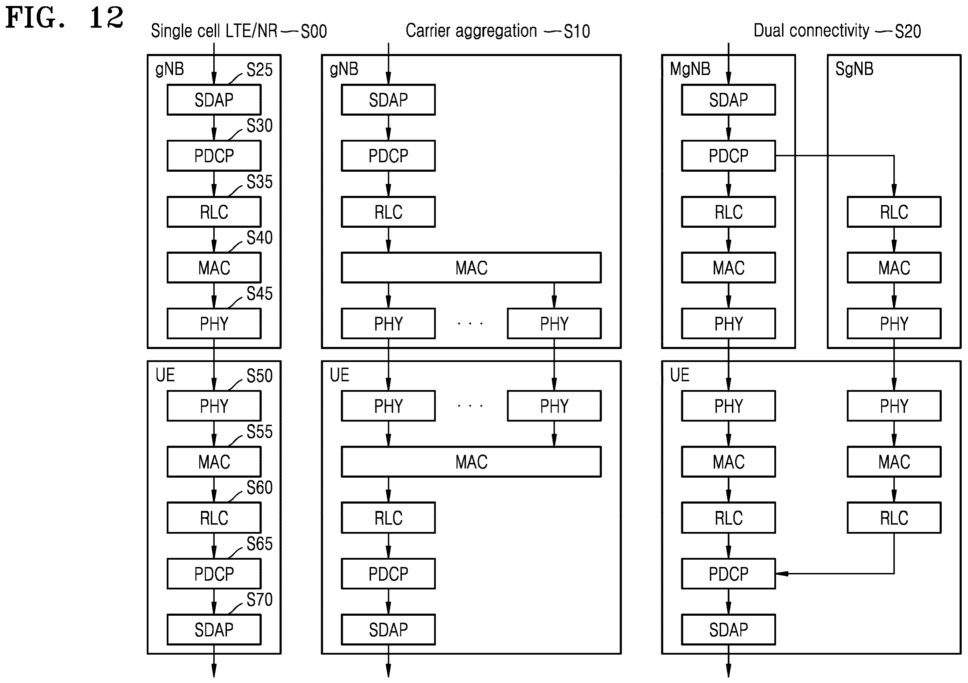

FIG. 12 is a diagram illustrating a radio protocol architecture of a base station and a UE during execution of a single cell, carrier aggregation, and dual connectivity, according to an embodiment of the disclosure.

Referring to FIG. 12, the radio protocol of a next-generation wireless communication system may be composed of an NR service data adaptation protocol (SDAP) S25 or S70, an NR packet data convergence protocol (PDCP) S30 or S65, NR radio link control (RLC) S35 or S60, NR MAC S40 or S55, in each of a UE and an NR base station.

The major functions of the NR SDAP layer S25 or S70 may include some of functions below.

- Transfer of user plane data
- Mapping between a QoS flow and a DRB for both DL and UL
- Function of marking QoS flow ID in UL and DL (marking QoS flow ID in both DL and UL packets)
- Reflective QoS flow to DRB mapping for the UL SDAP PDUs

In regard to the SDAP layers, the UE may receive an RRC message to configure whether to use the header of the SDAP layer or whether to use the function of the SDAP layer for each PDCP layer, for each bearer, or for each logical channel. Also, when the SDAP header is configured, a 1-bit non-access stratum (NAS) reflective QoS indicator and a 1-bit access stratum (AS) reflective QoS indicator of the SDAP header may indicate the UE to update or reconfigure mapping information between a QoS flow and a data bearer for UL and DL. The SDAP header may include QoS flow ID information indicating a QoS. QoS information may be used as data processing priority information, scheduling information, or the like for supporting a smooth service.

The major functions of the NR PDCP layer S30 or S65 may include some of functions below.

- Header compression and decompression function (Header compression and decompression: ROHC only)
- User data transfer function (Transfer of user data)
- In-sequence delivery function (In-sequence delivery of upper layer PDUs)
- Out-of-sequence delivery function (Out-of-sequence delivery of upper layer PDUs)
- Reordering function (PDCP PDU reordering for reception)
- Duplicate detection function (Duplicate detection of lower layer SDUs)
- Retransmission function (Retransmission of PDCP SDUs)

- Ciphering and deciphering function (Ciphering and deciphering)
- Timer-based SDU discard in uplink

The reordering function of the NR PDCP layers 1d-05 and 1d-40 may refer to a function of reordering PDCP PDUs received from the lower layer in sequence based on a PDCP sequence number (SN). The reordering function of the NR PDCP layers 1d-05 and 1d-40 may include a function of transmitting data to the upper layer in reordered order, a function of immediately transmitting data without considering the order, a function of reordering PDCP PDUs and recording lost PDCP PDUs, a function of reporting the status of the lost PDCP PDUs to a sender, and a function of requesting retransmission of the lost PDCP PDUs.

The major functions of the NR RLC layer S35 or S60 may include some of functions below.

- Data transfer function (Transfer of upper layer PDUs)
- In-sequence delivery function (In-sequence delivery of upper layer PDUs)
- Out-of-sequence delivery function (Out-of-sequence delivery of upper layer PDUs)
- ARQ function (Error correction through ARQ)
- Concatenation, segmentation, and reassembly function (Concatenation, segmentation and reassembly of RLC SDUs)
- Re-segmentation function (Re-segmentation of RLC data PDUs)
- Reordering function (Reordering of RLC data PDUs)
- Duplicate detection function (Duplicate detection)
- Error detection function (Protocol error detection)
- RLC SDU discard function (RLC SDU discard)
- RLC re-establishment function (RLC re-establishment)

The in-sequence delivery function of the NR RLC layers 1d-10 and 1d-35 may refer to a function of transmitting RLC SDUs received from the lower layer to the upper layer in sequence. When the RLC SDU, which is originally one, is segmented into a plurality of RLC SDUs, and the plurality of RLD SDUs are received, the in-sequence delivery function of the NR RLC layer may include a function of reassembling the received RLD SDUs and transmitting the reassembled RLD SDUs, a function of reordering received RLC PDUs based on an RLC SN or a PCDP SN, a function of reordering the RLC PDUs and recording the lost RLC PDUs, a function of reporting the status of the lost RLC PDUs to the sender, and a function of requesting retransmission of the lost RLC PDUs. When there is the lost RLC SDU, the in-sequence delivery function of the NR RLC layers 1d-10 and 1d-35 may include transmitting only RLC SDUs up to before the lost RLC SDU to the upper layer in sequence. Also, when there is the lost RLC SDU but a certain timer has expired, the in-sequence delivery function of the NR RLC layers 1d-10 and 1d-35 may include transmitting all RLC SDUs received before the start of the timer to the upper layer in sequence, or when there is the lost RLC SDU and a certain timer has expired, the in-sequence delivery function of the NR RLC layers 1d-10 and 1d-35 may include transmitting all RLC SDUs received so far to the upper layer in sequence. Also, the NR RLC layers 1d-10 and 1d-35 may process the RLC PDUs in the order of reception (in the order of arrival regardless of the order of serial number and sequence number) and transmit the processed RLC PDUs to the PDCP layer regardless of the order (out-of sequence delivery). When the received RLC PDUs are segments, segments stored in a buffer or to be received in the future may be received, reconfigured into one complete RLC PDU, and processed and transmitted to the PDCP layer. The NR RLC layer may not include the concatenation function, and the corresponding function may be performed by the NR MAC layer, or may be replaced with the multiplexing function of the NR MAC layer.

The out-of-sequence delivery function of the NR RLC layers 1d-10 and 1d-35 may refer to a function of transmitting RLC SDUs received from the lower layer directly to the upper layer regardless of the order, and when one RLC SDU is received after being segmented into a plurality of RLC SDUs, may include a function of reassembling and transmitting the segmented and received RLC SDUs and a function of storing the RLC SN or PDCP SN of the received RLC PDUs, reordering the RLC PDUs, and recording the lost RLC PDUs.

The NR MAC layer S40 or S55 may be connected to several NR RLC layers configured in a terminal, and the major functions of the NR MAC layer may include some of functions below.

- Mapping function (Mapping between logical channels and transport channels)
- Multiplexing and demultiplexing function (Multiplexing/demultiplexing of MAC SDUs)
- Scheduling information reporting function (Scheduling information reporting)
- HARQ function (Error correction through HARQ)
- Function of handling priority between logical channels (Priority handling between logical channels of one UE)
- Function of handling priority between UEs (Priority handling between UEs by means of dynamic scheduling)
- MBMS service identifying function (MBMS service identification)
- Transport format selecting function (Transport format selection)

- Padding function (Padding)

The NR PHY layer S45 or S50 may perform channel coding or modulation on upper layer data and convert the same into an OFDM symbol and transmit the OFDM symbol to a radio channel, or demodulate an OFDM symbol received via a radio channel and perform channel decoding on the demodulated OFDM symbol and transfer the channel-decoded OFDM symbol to an upper layer.

A specific structure of the radio protocol architecture may be variously modified according to a carrier (or cell) operating method. For example, when the base station transmits data to the UE based on a single carrier (or cell), the base station and the UE may use a protocol architecture in which each layer has a single structure as S00. However, when the base station transmits data to the UE based on carrier aggregation (CA) using multiple carriers in one transmission reception point (TRP) (or a single TRP), the base station and the UE may use a protocol architecture as S10, in which layers up to an RLC layer have a single structure, but a PHY layer is multiplexed through an MAC layer. As another example, when the base station transmits data to the UE based on dual connectivity using multiple carriers in multiple TRPs (or multi-TRPs), the base station and the UE may use a protocol architecture as S20, in which layers up to an RLC layer have a single structure, but a PHY layer is multiplexed through an MAC layer.

Referring to the above descriptions about the PUCCH, in a current Rel-15 NR system, transmission toward a single cell, transmission point, panel, beam, transmission direction, etc. is focused with respect to PUCCH repetitive transmission. For convenience of explanation of the disclosure hereinafter, a cell, a transmission point, a panel, a beam, a transmission direction, etc. which may be identified by a higher layer/L1 parameter, such as TCI state or spatial relation information, etc., or an indicator, such as a cell ID, a TRP ID, a panel ID, etc., are uniformly described as a TRP. Thus, when actually implemented, the TRP may be appropriately substituted by one of the terms above. In the current Rel-15 NR system, one PUCCH resource is used for PUCCH repetitive transmission, and only one PUCCH-spatialRelationInfo may be activated with respect to the one PUCCH resource, and thus, during the corresponding PUCCH repetitive transmission, the UE has to constantly maintain a direction of a transmission beam. Also, accordingly, because only one piece of configuration information about a timing advance exists in one cell, the same configuration information about the timing advance may have to be used between transmissions to the plurality of TRP (the multiple TRPs or the multi-TRPs) for the PUCCH repetitive transmission. Also, when the UE performs transmission of UCI to the plurality of TRPs by using configuration information with respect to multi-cells, one sequence may be configured in one piece of cell configuration information, the one sequence being used in group/sequence/cyclic shift hopping, a PUCCH payload, and a PUCCH DMRS. Also, a scheme for configuring a priority order taking into account the PUCCH repetitive transmission with respect to the plurality of TRPs and processing an overlapping case is not defined. According to the disclosure, a method of processing the cases described above may be provided, in order to minimize the loss of the UCI and the transmission latency during the PUCCH repetitive transmission taking into account the plurality of TRPs. Thus, throughout the disclosure, methods of determining information of various combinations which may be configured during PUCCH repetitive transmission which may be supported by NR Release 17 or a system thereafter will be described in detail according to embodiments described below.

Hereinafter, the embodiments of the disclosure are described in detail in conjunction with accompanying drawings. In describing the disclosure, when the detailed description of the relevant functions or configurations is determined to unnecessarily obscure the gist of the disclosure, the detailed description thereof may be omitted. The terms as used herein are those defined by taking into account functions in the disclosure, but the terms may vary depending on the intention of users or one of ordinary skill in the art, precedents, or the like. Therefore, the definitions should be made based on the contents throughout the specification.

Hereinafter, a base station is an entity that assigns resources of a terminal, and may be at least one of a next generation node B (gNB), an evolved node B (eNB), a node B (NB), a BS, a wireless access unit, a base station controller, or a node on a network. Examples of a terminal may include a UE, an MS, a cellular phone, a smartphone, a computer, and a multimedia system capable of performing a communication function. Also, hereinbelow, one or more embodiments of the disclosure will be described as an example of an NR, LTE, or LTE-A system, but the one or more embodiments of the disclosure may also be applied to other communication systems having a similar technical background or channel form. In addition, the embodiments of the disclosure may be applied to other communication systems by including some modifications that are made within a range not to significantly deviate from the scope of the disclosure based on the determination of one of ordinary skill in the art.

The content of the disclosure may be applied to a frequency division duplex (FDD) or time division duplex (TDD) system.

Hereinafter, in the disclosure, higher signaling is a method of transmitting a signal from the base station to the terminal by using a DL data channel of a physical layer or from the terminal to the base station by using a UL data channel of the physical layer, and may also be referred to as RRC signaling, PDCP signaling, or MAC CE.

Hereinafter, in the disclosure, when a UE determines whether or not to apply cooperative communication, the UE may use various methods. For example, (a) PDCCH(s) allocating a PDSCH to which cooperative communication is applied may have a predetermined format, the PDCCH(s) allocating the PDSCH to which cooperative communication is applied may include a predetermined indicator indicating whether or not to apply cooperative communication, the PDCCH(s) allocating the PDSCH to which cooperative communication is applied may be scrambled by predetermined RNTI, or application of cooperative communication in a predetermined section indicated by a higher layer may be assumed. Next, for convenience of explanation, the UE receiving a PDSCH to which cooperative communication is applied based on similar conditions will be referred to as a non-coherent joint transmission (NC-JT) case.

Hereinafter, in this disclosure, to determine a priority order between A and B may denote various operations, such as selecting one of the two having a higher priority order based on a predetermined priority rule and performing an operation corresponding thereto or omitting an operation of the other having a lower priority order, etc.

Hereinafter, these examples are described according to various embodiments of the disclosure. However, the embodiments of the disclosure are not independent from each other, and one or more embodiments of the disclosure may be implemented simultaneously or in a combined manner.

<A first embodiment: DCI reception for NC-JT>

Unlike previous communication systems, a 5G wireless communication system may support not only a service requiring a high transmission rate, but also a service having a very short transmission latency and a service requiring a high connection density. Cooperative communication (coordinated transmission) between cells, TRPs, or/and beams in a wireless communication network including a plurality of cells, TRPs, or beams is one of element technologies that satisfy various service requirements by efficiently performing inter-cell, TRP, or/and beam interference control or by increasing strength of a signal received by a terminal.

JT is a representative transmission technology for cooperative communication, and may increase strength of a signal received by a terminal by supporting one terminal through different cells, TRPs, or/and beams via a joint transmission technology. Because characteristics of channels between a terminal and cells, TRPs, or/and beams may differ greatly, different precodings, modulation coding schemes (MCSs), and resource assignments need to be applied to links between the terminal and the cells, TRPs, or/and beams. In particular, in NC-JT supporting non-coherent precoding between cells, TRPs, or/and beams, individual DL transmission information configuration for the cells, TRPs, or/and beams is important. The individual DL transmission information configuration for the cells, TRPs, or/and beams may be a major factor for increasing a payload required for DL DCI transmission, and this may deteriorate the reception performance of a PDCCH transmitting the DCI. Therefore, it is required to carefully design a tradeoff between the amount of DCI and the PDCCH reception performance for supporting the JT.

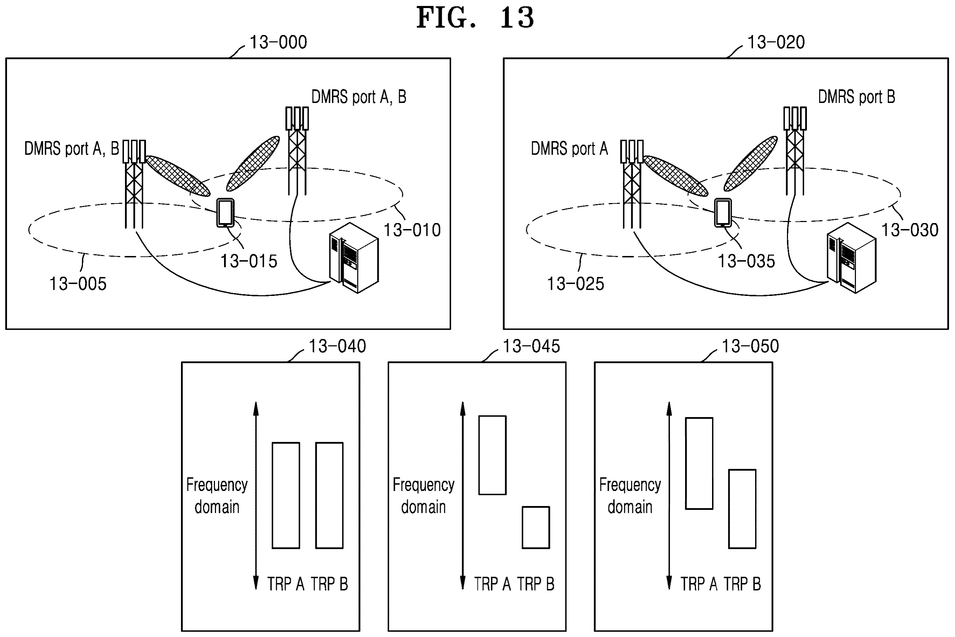

FIG. 13 is a diagram illustrating an example of an antenna port configuration and resource allocation for cooperative communication according to one or more embodiments in a wireless communication system according to an embodiment of the disclosure.

Referring to FIG. 13, examples of a JT technique and wireless resource allocation for each TRP according to a situation are illustrated. In FIG. 13, a drawing 13-000 illustrates coherent-JT (C-JT) supporting coherent precoding between cells, TRPs, or/and beams. In the C-JT, TRP A 13-005 and TRP B 13-010 may transmit a single piece of data (PDSCH) to a UE 13-015, and a plurality of TRPs may perform joint precoding. This may denote that TRP A 13-005 and TRP B 13-010 may transmit the same DMRS ports (for example, DMRS ports A and B from both of the TRPs) for PDSCH transmission. In this case, the UE 13-015 may receive a single piece of DCI information for receiving one PDSCH demodulated based on the DMRS transmitted through DMRS ports A and B.

In FIG. 13, a drawing 13-020 illustrates NC-JT supporting non-coherent precoding between cells, TRPs, or/and beams. In the case of NC-JT, the cells, TRPs, or/and beams may transmit the PDSCH to the UE 13-035, and individual precoding may be applied to each PDSCH. The cells, TRPs, or/and beams may transmit different PDSCHs, and thus, a processing rate may be improved compared to single cell, TRP, or/and beam transmission, or the cells, TRPs, or/and beams may repetitively transmit the same PDSCH, and thus, the reliability may be improved compared to the single cell, TRP, or/and beam transmission.

Various wireless resource allocation may be taken into account, such as a case when all of frequency and time resources used in the plurality of TRPs for PDSCH transmission are the same (13-040), a case when the frequency and time resources used in the plurality of TRPs do not overlap each other at all (13-045), and a case when the frequency and time resources used in the plurality of TRPs partially overlap each other (13-050). When the plurality of TRPs repetitively transmit the same PDSCH for improvement of the reliability in each of the cases of wireless resource allocation described above, a receiving UE may not perform combining in a physical layer with respect to the corresponding PDSCH, when the UE is not informed of the repetitive transmission of the corresponding PDSCH, and thus, there may be a limit in improving the reliability. Therefore, the disclosure provides a method of indicating and configuring repetitive transmission for the improvement of the reliability of NC-JT transmission.

For supporting the NC-JT, DCIs of various forms, structures, and relationships may be taken into account to simultaneously allocate a plurality of PDSCHs to one UE.

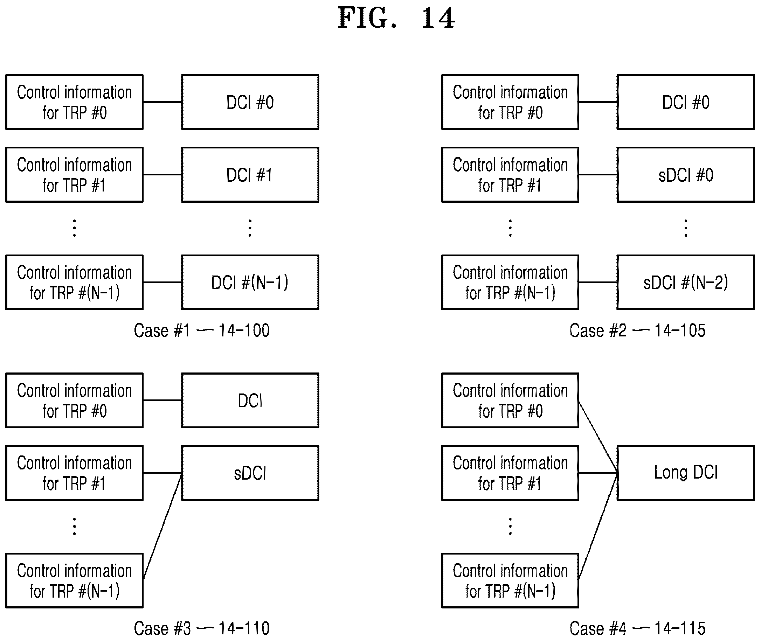

FIG. 14 is a diagram illustrating an example of a configuration of DCI for cooperative communication in a wireless communication system according to an embodiment of the disclosure.

FIG. 14 illustrates four examples of a DCI design for supporting the NC-JT.

According to an embodiment, Case #1 14-100 is an example in which, in a situation where different N-1 PDSCHs are transmitted from N-1 supplementary TRPs TRP#1 through TRP#(N-1) in addition to a serving TRP TRP#0 used for single PDSCH transmission, control information with respect to the PDSCHs transmitted from the N-1 supplementary TRPs TRP#1 through TRP#(N-1) is transmitted in the same DCI format as control information with respect to a PDSCH transmitted from the serving TRP TRP#0. That is, the UE may obtain the control information with respect to the PDSCHs transmitted from the different TRPs TRP#0 through TRP#(N-1), through DCIs DCI#0 through DCI#(N-1) having the same DCI formats and the same payloads.

Accordingly, in Case #1, a freedom of controlling (allocating) each PDSCH may be completely guaranteed. However, when the DCIs are transmitted from different TRPs, a difference in coverage between the DCIs may occur, and thus, the reception performance may deteriorate.

According to an embodiment, Case #2 14-105 is an example in which, in a situation where different N-1 PDSCHs are transmitted from N-1 supplementary TRPs TRP#1 through TRP#(N-1) in addition to the serving TRP TRP#0 used for single PDSCH transmission, control information with respect to the PDSCHs transmitted from the N-1 supplementary TRPs is transmitted in a different DCI format or with a different DCI payload from control information with respect to a PDSCH transmitted from the serving TRP TRP#0. For example, DCI#0, which is the control information with respect to the PDSCH transmitted from the serving TRP TRP#0 includes all information elements of DCI format 1_0 and DCI format 1_1, but shortened DCIa (hereinafter, sDCIa) sDCI#0 through sDCI#(N-2) which are control information with respect to the PDSCHs transmitted from the cooperative TRPs TRP#1 through TRP#(N-1) may include only some of the information elements of the DCI format 1_0 and DCI format 1_1. Accordingly, the sDCIs associated with transmission of the control information with respect to the PDSCHs transmitted from the cooperative TRPs may have less payloads compared to normal DCI (nDCI) associated with transmission of the control information with respect to the PDSCH transmitted from the serving TRP or may include additional reserved bits, the number of which corresponds to the number of bits lacking compared to the nDCI.

Accordingly, Case#2 may have a limited freedom of controlling (allocating) each PDSCH according to contents of the information elements included in the sDCI. However, the reception performance of the sDCI may be improved compared to the nDCI, and thus, the probability of a difference in coverage between the DCIs may be reduced.

According to an embodiment, Case #3 14-110 is an example in which, in a situation where different N-1 PDSCHs are transmitted from N-1 supplementary TRPs TRP#1 through TRP#(N-1) in addition to the serving TRP TRP#0 used for single PDSCH transmission, control information with respect to the PDSCHs transmitted from the N-1 supplementary TRPs is transmitted in a different DCI format or with a different DCI payload from control information with respect to a PDSCH transmitted from the serving TRP TRP#0. For example, DCI#0, which is the control information with respect to the PDSCH transmitted from the serving TRP TRP#0, includes all information elements of DCI format 1_0 and DCI format 1_1, and the control information with respect to the PDSCHs transmitted from the cooperative TRPs TRP#1 through TRP#(N-1) may be transmitted by gathering only some of the information elements of DCI format 1_0 and DCI format 1_1 into one secondary DCI (sDCI). For example, the sDCI may include at least one piece of information from among pieces of HARQ-related information, such as frequency domain resource allocation, time domain resource allocation, MCS, etc. of the cooperative TRPs. In addition, information not included in the sDCI, such as a BWP indicator or a carrier indicator, may be in accordance with DCI (DCI#0, normal DCI, or nDCI) of the serving TRP.

Accordingly, Case #3 may have a limited freedom of controlling (allocating) each PDSCH according to the contents of the information elements included in the sDCI. However, the sDCI reception performance may be adjusted, and compared to Case #1 or Case #2, DCI blind decoding of the UE may have reduced complexity.

According to an embodiment, Case #4 13-115 is an example in which, in a situation where different N-1 PDSCHs are transmitted from N-1 supplementary TRPs TRP#1 through TRP#(N-1) in addition to the serving TRP TRP#0 used for single PDSCH transmission, control information with respect to the PDSCHs transmitted from the N-1 supplementary TRPs is transmitted through the same DCI (long DCI (lDCI)) as control information with respect to a PDSCH transmitted from the serving TRP TRP#0. That is, the UE may obtain the control information with respect to the PDSCHs transmitted from the different TRPs TRP#0 through TRP#(N-1) through the single DCI.

Accordingly, in the case of Case #4, the complexity of DCI blind decoding of the UE may not be increased. However, the number of cooperative TRPs may be limited, etc. according to a limited long DCI payload, to decrease a freedom of controlling (allocating) the PDSCH.

In the following descriptions and embodiments, the sDCI may refer to various auxiliary DCIs, such as shortened DCI, secondary DCI, or normal DCI (DCI format 1_0 and 1_1 described above) including the PDSCH control information transmitted from the cooperative TRPs, and unless particularly limited otherwise, the descriptions may be similarly applied to various auxiliary DCIs.

In the following descriptions and embodiments, Case #1, Case #2, and Case #3 in which one or more DCIs (PDCCHs) are used for supporting NC-JT as described above may be identified as multiple-PDCCHs-based NC-JT, and Case #4 in which single DCI (a single PDCCH) is used for supporting NC-JT as described above may be identified as single- PDCCH-based NC-JT.

In the embodiments of the disclosure, the term "cooperative TRP" may be replaced by various terms, such as "cooperative panel", "cooperative beam," etc., when actually applied.

In the embodiments of the disclosure, a "case in which NC-JT is applied" may be variously interpreted according to a situation, for example, as a "case in which a UE simultaneously receives one or more PDSCHs from one BWP," a "case in which a UE receives a PDSCH simultaneously based on two or more transmission configuration indicator (TCI)-indications from one BWP," a "case in which a PDSCH received by a UE is associated with one or more DMRS port groups," etc. However, for convenience of explanation, one expression is used to indicate the case.

In the disclosure, a radio protocol architecture for NC-JT may be various used according to a TRP development scenario. For example, when there is no backhaul delay or there is a little backhaul delay between cooperative TRPs, it is possible to use an architecture based on MAC layer multiplexing (a CA-like method) similarly to S10 of FIG. 12. On the contrary, when a backhaul delay between cooperative TRPs is too great to be ignored (for example, when 2 ms or more time is needed for exchanging information, such as CSI, scheduling, HARQ-ACK, between the cooperative TRPs), it is possible to obtain the strong characteristics for the delay by using an individual architecture for each TRP from an RLC layer (a DC-like method), similarly to S20 of FIG. 12.

<A 1-1st embodiment: a method of configuring a DL control channel for multi-PDCCH-based NC-JT>

In the multiple-PDCCHs-based NC-JT, when each TRP transmits DCI for scheduling a PDSCH, each TRP may have a CORESET or a search space. The CORESET or the search space for each TRP may be configured as at least one of the following cases.

- Configuration of a higher layer index for each CORESET: a TRP transmitting a PDCCH through a corresponding CORESET may be identified by a higher layer index value configured for each CORESET. That is, in a group of CORESETs having the same higher layer index value, it may be regarded that the same TRP transmits the PDCCH, or a PDCCH scheduling a PDSCH of the same TRP is transmitted.

- Configuration of a plurality of PDCCH-Configs: a plurality of PDCCH-Configs are configured in one BWP, and each PDCCH-Config may indicate that a PDCCH is configured for each TRP. Here, a list of CORESETs for each TRP and/or a list of search spaces for each TRP may be configured.
- Configuration of a CORESET beam/beam group: a TRP corresponding to a corresponding CORESET may be identified through a beam or a beam group configured for each CORESET. For example, when the same TCI state is configured for a plurality of CORESETs, it may be regarded that the corresponding CORESETs are transmitted through the same TRP, or a PDCCH scheduling a PDSCH of the same TRP is transmitted through the corresponding CORESETs.
- Configuration of a search space beam/beam group: a beam or a beam group is configured for each search space, and a TRP for each search space may be identified through the configured beam or beam group. For example, when the same beam/beam group or TCI state is configured for a plurality of search spaces, it may be regarded that the same TRP transmits a PDCCH in the corresponding search space or that a PDCCH scheduling a PDSCH of the same TRP is transmitted through the corresponding search space.

Accordingly, by identifying the CORESET or the search space for each TRP, PDSCH and HARQ-ACK information for each TRP may be identified, and based on this identification, it is possible to individually generate an HARQ-ACK codebook and individually use a PUCCH resource for each TRP.

<A second embodiment: a method of transmitting HARQ-ACK information with respect to NC-JT>

The following embodiment provides a detailed method of transmitting HARQ-ACK information with respect to NC-JT transmission.

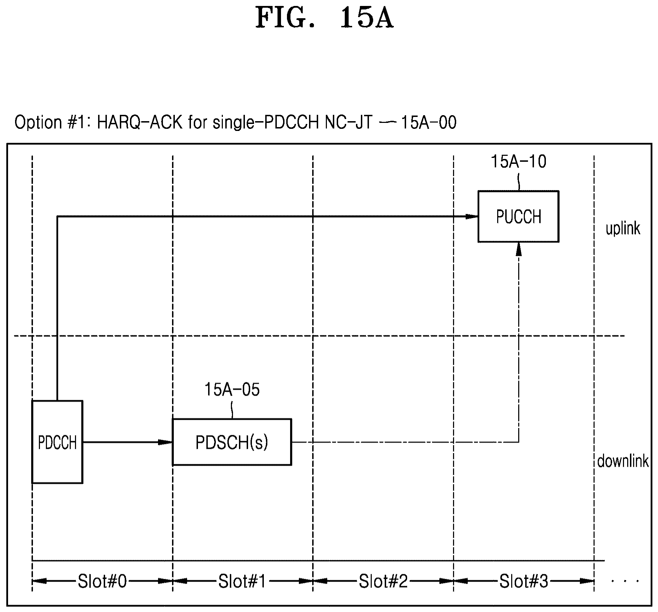

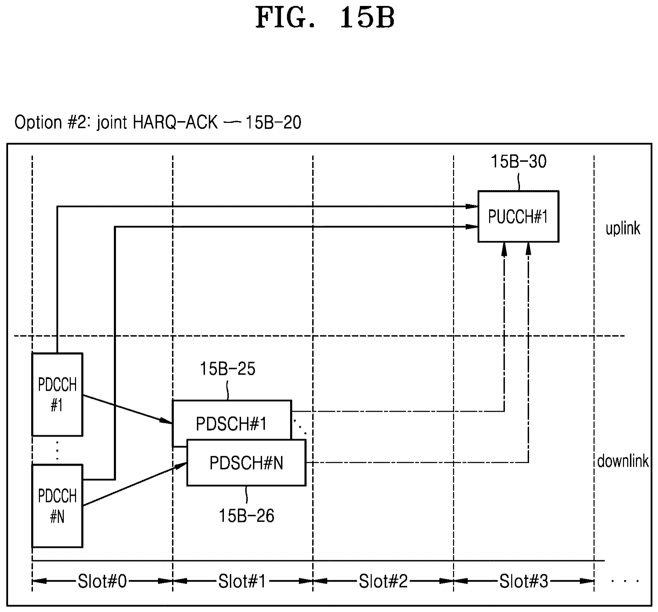

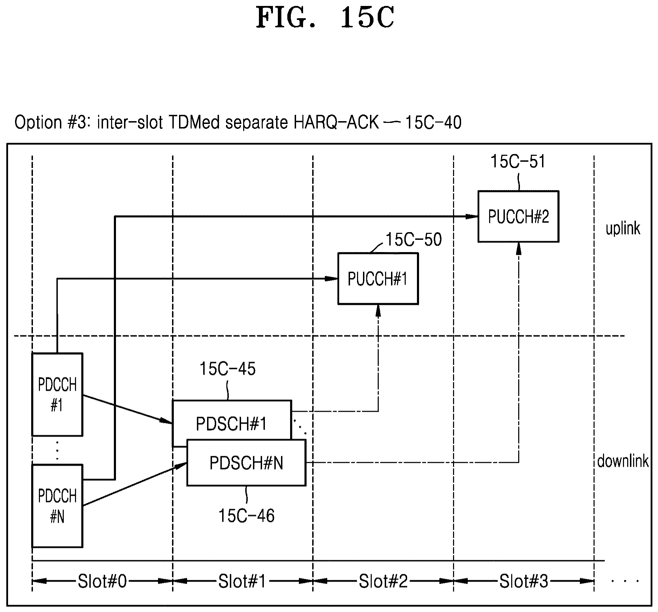

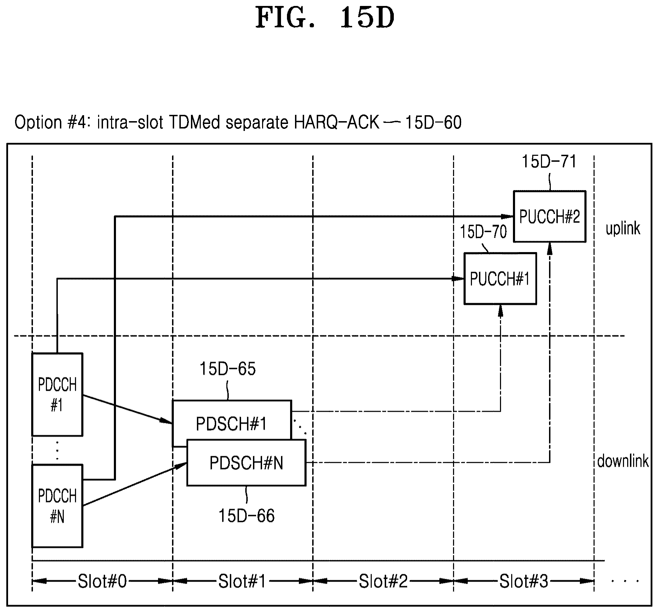

FIGS. 15A, 15B, 15C, and 15D illustrate methods of transmitting HARQ-ACK information according to various DCI configurations and PUCCH configurations for NC-JT, according to an embodiment of the disclosure. Referring to FIG. 15A, Option #1: HARQ-ACK for single-PDCCH NC-JT 15A-00 illustrates a situation in which, in the case of single-PDCCH-based NC-JT, HARQ-ACK information with respect to one or more PDSCHs 15A-05 scheduled by a TRP is transmitted through one PUCCH resource 15A-10. The PUCCH resource may be indicated by the PRI value and the $K_1$ value in the DCI as described above.

FIGS. 15B (Option #2) through 15D (Option #4) 15B-20, 15C-40, and 15D-60 illustrate cases of multi-PDCCH-based NC-JT. Here, each option may be identified according to the number of PUCCH resources for transmitting the HARQ-ACK information corresponding to the PDSCH of each TRP and a location of the PUCCH resource on a time domain.

Referring to FIG. 15B, Option #2: joint HARQ-ACK 15B-20 illustrates a situation in which HARQ-ACK information corresponding to a PDSCH 15B-25 or 15B-26 of each TRP is transmitted through one PUCCH resource. All the HARQ-ACK information for the TRPs may be generated based on a single HARQ-ACK codebook, and the HARQ-ACK information for each TRP may be generated based on an individual HARQ-ACK codebook.

When an individual HARQ-ACK codebook for each TRP is used, the TRP may be identified through at least one of a set of CORESETs having the same higher layer index, a set of CORESETs included in the same TCI state or the same beam or beam group, or a set of search spaces included in the same TCI state or the same beam or beam group, as defined according to the 1-1st embodiment.

Referring to FIG. 15C, Option #3: inter-slot time-division- multiplexed separate HARQ-ACK 15C-40 illustrates a situation in which HARQ-ACK information corresponding to a PDSCH 15C-45 or 15C-46 of each TRP is transmitted through a PUCCH resource 15C-50 or 15C-51 of a different slot 15C-52 or 15C-53. The slot transmitting the PUCCH resource for each TRP may be determined by the $K_1$ value described above. When the $K_1$ value indicated by the plurality of PDCCHs indicates the same slot, it may be regarded that all of the corresponding PDCCHs may be scheduled by the same TRP, and all of the HARQ-ACK information corresponding thereto may be transmitted.

Referring to FIG. 15D, Option #4: intra-slot time-division-multiplexed separate HARQ-ACK 15D-60 illustrates a situation in which HARQ-ACK information corresponding to a PDSCH 15D-65 or 15D-66 of each TRP is transmitted through a different PUCCH resource 15D-70 or 15D-71 in a different symbol in the same slot 15D-75. The slot transmitting the PUCCH resource for each TRP may be determined by the $K_1$ value described above, and when the $K_1$ value indicated by the plurality of PDCCHs indicates the same slot, the PUCCH resource may be selected and the transmission symbol may be determined by using at least one of the following methods.

• Configuration of a PUCCH resource group for each TRP

A PUCCH resource group for HARQ-ACK transmission for each TRP may be configured. As in the 1-1st embodiment, when the TRP for each CORESET/search space is identified, the PUCCH resource for HARQ-ACK transmission for each TRP may be selected within a PUCCH resource group with respect to the corresponding TRP. Time division multiplexing (TDM) may be expected between PUCCH resources selected from different PUCCH resource groups. That is, the selected PUCCH resources may not overlap each other in a symbol unit. An individual HARQ-ACK codebook for each TRP may be generated with respect to the PUCCH resource selected for each TRP and transmitted.

• Indication of a different PRI for each TRP

As the 1-1st embodiment, when the TRP for each CORESET/search space is identified, the PUCCH resource for each TRP may be selected according to the PRI. That is, a process of selecting a PUCCH resource in the Rel-15 described above may be individually performed for each TRP. Here, the PRI used for determining the PUCCH resource for each TRP has to be different from each other. For example, the UE may not expect that the PRI used for determining the PUCCH resource for each TRP is indicated by the same value. Also, TDM may be expected between the PUCCH resources corresponding to the PRI for each TRP. That is, the selected PUCCH resources may not overlap each other in a symbol unit. An individual HARQ-ACK codebook for each TRP may be generated with respect to the PUCCH resource selected for each TRP and transmitted.

• Definition of the $K_1$ value in a sub-slot unit

While the PUCCH resource selection process in the Rel-15 described above is followed, the $K_1$ value may be defined in the sub-slot unit. For example, after an HARQ-ACK codebook with respect to PDSCHs/PDCCHs indicated to report HARQ-ACK to the same sub-slot is generated, the HARQ-ACK codebook may be transmitted to the PUCCH resource indicated by the PRI. The process of generating the HARQ-ACK codebook and selecting the PUCCH resource may be performed regardless of the identification of the TRP for each CORESET/search space.

When a UE supports NC-JT reception, one of the above options may be configured through a higher layer or may be implicitly selected according to a situation. For example, for the UE supporting multi-PDCCH-based NC-JT, Option #2 and one of Option #3 and Option #4 may be selected through a higher layer. As another example, according to whether single-PDCCH-based NC-JT or multi-PDCCH-based NC-JT is supported/configured, for the former, Option #1, and for the latter, one of Option #2, Option #3, and Option #4 may be selected. As another example, in the multi-PDCCH-based NC-JT, the used option may be determined according to a selection of the PUCCH resource. When PUCCH resources of the same slot are selected for different TRPs, HARQ-ACK may be transmitted, according to Option #4, when the corresponding PUCCH resources are different from each other and do not overlap each other in a symbol unit, and HARQ-ACK may be transmitted according to Option #2, when the PUCCH resources overlap each other in the symbol unit or are the same as each other. When PUCCH resources of different slots are selected for different TRPs, HARQ-ACK may be transmitted according to Option #3. Configuration with respect to the options may be dependent on a UE capability. For example, a base station may receive the UE capability according to the described procedure, and based on the received UE capability, may configure the options. For example, Only a UE having a capability supporting intra-slot time-division-multiplexed separate HARQ-ACK may be configured with Option #4, and a UE without the corresponding capability may not expect to be configured with Option #4.

<A third embodiment: a method performed by a UE to repetitively transmit a PUCCH by taking into account a plurality of TRPs>

As an example of a method performed by the UE to support or determine PUCCH repetitive transmission with respect to a plurality of TRPs, the UE may report a capability with respect to the PUCCH repetitive transmission to the base station. Here, the capability of the UE may be an indicator with respect to the PUCCH repetitive transmission to the plurality of TRPs. Here, the repetitive transmission may be separately identified as repetitive transmission in a slot unit or repetitive transmission in a symbol unit exceeding a slot boundary. Additionally, the method performed by the UE to support or determine PUCCH repetitive transmission with respect to the plurality of TRPs may be differently determined according to condition or configuration information, by taking into account at least one of the following pieces of condition or configuration information.

- The number of PUCCH resources and PUCCH resource groups
- PUCCH-spatialRelationinfo information
- PUCCH-pathlossReferenceRS information
- Start PRB or frequency hopping information in a PUCCH resource

Here, a PUCCH resource group may be composed of a plurality of PUCCH resources, and all of the PUCCH resources in the PUCCH resource group may be configured with the same information with respect to some configuration information, and with respect to other configuration information, each PUCCH resource in the PUCCH resource group may have different configuration information. The information, with respect to which all of the PUCCH resources in the PUCCH resource group may have the same or different configuration information, may include spatialRelationInfo, pathlossReferenceRS, a start PRB point, frequency hopping information, etc. The UE may be configured with respect to transmission of a plurality of PUCCHs by using one PUCCH resource or PUCCH resource group, for PUCCH repetitive transmission to the plurality of TRPs. That is, the UE may acquire configuration information with respect to the PUCCH repetitive transmission to the plurality of TRPs by using configuration information with respect to one PUCCH resource or PUCCH resource group.

For example, the UE may be configured with a plurality of pieces of PUCCH-spatialRelationInfo with respect to one PUCCH resource or PUCCH resource group and may configure a plurality of PUCCH transmission beams. Here, when the PUCCH-spatialRelationInfo of a predetermined PUCCH resource is activated by using an MAC-CE, the UE may configure the plurality of PUCCH transmission beams by activating two or more pieces of PUCCH-spatialRelationInfo per PUCCH resource through the MAC-CE. Here, the plurality of pieces of PUCCH-spatialRelationInfo activated through the MAC-CE may be used as an uplink transmission beam by having a predetermined order at each transmission time point of the PUCCH repetitive transmission. Also, when the plurality of pieces of PUCCH-spatialRelationInfo activated through the MAC-CE do not have a predetermined order configured at each repetitive transmission time point, the plurality of pieces of PUCCH-spatialRelationInfo may be used as the uplink transmission beam from an earliest transmission time point to a latest transmission time point of the PUCCH repetitive transmission, according to an order of a lowest index to a highest index of the plurality of pieces of PUCCH-spatialRelationInfo. As another example of the PUCCH repetitive transmission time point, the UE may configure a plurality of PUCCH transmission beams by configuring two or more referenceSignals in the PUCCH-spatialRelationInfo with respect to one PUCCH resource. Here, when the PUCCH-spatialRelationInfo is activated by using the MAC-CE, one piece of PUCCH-spatialRelationInfo may be activated per PUCCH resource through the MAC-CE, to configure the PUCCH transmission beams corresponding to two reference signals. As another example, the UE may be configured with one of a plurality of configurations in which two reference signals form a pair, such as {SSB#1, SSB#2}, {SSB#1, CSI-RS#1}, {SSB#1, SRS#1}, etc., as a reference Signal value in the PUCCH-spatialRelationInfo with respect to one PUCCH resource. Here, the UE may divide the repeated times of transmission of the PUCCH transmission beam into half, the PUCCH transmission beam being applied to each repetitive transmission, and may apply a different reference signal with respect to the PUCCH transmission beam at even number[th] transmission times or odd number[th] transmission times. Here, the UE may activate the plurality of pieces of PUCCH-spatialRelationInfo per PUCCH resource by using the MAC-CE. As another example, the UE may be configured with one of a plurality of configurations in which reference signals corresponding to the number of times of repetitive transmission form a pair, such as {SSB#1, CSI-RS#1, SRS#1, ...}, etc., as a reference Signal value in the PUCCH-spatialRelationInfo with respect to one PUCCH resource. Here, the UE may activate the plurality of pieces of PUCCH-spatialRelationinfo per PUCCH resource by using the MAC-CE.

Also, the UE may acquire configuration information with respect to the PUCCH repetitive transmission by using configurations of a plurality of PUCCH resources or PUCCH resource groups for the PUCCH repetitive transmission to the plurality of TRPs. That is, the UE may acquire the configuration information of the PUCCH repetitive transmission for each TRP through the configuration information of each PUCCH resource or PUCCH resource group. Here, the configuration information in the PUCCH resource or PUCCH resource group may be the same as the configuration information in the current NR Release 15, or there may be a plurality of pieces of PUCCH-spatialRelationInfo for each PUCCH resource and PUCCH resource group. For example, when the UE is configured to use two PUCCH resources or PUCCH resource groups for PUCCH repetitive transmission, the UE may perform PUCCH transmission by using a configuration of one PUCCH resource or PUCCH resource group for an even number[th] index of the PUCCH repetitive transmission and may perform PUCCH transmission by using a configuration of the other PUCCH resource or PUCCH resource group for an odd number[th] index.

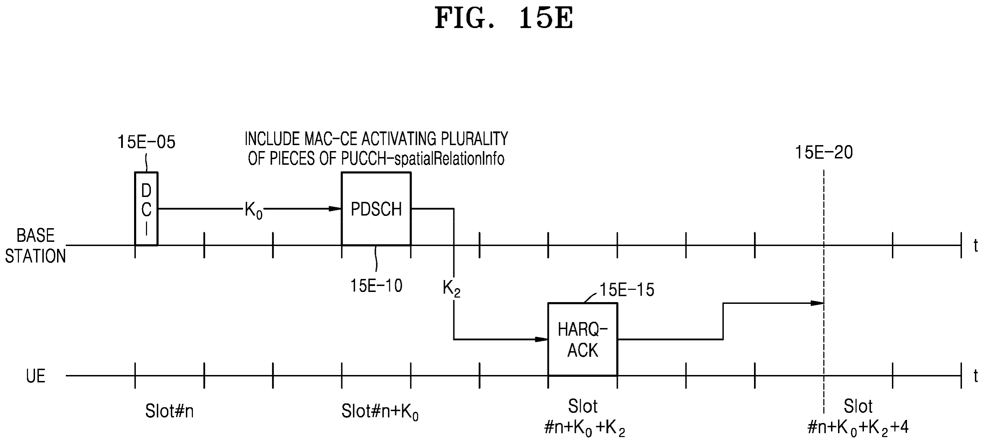

FIG. 15E is an example of a flowchart of a method of activating a plurality of pieces of PUCCH-spatial Relation Info through an MAC-CE, according to one or more embodiments of the disclosure.

Referring to FIG. 15E, the base station may schedule a PDSCH 15E-10 through DCI 15E-05 to the UE, and may transmit an MAC-CE indicating activation with respect to a plurality of pieces of PUCCH-spatialRelationInfo to the UE through the corresponding PDSCH 15E-10. The UE may apply the activation of the plurality of pieces of PUCCH-spatialRelationInfo from a first slot 15E-20 existing after three slots from a slot transmitting HARQ-ACK 15E-15 with respect to the PDSCH 15E-10. For example, when the UE indicates the activation with respect to the plurality of pieces of PUCCH-spatialRelationInfo in one PUCCH resource through the MAC-CE, the corresponding MAC-CE may include one PUCCH resource ID and a bitmap indicating the plurality of pieces of PUCCH-spatialRelationInfo, and/or an index of a combination indicating the plurality of pieces of PUCCH-spatialRelationInfo. As another example, when the UE indicates the activation with respect to a piece of PUCCH-spatialRelationinfo for a plurality of PUCCH resources through the MAC-CE, the corresponding MAC-CE may include a plurality of PUCCH resource IDs, a bitmap indicating the plurality of pieces of PUCCH-spatialRelationInfo, and/or an index of a combination indicating the plurality of pieces of PUCCH-spatialRelationInfo.

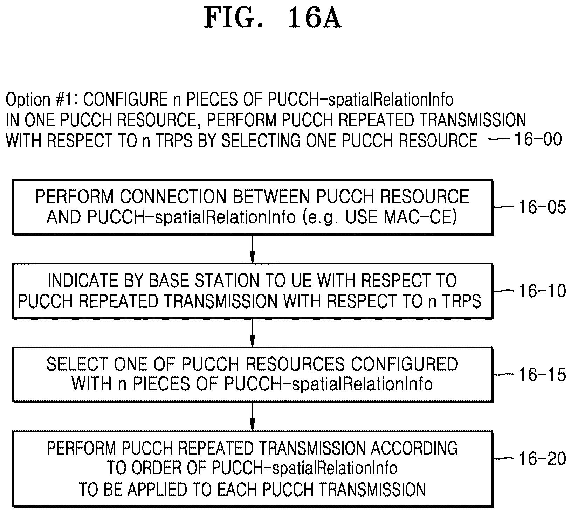

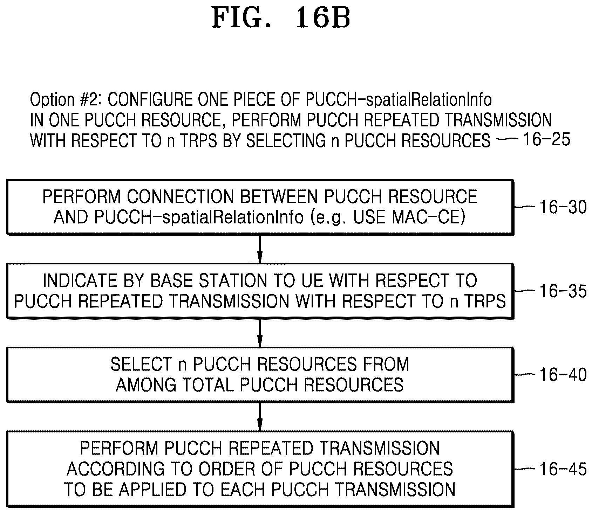

FIGS. 16A and 16B are diagrams illustrating examples with respect to a beam configuration scheme with respect to each PUCCH transmission and a scheme for performing repetitive transmission in a terminal, during PUCCH repetitive transmission with respect to a plurality of TRPs, according to one or more embodiments of the disclosure.

Referring to FIG. 16A, Option #1 16-00 illustrates a case in which n pieces of PUCCH-spatialRelationInfo are configured per PUCCH resource and one PUCCH resource is selected to perform PUCCH repetitive transmission with respect to n TRPs. Here, n may be a natural number greater than or equal to 2. In operation 16-05, connection between the PUCCH resource and PUCCH-spatialRelationInfo may be performed through an MAC-CE. Here, the number of pieces of connected PUCCH-spatialRelationInfo may vary for each PUCCH resource. In operation 16-10, the UE may be indicated, by the base station, with respect to PUCCH repetitive transmission with respect to n TRP. Accordingly, in operation 16-15, the UE may select one of PUCCH resources for which n pieces of PUCCH-spatialRelationInfo are configured. Also, in operation 16-20, the UE may perform the PUCCH repetitive transmission according to an order of the pieces of PUCCH-spatialRelationInfo to be applied to each PUCCH transmission.

Referring to FIG. 16B, Option #2 16-25 illustrates a case in which one piece of PUCCH-spatialRelationInfo is configured per PUCCH resource and n PUCCH resources are selected to perform PUCCH repetitive transmission with respect to n TRPs. In operation 16-30, connection between the PUCCH resource and PUCCH-spatialRelationInfo may be performed through an MAC-CE. Here, one piece of PUCCH-spatialRelationInfo may be connected to one PUCCH resource. In operation 16-35, the UE may be indicated, by the base station, with respect to PUCCH repetitive transmission with respect to n TRPs. Accordingly, in operation 16-40, the UE may select n PUCCH resources from among the total PUCCH resources. Also, in operation 16-45, the UE may perform the PUCCH repetitive transmission according to an order of the PUCCH resources to be applied to each PUCCH transmission.

<A fourth embodiment: a method, performed by a UE, of performing PUCCH repetitive transmission taking into account a plurality of TRPs by configuring and using a plurality of timing advances>

According to an embodiment of the disclosure, when PUCCH repetitive transmission with respect to a plurality of TRPs is performed, a method of configuring and applying a timing advances for each transmission in the PUCCH repetitive transmission is provided. The base station may configure a timing advance command with respect to a TAG through an MAC CE, in order to adjust an uplink timing of the UE. Here, the corresponding TAG may be indicated by a TAG ID. The TAG ID configured as ServingCellConfig may be largely divided into two methods and may be used to adjust the uplink timing with respect to each TRP. According to the first method, a timing advance command with respect to multiple TRPs is configured by using one TAG ID, and according to the second method, the timing advance command with respect to the multiple TRPs is configured by assigning a TAG ID for each TRP.

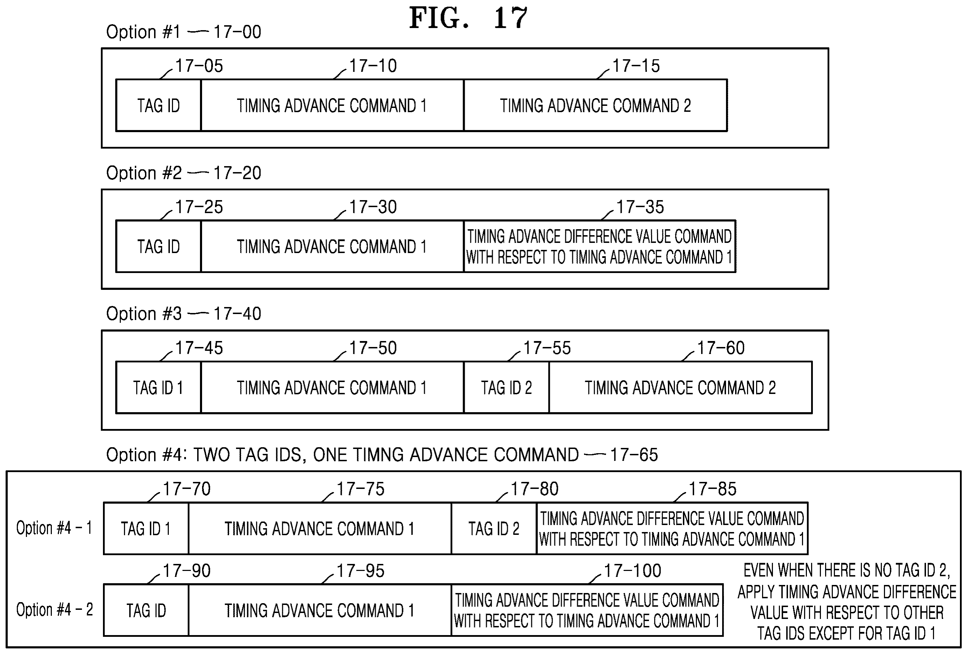

FIG. 17 is an example of a timing advance command domain for PUCCH repetitive transmission, according to an embodiment of the disclosure.

Referring to FIG. 17, methods of configuring timing advance information with respect to each TRP by using one TAG indicator may include methods of configuring a timing advance command domain configurable through the MAC CE of Option #1 17-00 and Option #2 17-20 of FIG. 17.

Option #1 17-00 of FIG. 17 is an example of the timing advance command domain for supporting two multi-TRPs and may be formed of one TAG indicator 17-05 and two timing advance commands 17-10 and 17-15. The two TRPs may perform uplink timing adjustment with reference to the same TAG ID. As an example in which Timing advance command 1 17-10 is assigned as a timing advance command with respect to a first TRP, and Timing advance command 2 17-15 is assigned as a timing advance command with respect to a second TRP, the assignment between each TRP and the timing advance command may be performed according to a rule predetermined between the base station and the UE. Alternatively, the timing advance command may be assigned with reference to CORESETPoolindex, a scrambling ID, a PUCCH resource, a resource set, spatial correlation information, a pathloss RS, a PUCCH format, a PUCCH resource group, etc. For example, Timing advance command 1 may be assigned to a TRP corresponding to CORESETPoolindex 0, and Timing advance command 2 may be assigned to a TRP corresponding to CORESETPoolindex 1. Here, each timing advance command may indicate T_A for adjusting an uplink timing with respect to each TRP, and T_A with respect to each TRP may be configured as a value to satisfy an accuracy requirement of the timing advance. When a subcarrier spacing with respect to each TRP is different from each other, the timing advance command may be configured to satisfy the accuracy requirement for the timing advance according to the subcarrier spacing of each TRP, and each timing advance command may be configured as Timing advance command 1 or Timing advance command 2.

Option #2 17-20 of FIG. 17 is an example of a timing advance command domain for supporting two multi-TRPs and is composed of one TAG indicator 17-25, one timing advance command 17-30, and a timing advance difference value command 17-35 with respect to one Timing advance command 1. Timing advance command 1 17-30 may be assigned as a timing advance command for a first TRP, and the timing advance difference value command 17-35 with respect to Timing advance command 1 may be configured based on a difference value between a timing advance command with respect to a second TRP and Timing advance command 1. Here, Timing advance command 1 17-30 may denote $T_{(A,1)}$ corresponding to $T_A$ of the first TRP, and the timing advance difference value with respect to Timing advance command 1 may be defined as $T_{(A,diff)} = T_{(A,2)} - T_{(A,1)}$ which is a difference between $T_{(A,2)}$ and $T_{(A,1)}$ corresponding to TA of the second TRP. When multiple TRPs are supported by using the corresponding timing advance command domain, overhead for the MAC CE may be reduced compared to when using a timing advance command domain composed of one TAG indicator and two timing advance commands. When a difference in $T_A$ value between two TRPs is not great, the timing advance command with respect to the second TRP may be transmitted with less overhead, when the timing advance difference value command with respect to Timing advance command 1 is used, compared to when Timing advance command 2 is transmitted. When the number of bits of the timing advance difference value command with respect to Timing advance command 1 for indicating $T_{(A,diff)}$ is 4, examples of $T_{(A,diff)}$ according to each index may be presented as in [Table 35] below.

[Table 35]

| Timing advance difference value command with respect to Timing advance command 1 | Timing advance difference value with respect to Timing advance command 1, $T_A$, *diff* |
|---|---|
| 0 | -7 |
| 1 | -6 |
| 2 | -5 |
| 3 | -4 |
| 4 | -3 |
| 5 | -2 |
| 6 | -1 |
| 7 | 0 |
| 8 | 1 |
| 9 | 2 |
| 10 | 3 |

(continued)

| Timing advance difference value command with respect to Timing advance command 1 | Timing advance difference value with respect to Timing advance command 1, $T_A$, *diff* |
|---|---|
| 11 | 4 |
| 12 | 5 |
| 13 | 6 |
| 14 | 7 |
| 15 | 8 |

As an example in which Timing advance command 1 is assigned as the timing advance command with respect to the first TRP, and the timing advance command difference value command with respect to Timing advance command 1 is assigned as the timing advance command with respect to the second TRP, the assignment between each TRP and the timing advance command may be performed according to a rule predetermined between the base station and the UE. Alternatively, the timing advance command may be assigned with reference to CORESETPoolindex, a scrambling ID, a PUCCH resource, a resource set, spatial correlation information, a pathloss RS, a PUCCH format, a PUCCH resource group, etc. For example, Timing advance command 1 may be assigned to a TRP corresponding to CORESETPoolindex 0, and the timing advance command difference value command with respect to Timing advance command 1 may be assigned to a TRP corresponding to CORESETPoolindex 1.

Methods of configuring timing advance information with respect to each TRP by using a plurality of TAG indicators may include methods of configuring a timing advance command domain configurable through the MAC CE of Option #3 17-40 and Option #4 17-65 of FIG. 17.

Option #3 17-40 of FIG. 17 is an example of the timing advance command domain for supporting two multi-TRPs and may be formed of two TAG indicators 17-45 and 17-55 and two timing advance commands 17-50 and 17-60. Timing advance information with respect to the first TRP may be configured as TAG ID 1 17-45 and Timing advance command 1 17-50, and timing advance information with respect to the second TRP may be configured as TAG ID 2 17-55 and Timing advance command 2 17-60. Alternatively, the timing advance command with respect to each TRP may be assigned according to CORESETPoolindex, a scrambling ID, a PUCCH resource, a resource set, spatial correlation information, a pathloss RS, a format, a PUCCH resource group, etc. For example, TAG ID 1 and Timing advance command 1 may be assigned to a TRP corresponding to CORESETPoolindex 0, and TAG ID 2 and Timing advance command 2 may be assigned to a TRP corresponding to CORESETPoolindex 1. The accuracy requirement for the timing advance has to be satisfied by using the TAG ID and the timing advance command with respect to each TRP.

Option #4 17-65 of FIG. 17 may include Option #4-1 and Option #4-2. Option #4-1 of FIG. 17 is an example of a timing advance command domain for supporting two multi-TRPs and is composed of two TAG indicators 17-70 and 17-80, one timing advance command 17-75, and a timing advance command difference value command 17-85 with respect to one Timing advance command 1. The TAG ID for each TRP and the timing advance command based on the TAG ID for each TRP or the timing advance command difference value command with respect to Timing advance command 1 may be assigned according to CORESETPoolindex, a scrambling ID, a PUCCH resource, a resource set, spatial correlation information, a pathloss RS, a format, a PUCCH resource group, etc. For example, TAG ID 1 and Timing advance command 1 may be assigned to a TRP corresponding to CORESETPoolindex 0, and TAG ID 2 and the timing advance command difference value command with respect to Timing advance command 1 may be assigned to a TRP corresponding to CORESETPoolindex 1. As described above, when the TRP is designated according to CORESETPoolindex, a timing advance difference value $T_{(A,diff)}$ with respect to Timing advance command 1 may be calculated as a difference value between the timing advance command with respect to the TRP corresponding to CORESETPoolindex 1 and Timing advance command 1. Here, the timing advance command of the TRP according to each CORESETPoolindex has to satisfy the accuracy requirement of the timing advance. When the number of bits of the timing advance difference value command with respect to Timing advance command 1 for indicating $T_{(A,diff)}$ is 4, examples of $T_{(A,diff)}$ according to each index may be presented as in [Table 35] above.

Option #4-2 of FIG. 17 is an example of a timing advance command domain for supporting two multi-TRPs and is composed of one TAG indicator 17-90, one timing advance command 17-95, and a timing advance command difference value command 17-100 with respect to one Timing advance command 1. When two pieces of TAG information for supporting two TRPs are included in a TAG information release list of higher layer signaling TAG-Config, timing advance information with respect to one TRP may be indicated by one TAG indicator, and timing advance information with respect to the other TRP may adjust uplink timing by using the other piece of TAG information of the two pieces of TAG information. The TAG ID and the timing advance command based on the TAG ID or the timing advance command difference value command with respect to Timing advance command 1 may be assigned according to CORESETPoolindex, a scrambling ID, a PUCCH resource, a resource set, spatial correlation information, a pathloss RS, a format, a PUCCH resource group, etc. For example, the TAG ID and Timing advance command 1 may be assigned to the TRP corresponding to CORESETPoolindex 0. Also, the timing advance command difference value command with respect to Timing advance command 1 may be assigned to the TRP corresponding to CORESETPoolindex 1, and another TAG ID rather than a TAG ID configured through an MAC CE may be assigned thereto. The timing advance difference value $T_{(A,diff)}$ with respect to Timing advance command 1 may be calculated as the same as another method of calculating $T_{(A,diff)}$ described above. When the number of bits of the timing advance difference value command with respect to Timing advance command 1 is 4, examples of $T_{(A,diff)}$ according to each index may be presented as in [Table 35] above.

As a plurality of TAGs or a plurality of timing advance commands are configured to support the multi-TRPs, a degree of timing adjustment with respect to PUCCH repetition signals transmitted to each TRP may be different from each other. Here, based on the degree of timing adjustment, the PUCCH repetition signal transmitted to each TRP may overlap each other. Hereinafter, a method for solving this problem is described.

When PUCCH enforcement through multi-TRP-based repetitive transmission is performed, a PUCCH repetition signal with respect to a next TRP may be transmitted before transmission of a PUCCH first started to be transmitted is ended, according to the degree of uplink timing adjustment which is different for each TRP.

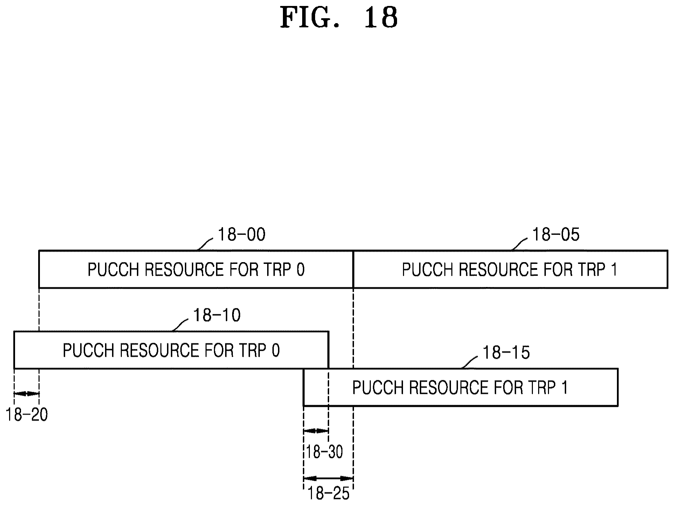

FIG. 18 illustrates a case in which PUCCH repetition signals overlap each other according to timing adjustment of another uplink, according to an embodiment of the disclosure.

Referring to FIG. 18, in order that overlapping of the PUCCH repetitive transmission does not occur, the base station may prevent overlapping of the PUCCH repetition signals transmitted through multiple TRPs, by allocating a guard period, when there is overlapping PUCCH transmission 18-30, or whenever PUCCH repetitive transmission is performed. Here, the guard period for preventing the overlapping may be allocated in a slot unit or an OFDM symbol unit.

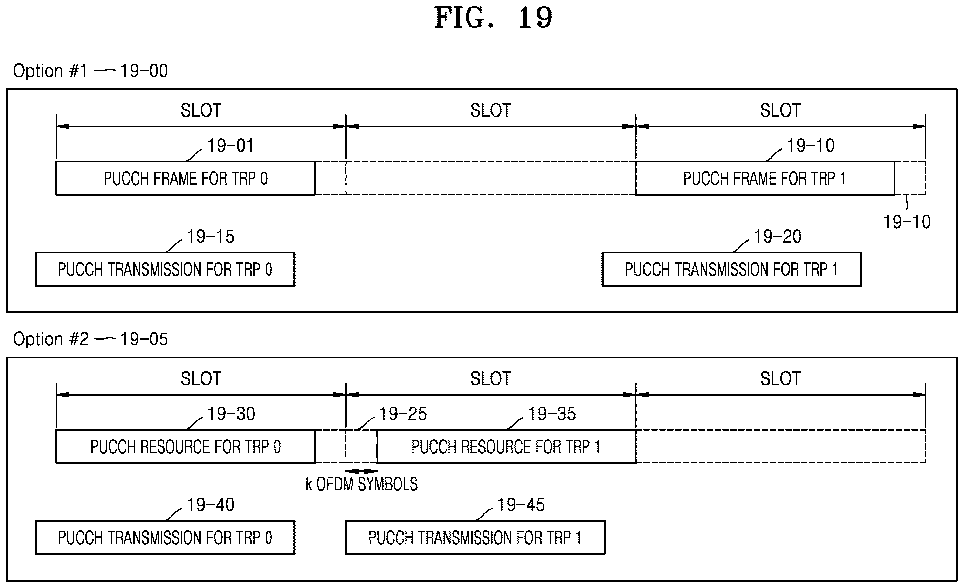

FIG. 19 illustrates an example of PUCCH repetitive transmission when a guard period is allocated in a slot unit or an OFDM symbol unit, according to an embodiment of the disclosure.

Referring to FIG. 19, Option #1 19-00 and Option #2 19-05 present examples of PUCCH repetitive transmission when the guard period is allocated in the slot unit and the OFDM symbol unit, respectively. When the guard period is allocated in the slot unit, overlapping of the PUCCH transmission may be prevented, but a resource loss due thereto may be increased. However, when the guard period is allocated in the OFDM symbol unit, the resource loss may be reduced. However, according to an OFDM symbol length of a PUCCH allocated according to a UCI payload value, all transmitted PUCCH signals may not be transmitted in the corresponding slot, due to the guard period of the OFDM symbol unit.

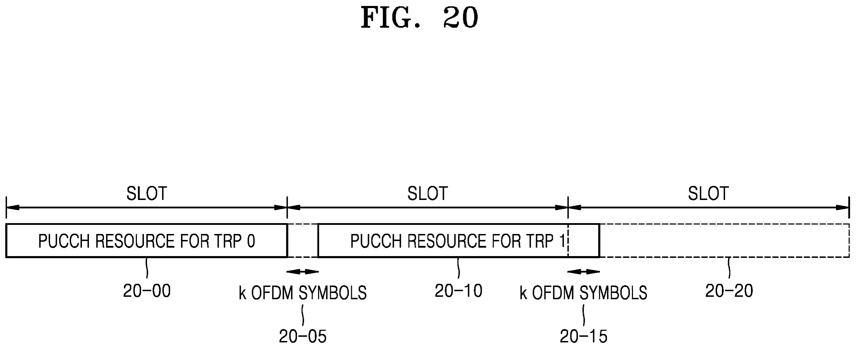

FIG. 20 illustrates an example in which, when a PUCCH OFDM symbol length is 14, PUCCH transmission is not completed in a slot, due to a guard period of an OFDM symbol unit.

Referring to FIG. 20, in order to solve this problem, the guard period may be configured such that PUCCH transmission does not exceed a slot according to the OFDM symbol length allocated for the PUCCH transmission, or the OFDM symbol length may be reduced by reducing the amount of transmitted PUCCH resources according to the guard period.

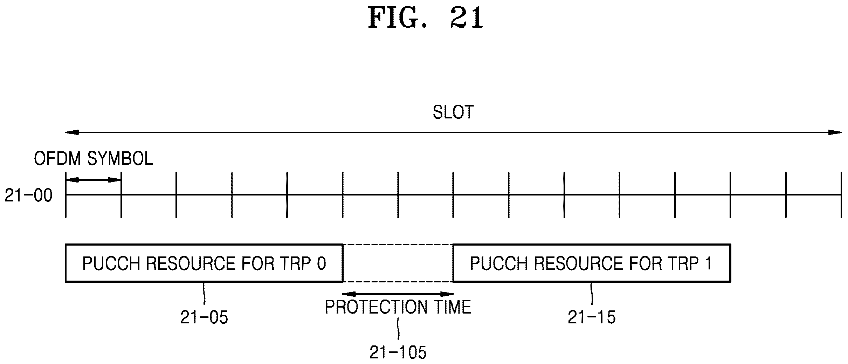

FIG. 21 is a diagram illustrating an example of allocating a guard period and a PUCCH repetition signal in a slot, according to an embodiment of the disclosure.

Referring to FIG. 21, PUCCH repetitive transmission using multi-TRPs may be performed in a plurality of slots, but the repetitive transmission may be performed in the slot according to conditions, such as an PUCCH OFDM symbol length, etc. Here, $N_{PUCCH}^{repeat}$, the number of times of repetitive transmission in a slot in which transmission is possible, may be determined according to $T_{guard}$, a guard period, and $N_{symb}^{PUCCH}$, a PUCCH OFDM symbol length, and a sum of guard periods according to the number of times of repetitive transmission in the slot and PUCCH OFDM symbol lengths of the total number of times of repetitive transmission may be configured not to be greater than $N_{symb}^{slot}$, the number of OFDM symbols in the slot. For example, when $N_{symb}^{slot}$ is 14, and the guard period required for repetitive transmission is 2 OFDM symbols, and the PUCCH OFDM symbol length is 5, repetitive transmission may be performed twice in the slot. Here, an example of a case in which the guard period and the PUCCH repetition signal are allocated in the slot may be the same as FIG. 21.

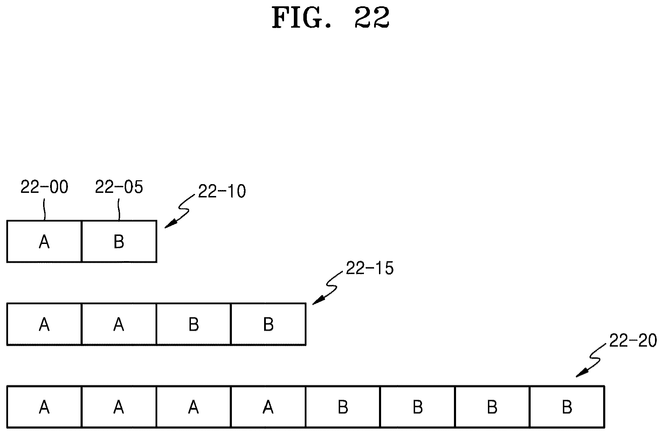

FIG. 22 is a diagram illustrating an example with respect to an order of PUCCH repetitive transmission according to the number of times of PUCCH repetitions, according to an embodiment of the disclosure.

Referring to FIG. 22, a transmission order for PUCCH repetitive transmission with respect to multi-TRPs may be defined, and a PUCCH transmission resource with respect to each TRP may be allocated in correspondence to a configured transmission order, so that PUCCH overlapping does not occur according to uplink timing adjustment. The transmission order for the PUCCH repetitive transmission may be defined based on the number of times of PUCCH repetitive transmission. An example about an order of the PUCCH repetitive transmission when the number of times of repetitive transmission is 2, 4, and 8 may be presented as FIG. 22.

In FIG. 22, each of indexes A and B may indicate a PUCCH repetition signal transmitted through a TRP, and in the case of the same index, transmission of the PUCCH repetition signal may be performed through the same TRP. Here, a PUCCH of a TRP transmitted through each index A or B may be determined according to the amount of timing adjustment of the corresponding TRP. The PUCCH overlapping may be solved by arranging a PUCCH signal of a TRP performing relatively greater timing adjustment compared to the amount of timing adjustment with respect to other TRPs in an index to perform transmission first. With respect to the transmission order configured as described above, the base station and the UE may have a common list, and an indicator used by the base station to indicate to the UE to use the corresponding order may be added to an MAC CE or higher layer signaling.

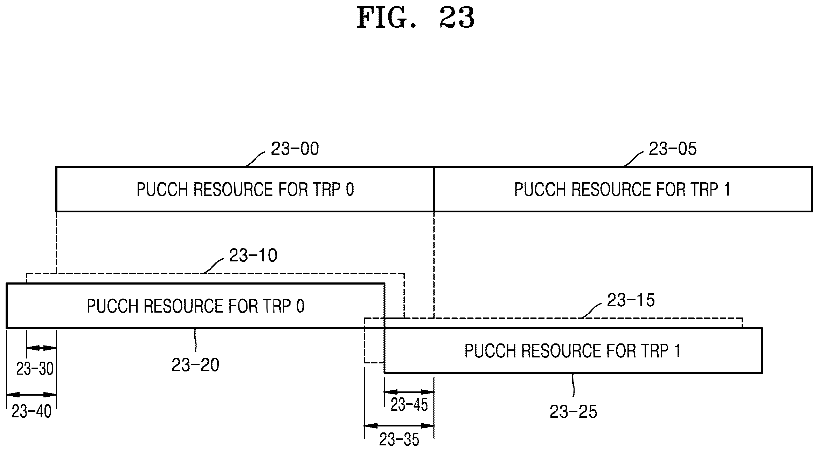

FIG. 23 illustrates an example of a method of preventing PUCCH overlapping by adjusting a timing advance command of a PUCCH with respect to two TRPs, according to an embodiment of the disclosure.

Referring to FIG. 23, the base station may identify that PUCCH repetition signals may overlap each other due to uplink timing adjustment. To solve this, the base station may configure a timing advance command value with respect to each TRP to the UE by changing the timing advance command value with respect to each TRP. When a $T_A$ value configured by the timing advance commands with respect to two TRPs is defined as $T_{(A,1)}$ and $T_{(A,2)}$, a timing advance command indicating to perform uplink timing adjustment of a short time period may be $T_{(A,1)}$, and a timing advance command indicating to perform uplink timing adjustment of a long time period may be $T_{(A,2)}$. In this case, the base station may increase $T_{(A,1)}$ and may decrease $T_{(A,2)}$ to solve the overlapping of the PUCCH repetition signals. Here, both of the adjusted timing advance command values $T_{(A,1)}$ and $T_{(A,2)}$ may have to satisfy an accuracy requirement for the timing advance. FIG. 23 illustrates an example of a method of preventing PUCCH overlapping by adjusting a timing advance command of a PUCCH with respect to two TRPs.

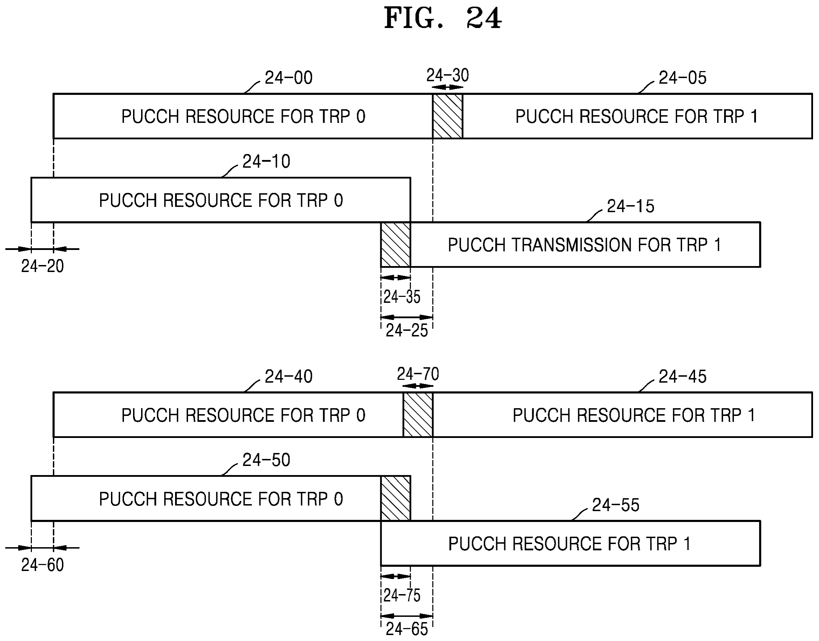

FIG. 24 illustrates an example of each of a method of reducing a slot of a PUCCH repetition signal transmitted later and a method of reducing a slot of a PUCCH repetition signal transmitted first, when the PUCCH repetition signals with respect to two TRPs overlap each other due to uplink timing adjustment, according to an embodiment of the disclosure.

Referring to FIG. 24, when it is predicted that PUCCH repetition signals using multi-TRPs overlap each other, a PUCCH repetition signal transmitted through one TRP may not be transmitted. PUCCH repetitive transmission may be configured to be performed through one TRP by restricting the PUCCH repetitive transmission using the multi-TRPs. Here, the base station may indicate a TRP to perform PUCCH repetitive transmission, based on uplink channel information with respect to each TRP. Thus, the UE may perform PUCCH repetitive transmission through a selected single TRP, and the base station may expect to receive a PUCCH repetition signal through the corresponding TRP. The number of times of PUCCH repetitive transmission with respect to non-selected TRPs may be neglected or may be added to the number of times of PUCCH repetitive transmission to transmit the PUCCH repetition signal.

When overlapping of the PUCCH repetitive transmission occurs due to timing advance commands with respect to multi-TRPs, there is a method of transmitting the PUCCH by reducing a slot of a PUCCH transmitted later by an amount overlapping a PUCCH transmitted first or by reducing a slot of the PUCCH transmitted first by an amount overlapping the PUCCH transmitted later. FIG. 24 illustrates an example of each of a method of reducing a slot of a PUCCH repetition signal transmitted later and a method of reducing a slot of a PUCCH repetition signal transmitted first, when the PUCCH repetition signals with respect to two TRPs overlap each other due to uplink timing adjustment.

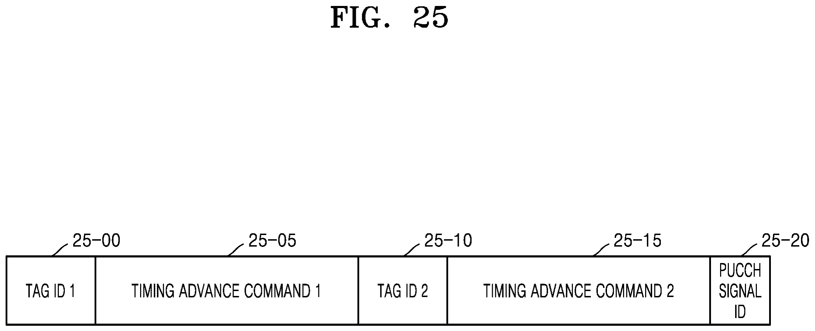

FIG. 25 is a diagram illustrating an example of a timing advance command domain of a PUCCH repetition signal to which a bit is added, the bit indicating a PUCCH repetition signal, a slot size for which is adjusted, according to an embodiment of the disclosure.

Referring to FIG. 25, the PUCCH repetition signal transmitted later may determine a PUCCH resource according to a reduced size of a slot and may generate a PUCCH transmission signal based on the number of UCI bits and the PUCCH resource. The base station may adjust the size of the slot of the PUCCH repetition signal transmitted first or later by indicating the PUCCH repetition signal adjusting the size of the slot. To support this method, an indicator 25-20 indicating the PUCCH repetition signal for adjusting the size of the slot may be added to a timing advance command domain transmitted through an MAC CE. For example, as illustrated in FIG. 25, 1 bit may be added to a timing advance command domain composed of two TAG indicators 25-00 and 25-10 and two timing advance commands 25-05 and 25-15.

When the added bit is 0, the size of the slot of the PUCCH repetition signal for a TRP associated with TAG indicator 1 may be adjusted, and when the added bit is 1, the size of the slot of the PUCCH repetition signal for a TRP associated with TAG indicator 2 may be adjusted. Alternatively, the PUCCH repetition signal to adjust the size of the slot may be selected with reference to CORESETPoolindex, a scrambling ID, a format, a PUCCH resource group, etc., and the size of the slot of the PUCCH repetition signal for a TRP associated with a lowest or a highest index of the reference information may be adjusted.

<A fifth embodiment: a method of configuring a hopping ID or a scrambling ID during PUCCH repetitive transmission with respect to a plurality of TRPs>

According to an embodiment of the disclosure, the UE may be configured with a hopping ID or a scrambling ID during PUCCH repetitive transmission with respect to a plurality of TRPs. In more detail, according to various operation methods of multiple TRPs (or a multi-TRP), the base station may configure, for the UE, the hopping ID or the scrambling ID to be used for the PUCCH repetitive transmission.

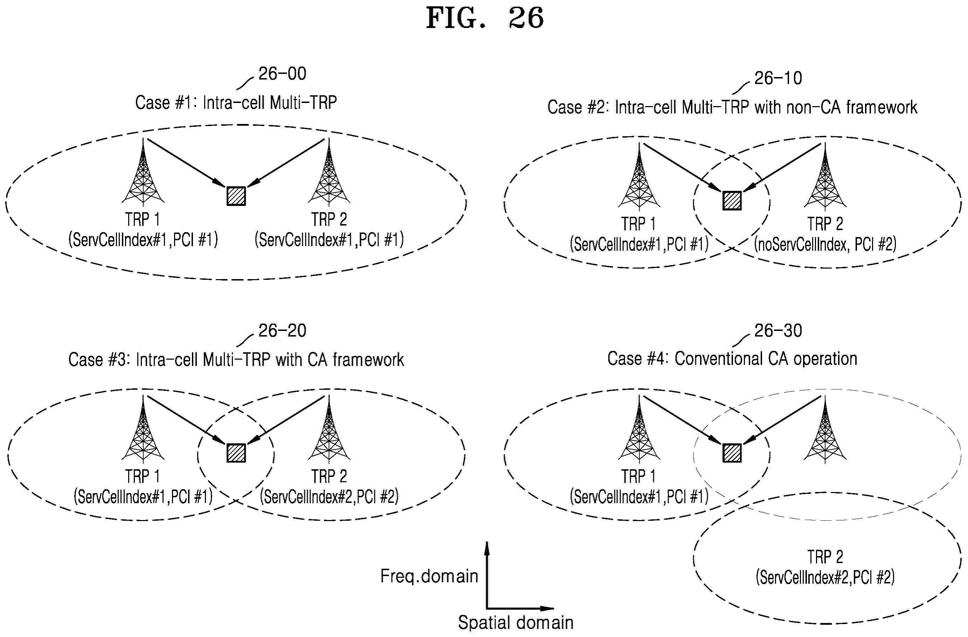

FIG. 26 is a diagram illustrating various operation examples of multiple TRPs (or a multi-TRP), according to an embodiment of the disclosure.

Case #4 26-30 of FIG. 26 illustrates an example of a configuration of a serving cell and a physical cell identity (PCI) according to a previous CA operation, which is a reference for indicating a difference between the operation methods of the multi-TRP. Referring to Case #4 26-30, the base station may configure a different serving cell (ServCellConfig-Common) for each cell, in a common CA situation where frequency resources occupied by different cells are different from each other (that is, a frequency band value FrequencyInfoDL indicated by DonwlinkConfigCommon in the configuration of each serving cell is different from each other). Accordingly, the base station may configure a different index ServCellIndex for each cell and may map different PCI values with each other. Here, for each parameter in ServCellConfigCommon, [Table 36] below may be referred to.

[Table 36]

```
ServingCellConfigCommon ::=
    physCellId
    downlinkConfigCommon
    uplinkConfigCommon
    supplementaryUplinkConfig
    n-TimingAdvanceOffset
    ssb-PositionsInBurst
        shortBitmap
        mediumBitmap
        longBitmap
    }
    ssb-periodicityServingCell
    dmrs-TypeA-Position
    lte-CRS-ToMatchAround
    rateMatchPatternToAddModList
    rateMatchPatternToReleaseList
    ssbSubcarrierSpacing
    tdd-UL-DL-ConfigurationCommon
    ss-PBCH-BlockPower
    ...
}
```

Case #1 26-00 of FIG. 26 illustrates an intra-cell multi-TRP operation, in which one or more TRPs operate in one serving cell configuration. Referring to Case #1 26-00, the base station configures channels and signals transmitted in different TRPs by including the channels and the signals in one serving cell configuration, and thus, various TRPs may operate based on one ServCellIndex (ServCellindex #1), and because there is one ServCellIndex, only one PCI may be used. In this case, when various SSBs are transmitted in TRP1 and TRP2, the SSBs may have the same PCI value, and a problem may not occur when a ServCellindex value indicated by a cell parameter in QCL-Info is mapped with the PCI, and an SSB transmitted in one of TRP 1 and TRP 2 is designated as a reference antenna port.

Case #3 26-20 of FIG. 26 illustrates an inter-cell multi-TRP operation, in which one or more TRPs have different PCIs from each other. Referring to Case #3 26-20, the base station configures channels and signals transmitted in different TRPs by including the channels and the signals in different serving cell configurations (that is, each TRP has an independent serving cell configuration, and frequency band values FrequencyInfoDL indicated by DownlinkConfigCom-mon in the serving cell configurations indicate at least one or more overlapping bands), and various TRPs may operate based on a plurality of ServCellindexes (ServCellindex #1 and ServCellindex #2), and thus, it is possible that a separate PCI may be used for each TRP (one PCI may be allocated per ServCellindex). In this case, when various SSBs are transmitted in TRP 1 and TRP2, the SSBs may have different PCI values (PCI #1 or PCI #2), and a problem may occur when the PCI value appropriate for each TRP is mapped by appropriately selecting a ServCellindex value indicated by a cell parameter in QCL-Info, and an SSB transmitted in one of TRP1 and TRP2 is designated as a reference antenna port. However, according to this configuration, one serving cell configuration which may be used for CA of the UE is used for the multi-TRP, and thus, a degree of freedom of the CA configuration may be limited, or a signaling burden may be increased. The scheme of corresponding Case #3 26-20 may be referred to as a multi-TRP operation using a CA configuration, that is

an inter-cell multi-TRP with a CA framework.

Case #2 26-10 of FIG. 26 illustrates another example of an inter-cell multi-TRP operation, in which one or more TRPs have different PCIs from each other. Referring to Case #2 26-10, the base station may configure channels and signals transmitted in different TRPs by including the channels and the signals in one serving cell configuration (by taking into account the signaling burden according to the application of Case #3 26-20). Here, the UE may operate based on ServCellIndex (ServCellindex #1), and thus, it is impossible for the UE to recognize a PCI PCI #2 allocated to a second TRP. In this case, when various SSBs are transmitted in TRP1 and TRP2, the SSBs may have different PCI values (PCI #1 or PCI #2), and it is impossible to map a PCI value (PCI #2) of the second TRP through a ServCellindex value indicated by a cell parameter in QCL-Info, and thus, it is only possible to designate an SSB transmitted in TRP 1 as a reference antenna port, and it is impossible to designate an SSB transmitted in TRP 2 as the reference antenna port. The scheme of corresponding Case #2 26-20 may be referred to as a multi-TRP operation not using a CA configuration, that is, an inter-cell multi-TRP with a non-CA framework. By using various methods, the base station may explicitly indicate to the UE or implicitly indicate to the UE that an inter-cell multi-TRP with a non-CA framework is applied. For example, the base station may "configure a parameter (a higher layer parameter per CORESET or CORESETPoolIndex) dividing a CORESET configured in one serving cell or BWP into two or more groups (CORESETgroups)," may "configure a parameter (a higher layer parameter per PUCCH or CORESETPoolIndex) dividing a PUCCH resource configured in one serving cell or BWP into two or more groups (PUCCH groups)," or may define and configure an independent higher layer parameter. Through such higher layer signaling, the base station may notify the UE of the application of the inter-cell multi-TRP with the non-CA framework. As another example, when a certain serving cell is configured to perform a multi-TRP operation (that is, when a BWP in the serving cell is configured to one or more PDSCHs at a time point), and when a frequency resource of the corresponding serving cell (that is, a frequency resource indicated by a frequency band value FrequencyINfoDL indicated by DownlinkConfigCommon of a corresponding serving cell configuration) does not overlap frequency configurations of any other serving cell configurations, the UE may understand that the inter-cell multi-TRP with the non-CA framework is applied. Also, the intra-cell multi-TRP, the inter-cell multi-TRP with the CA frame, and the inter-cell multi-TRP with the non-CA framework may be applied to uplink transmission similarly to downlink transmission.

According to an embodiment of the disclosure, during the inter-cell multi-TRP with the non-CA framework, the UE may independently configure hopping IDs that are higher layer signaling used for group and sequence hopping and cyclic-shift hopping with respect to PUCCH transmission such that the number of hoping IDs correspond to the number of TRPs in PUCCH-ConfigCommon. When the hopping IDs, the higher layer signaling, are configured in PUCCH-ConfigCommon such that the number of hopping IDs correspond to the number of TRPs, the UE may connect a hopping ID of a low index with a TRP of a low index or may reversely connect a hopping ID with a TRP to perform PUCCH repetitive transmission. For example, when the number of TRPs is 2, the UE may connect a first hopping ID with a PUCCH resource connected with a CORESET having a CORESETPoolindex value of 0 and use the first hopping ID for PUCCH transmission and may connect a second hopping ID with a PUCCH resource connected with a CORESET having a CORESETPoolindex value of 1 and use the second hopping ID for PUCCH transmission. When only one hopping ID is configured in PUCCH-ConfigCommon which is the higher layer signaling, and PUCCH repetitive transmission taking into account multi-TRPs is performed, the UE may substitute lacking one hopping ID value by using a PCI of the serving cell and may perform the PUCCH repetitive transmission by connecting the configured hopping ID and the PCI of the serving cell with each TRP in a similar manner with a case in which two hopping IDs are configured. To generalize this configuration, when the number of configured hopping IDs is less than the number of TRPs, the UE may substitute a hopping ID by a PCI of the serving cell, when the number of TRPs to which the hopping ID may not be allocated is 1, or may re-use the hopping ID allocated to a predetermined TRP, when the number of TRPs to which the hopping ID may not be allocated is plural. Alternatively, the UE may calculate a new hopping ID value for a TRP to which the hopping ID may not be allocated, by using a predetermined formula. For example, when two hopping IDs are configured, and the number of TRPs is 3, the configured two hopping IDs may be connected with respect to two TRPs according to the above scheme or an application thereof, and a PCI may be substituted for a hopping ID for the remaining one TRP. As another example, when three hopping IDs are configured, and there are five TRPs, the configured three hopping IDs may be connected with three TRPs according to the above scheme or an application thereof, and two of the three configured hopping IDs may be selected to be used as hopping IDs for the remaining two TRPs. Here, methods of selecting a hopping ID to be used for a TRP to which a hopping ID is not allocated, from among a plurality of configured hopping IDs, may include a random selection method, a method of allocating a hopping ID such that a low hopping ID is allocated to a low TRP index, a method of allocating a hopping ID such that a high hopping ID is allocated to a high TRP index, a method applying these methods, etc. As another example, when three hopping IDs are configured, and the number of TRPs is 5, the described scheme or an application thereof may be used to connect three TRPs with the configured three hopping IDs, and with respect to the remaining two TRPs, a new hopping ID value may be calculated by using a previous hopping ID value and a random formula. For example, when a new hopping ID and a previous hopping ID are respectively NEW and OLD, the new hopping ID, NEW, may be calculated by using a formula, such as $NEW = modulo (OLD + X, 1024)$. Here, $modulo (A, B)$ denotes the rest remaining after dividing A by B, and the reason of determining B to be 1024 is that the range of the hopping ID is 0 to 1023. Also, a value to be determined as X

may include PUCCH-ResourceID, PUCCH-ResourceSetID, a PCI, etc. The UE may not expect that there is no hopping ID configured in PUCCH-ConfigCommon which is higher layer signaling. As another example, the UE may configure one hopping ID, which is higher layer signaling used for group and sequence hopping and cyclic-shift hopping with respect to PUCCH transmission, in PUCCH-ConfigCommon for each serving cell, during an inter-cell multi-TRP with a CA framework. Here, each configured hopping ID may be used during PUCCH transmission with respect to a TRP corresponding to each serving cell.

According to an embodiment of the disclosure, during an inter-cell multi-TRP with a non-CA framework, the UE may perform PUCCH repetitive transmission for the multi-TRP by using scramblingID0 and scramblingID1 in DMRS-UplinkConfig which is higher layer signaling used for scrambling a DM-RS sequence of PUCCH format 2. When the UE is configured with scramblingID, which is higher layer signaling, the number of which corresponds to the number of TRPs, a title of each information element may be determined based on a previous method of indexing scrambling IDs, like scramblingID0, scramblingID1, scramblingID2, etc., or may be determined based on a method of configuring a plurality of scramblingIDs and additionally indexing the plurality of scarmblingIDs. Hereinafter, for preventing confusion, it will be referred to as scramblingID. When scramblingID, which is higher layer signaling, is configured such that the number thereof corresponds to the number of TRPs, the UE may connect scramblingID of a low index with a TRP of a low index or may connect a scrambling ID with a TRP in the opposite way to perform PUCCH repetitive transmission. For example, with respect to two TRPs, the UE may connect first scramblingID with a PUCCH resource connected with a CORESET having a CORESETPoolIndex value of 0 and use first scramblingID for PUCCH transmission and may connect second scram-blingID with a PUCCH resource connected with a CORESET having a CORESETPoolIndex value of 1 and use second scramblingID for PUCCH transmission. When the number of scramblingIDs which are higher layer signaling is configured to be less than the number of TRPs, scramblingID may be substituted by a PCI of a serving cell with respect to a corresponding TRP, when the number of TRPs to which scramblingID may not be allocated is 1, or scramblingID already allocated to a TRP may be re-used, when the number of TRPs to which scramblingID may not be allocated is plural. Alternatively, the UE may calculate a new scramblingID value for a TRP to which scramblingID may not be allocated, by using a predetermined formula. For example, when two scramblingIDs are configured, and the number of TRPs is 3, the configured two scramblingIDs may be connected with respect to two TRPs according to the above scheme or an application thereof, and a PCI may be substituted for scramblingID for the remaining one TRP. As another example, when three scramblingIDs are configured, and there are five TRPs, the configured three scramblingIDs may be connected with three TRPs according to the above scheme or an application thereof, and two of the three configured scramblingIDs may be selected to be used as scramblingIDs for the remaining two TRPs. Here, methods of selecting scramblingID to be used for a TRP to which scramblingID is not allocated, from among a plurality of scramblingIDs, may include a random selection method, a method of allocating scramblingID such that low scramblingID is allocated to a low TRP index, a method of allocating scramblingID such that high scramblingID is allocated to a high TRP index, a method applying these methods, etc. As another example, when three scramblingIDs are configured, and the number of TRPs is 5, the described scheme or an application thereof may be used to connect three TRPs with the configured three scramblingIDs, and with respect to the remaining two TRPs, a new scramblingID value may be calculated by using a previous scramblingID value and a random formula. For example, when new scramblingID and previous scramblingID are respectively NEW and OLD, NEW may be calculated by using a formula, such as NEW = modulo (OLD + X, 65536). Here, modulo (A, B) denotes the rest remaining after dividing A by B, and the reason of determining B to be 65536 is that the range of scramblingID is 0 to 65535. Also, a value to be determined as X may include PUCCH-ResourceID, PUCCH-ResourceSetID, a PCI, etc. As another example, the UE may configure one scramblingID in DMRS-UplinkConfig which is higher layer signaling used for scrambling with respect to payloads of PUCCH formats 2, 3, and 4, in DMRS-UplinkConfig for each serving cell, during an inter-cell multi-TRP with a CA framework. Here, each configured scramblingID may be used during PUCCH transmission with respect to a TRP corresponding to each serving cell.

According to an embodiment of the disclosure, during an inter-cell multi-TRP with a non-CA framework, the UE may individually configure dataScramblingIdentityPUSCH in PUSCH-config which is higher layer signaling used for scrambling with respect to the payloads of PUCCH formats 2, 3, and 4, such that the number of dataScramblingIdentityPUSCHs corresponds to the number of TRPs in PUSCH-Config. When dataScramblingIdentityPUSCH, which is higher layer signaling, is configured such that the number thereof corresponds to the number of TRPs, the UE may connect dataScramblingIdentityPUSCH of a low index with a TRP of a low index or may reversely connect dataScramblingIdentityPUSCH with a TRP to perform PUCCH repetitive transmission. For example, with respect to two TRPs, the UE may connect first dataScramblingIdentityPUSCH with a PUCCH resource connected with a CORESET having a CORESETPoolIndex value of 0 and use first dataScramblingIdentityPUSCH for PUCCH transmission and may connect second dataScramblingIdentityPUSCH with a PUCCH resource connected with a CORESET having a CORESETPoolIndex value of 1 and use second dataScramblingIdentityPUSCH for PUCCH transmission. When the number of dataScram-blingIdentityPUSCHs which are higher layer signaling is configured to be less than the number of TRPs, dataScram-blingIdentityPUSCH may be substituted by a PCI of a serving cell with respect to a corresponding TRP, when the number of TRPs to which dataScramblingIdentityPUSCH may not be allocated is 1, or dataScramblingIdentityPUSCH already

allocated to a TRP may be re-used, when the number of TRPs to which dataScramblingIdentityPUSCH may not be allocated is plural. Alternatively, the UE may calculate a new dataScramblingIdentityPUSCH value for a TRP to which dataScramblingIdentityPUSCH may not be allocated, by using a predetermined formula. For example, when two dataScramblingIdentityPUSCHs are configured, and the number of TRPs is 3, the configured two dataScramblingIdenti-tyPUSCHs may be connected with respect to two TRPs according to the above scheme or an application thereof, and a PCI may be substituted for dataScramblingIdentityPUSCH for the remaining one TRP. As another example, when three dataScramblingIdentityPUSCHs are configured, and there are five TRPs, the configured three dataScramblingIdentity-PUSCHs may be connected with three TRPs according to the above scheme or an application thereof, and two of the three configured dataScramblingIdentityPUSCHs may be selected to be used as dataScramblingIdentityPUSCHs for the remaining two TRPs. Here, methods of selecting dataScramblingIdentityPUSCH to be used for a TRP to which dataScramblingIdentityPUSCH is not allocated, from among a plurality of dataScramblingIdentityPUSCHs, may include a random selection method, a method of allocating dataScramblingIdentityPUSCH such that low dataScramblingIdenti-tyPUSCH is allocated to a low TRP index, a method of allocating dataScramblingIdentityPUSCH such that high dataScramblingIdentityPUSCH is allocated to a high TRP index, a method applying these methods, etc. As another example, when three dataScramblingIdentityPUSCHs are configured, and the number of TRPs is 5, the described scheme or an application thereof may be used to connect three TRPs with the configured three dataScramblingIdentityPUSCHs, and with respect to the remaining two TRPs, a new dataScramblingIdentityPUSCH value may be calculated by using a previous dataScramblingIdentityPUSCH value and a random formula. For example, when new dataScramblingIdenti-tyPUSCH and previous dataScramblingIdentityPUSCH are respectively NEW and OLD, NEW may be calculated by using a formula, such as NEW = modulo (OLD + X, 1024). Here, modulo (A, B) denotes the rest remaining after dividing A by B, and the reason of determining B to be 1024 is that the range of dataScramblingIdentityPUSCH is 0 to 1023. Also, a value to be determined as X may include PUCCH-ResourceID, PUCCH-ResourceSetID, a PCI, etc. As another example, during an inter-cell multi-TRP with a CA framework, the UE may configure one dataScramblingIdentityPUSCH in PUSCH-config which is higher layer signaling used for scrambling with respect to the payloads of PUCCH formats 2, 3, and 4, in PUSCH-Config for each serving cell. Here, each configured dataScramblingIdentityPUSCH may be used during PUCCH transmission with respect to a TRP corresponding to each serving cell.

<A sixth embodiment: a method of determining a priority order when PUCCH repetitive transmission taking into account a plurality of TRPs overlaps other uplink transmission>

According to an embodiment of the disclosure, the UE may determine a priority order with respect to which transmission is to be performed first, when PUCCH repetitive transmission taking into account a plurality of TRPs overlaps other uplink transmission. The other uplink transmission may include PUCCH repetitive transmission taking into account a plurality of TRPs, PUCCH repetitive transmission taking into account a single TRP, PUCCH single transmission taking into account a single TRP, PUSCH transmission, PRACH transmission, SRS transmission, etc.

According to an embodiment, when the PUCCH repetitive transmission taking into account the plurality of TRPs overlaps the PUSCH transmission, the UE may drop the PUSCH transmission without a condition. Also, when the PUCCH repetitive transmission taking into account the plurality of TRPs overlaps the PUSCH transmission, the UE may drop the PUSCH transmission or the PUCCH repetitive transmission taking into account the plurality of TRPs, according to a condition. Here, available conditions may include the number of repeated times of PUCCH repetitive transmission taking into account the plurality of TRPs, the number of times of PUCCH repetitive transmission already transmitted, when the PUCCH repetitive transmission taking into account the plurality of TRPs overlaps the PUSCH transmission, and the like. When the UE takes the number of repeated times of PUCCH repetitive transmission taking into account the plurality of TRPs as a condition, the UE may set a predetermined value of the number of repeated times of the PUCCH repetitive transmission taking into account the plurality of TRPs as a reference value, and when the repetitive transmission has a higher value than the reference value, the UE may drop the PUSCH transmission, and when the repetitive transmission has a lower value than the reference value, the UE may drop the repetitive transmission. Similarly, when the repetitive transmission has a higher value than a reference value, the repetitive transmission may be dropped, and when the repetitive transmission has a lower value than the reference value, the PUSCH transmission may be dropped. Here, the reference value may be configured as higher layer signaling or may be dynamically indicated through an MAC-CE or DCI. When the number of times of PUCCH repetitive transmission already performed is taken into account as a condition, remaining PUCCH repetitive transmission may be dropped, when the remaining PUCCH repetitive transmission overlaps the PUSCH transmission in a situation in which PUCCH repetitive transmission equal to or greater than a reference value of the entire PUCCH repetitive transmission is already transmitted. For example, when the total number of times of repetitive transmission is 8, the reference value is 4, and the PUCCH repetitive transmission overlaps the PUSCH transmission at the fifth transmission time point of the PUCCH repetitive transmission, the PUCCH repetitive transmission may be dropped. Here, the reference value may be configured as higher layer signaling or may be dynamically indicated through an MAC-CE or DCI. Configurations with respect to the overlapping with the PUSCH transmission may be applied to the overlapping with the SRS transmission in the same manner.

According to another embodiment, when PUCCH repetitive transmission taking into account a plurality of TRPs overlaps other PUCCH repetitive transmission taking into account a plurality of TRPs or PUCCH repetitive transmission taking into account a single TRP, a priority order may be determined according to various conditions. Available conditions may include whether repetitive transmission takes into account a plurality of TRPs or a single TRP, a repetitive transmission unit (a sub-slot or a slot), a UCI priority order (HARQ-ACK > SR >CSI), a scheduling time point, the number of times of repetitive transmission, etc. For example, in a case where whether the repetitive transmission takes into account the plurality of TRPs or the single TRP is a condition having the first priority order, the PUCCH repetitive transmission taking into account the single TRP may be dropped, when the PUCCH repetitive transmission taking into account the plurality of TRPs overlaps the PUCCH repetitive transmission taking into account the single TRP. However, in a case where whether the repetitive transmission takes into account the plurality of TRPs or the single TRP is not considered as a condition, the UE may determine which transmission is to be dropped by considering priority orders of other conditions, and all kinds of combinations of the priority orders of sorted conditions may be possible. For example, when the PUCCH repetitive transmission taking into account the plurality of TRPs overlaps the other PUCCH repetitive transmission taking into account the plurality of TRPs or the PUCCH repetitive transmission taking into account the single TRP, the priority orders of the conditions may be determined in this stated order of the repetitive transmission unit (a sub-slot or a slot), the UCI priority order (HARQ-ACK > SR > CSI), the scheduling time point, and the number of times of repetitive transmission. When the repetitive transmission unit is considered as a condition, the PUCCH repetitive transmission having a shortest repetitive transmission unit that is a sub-slot may have a higher priority order than the PUCCH repetitive transmission having a longer repetitive transmission unit that is a longer sub-slot or a slot. For example, a length of the sub-slot may be 2, 4, or 7, and the PUCCH repetitive transmission having the repetitive transmission unit of the sub-slot having the length of 2 may be performed preferentially to the PUCCH repetitive transmission having the repetitive transmission unit of the sub-slot having the length of 4. When the PUCCH repetitive transmission taking into account the plurality of TRPs overlaps the other PUCCH repetitive transmission taking into account the plurality of TRPs or the PUCCH repetitive transmission taking into account the single TRP, and when the repetitive transmission unit is the same thereamong, whether or not to drop the transmission may be determined according to a priority order of the following conditions. Also, when the PUCCH repetitive transmission taking into account the plurality of TRPs overlaps the other PUCCH repetitive transmission taking into account the plurality of TRPs or the PUCCH repetitive transmission taking into account the single TRP, the UE may not expect that all of the considered conditions described above (the repetitive transmission unit (a sub-slot or a slot), the UCI priority order (HARQ-ACK > SR > CSI), the scheduling time point, and the number of times of repetitive transmission) be the same.

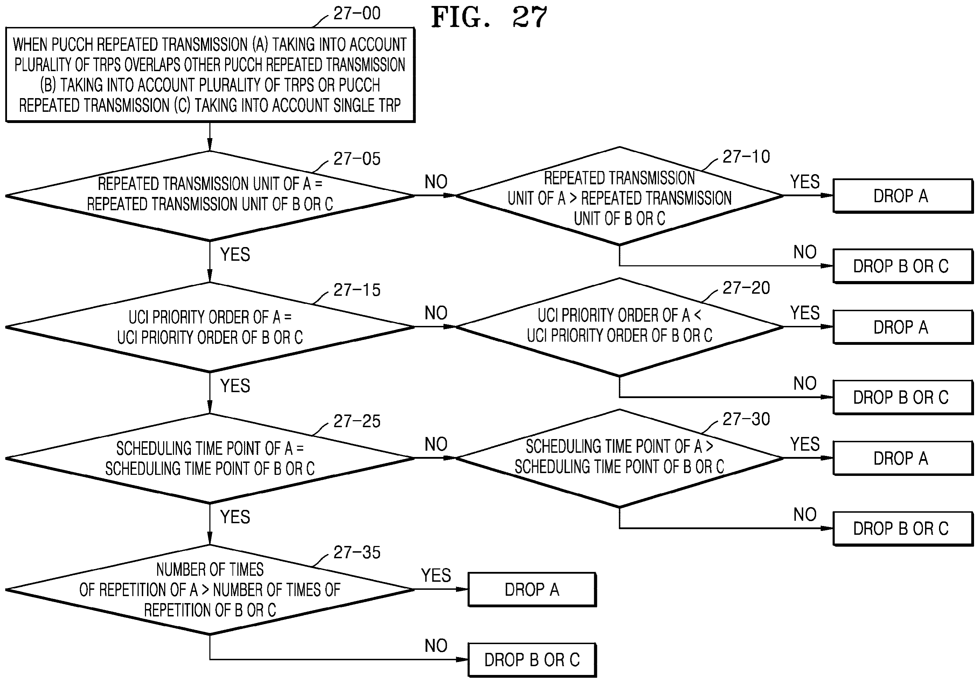

FIG. 27 is a diagram illustrating an example of determining whether or not to drop certain transmission by taking into account a priority order, when PUCCH repetitive transmission taking into account a plurality of TRPs overlaps other PUCCH repetitive transmission taking into account a plurality of TRPs or PUCCH repetitive transmission taking into account a single TRP, according to an embodiment of the disclosure.

Referring to FIG. 27, when PUCCH repetitive transmission A taking into account a plurality of TRPs overlaps other PUCCH repetitive transmission B taking into account a plurality of TRPs or PUCCH repetitive transmission C taking into account a single TRP (27-00), a repetitive transmission unit of A and a repetitive transmission unit of B or C may be compared with each other (27-05). Here, when the repetitive transmission unit of A is greater than the repetitive transmission unit of B or C (27-10), for example, when the repetitive transmission unit of A is a slot, and the repetitive transmission unit of B or C is a sub-slot having a length of 2, A may be dropped, and when the repetitive transmission unit of A and B or C is the opposite to the description above, B or C may be dropped. When the repetitive transmission unit of A is the same as the repetitive transmission unit of B or C, comparison may be performed between A and B or C based on a UCI priority order (27-15). When the UCI priority order of A is lower than the UCI priority order of B or C (27-20), A may be dropped, and in the opposite case, B or C may be dropped. When the UCI priority order of A is the same as the UCI priority order of B or C, comparison may be performed between A and B or C based on a scheduling time point (27-25). When the scheduling time point of A is later than the scheduling time point of B or C (27-30), A may be dropped, and in the opposite case, B or C may be dropped. In 27-30, in the case of the scheduling time point of A > the scheduling time point of B or C, it denotes that the scheduling time point of A is later than the scheduling time point of B or C. When the scheduling time point of A is the same as the scheduling time point of B or C, comparison may be performed between A and B or C based on the number of repeated times (27-35). When the number of repeated times of A is greater than the number of repeated times of B or C, A may be dropped, and in the opposite case, B or C may be dropped.

In FIG. 27, conditions to be taken into account to determine which transmission is to be dropped during the overlapping situation are presented as 27-05, 27-15, 27-25, and 27-35. The order of the conditions illustrated in FIG. 27 is only an example, and orders of 27-05, 27-15, 27-25, and 27-35 may be changed.

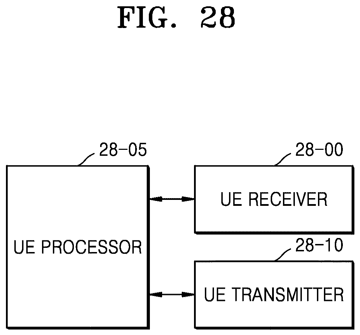

FIG. 28 illustrates a structure of a UE in a wireless communication system according to an embodiment of the disclosure.

Referring to FIG. 28, the UE may include a UE receiver 28-00, a UE processor 28-05, and a UE transmitter 28-10.

Also, the UE may further include a memory (not shown). The UE processor 28-05 may include a processor. According to the communication method of the UE described above, the UE receiver 28-00, the UE processor 28-05, and the UE transmitter 28-10 of the UE may operate. However, components of the UE are not limited to the example described above. For example, the UE may include more or fewer components than those described above. In addition, the receiver 28-00, the UE processor 28-05, the UE transmitter 28-10, and the memory 28-05 may be implemented in the form of a single chip.

According to an embodiment, the UE receiver 28-00 and the UE transmitter 28-10 may be referred to as a transceiver. The transceiver may transmit and receive a signal to and from a base station. Here, the signal may include control information and data. To this end, the transceiver may include a radio frequency (RF) transmitter configured to up-convert and amplify a frequency of a signal to be transmitted, and an RF receiver configured to low-noise amplify a received signal and down-convert a frequency thereof. However, the configuration of the transceiver is merely an example, and components of the transceiver are not limited to the RF transmitter and the RF receiver.

Also, the UE receiver 28-00 may receive and output, to the UE processor 28-05, a signal through a wireless channel, and the UE transmitter 28-10 may transmit a signal output from the UE processor 28-05 through the wireless channel.

The memory may store a program and data required for an operation of the UE. Also, the memory may store control information or data included in a signal transmitted or received by the UE. The memory may include a storage medium such as read-only memory (ROM), random-access memory (RAM), a hard disk, compact disc (CD)-ROM, and a digital versatile disc (DVD), or any combination thereof. Also, the memory may include a plurality of memories.

Also, the UE processor 28-05 may control a series of processes so that the UE operates according to the embodiments described above. For example, the UE processor 28-05 may control components of the UE to simultaneously receive a plurality of PDSCHs by receiving DCI composed of two layers.

According to an embodiment, the UE processor 28-05 may receive, from the base station, configuration information with respect to PUCCH repetitive transmission through at least one of a plurality of transmission points, a plurality of panels, or a plurality of beams, may receive, from the base station, an indication with respect to the PUCCH repetitive transmission through at least one of the plurality of transmission points, the plurality of panels, or the plurality of beams, may select at least one of a plurality of PUCCH resources based on the received configuration information and the received indication with respect to the repetitive transmission, and may perform the PUCCH repetitive transmission according to a predetermined order, based on the selected at least one PUCCH resource. Also, according to an embodiment, the predetermined order may be determined based on the received configuration information with respect to the PUCCH repetitive transmission or may be determined based on an order of PUCCH resources to be applied to the PUCCH repetitive transmission.

The UE processor 28-05 may include a plurality of processors, and the UE processor 28-05 may perform control operations of components of the UE by executing a program stored in the memory.

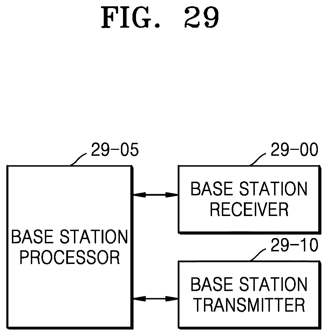

FIG. 29 illustrates a structure of a base station in a wireless communication system according to an embodiment of the disclosure.

Referring to FIG. 29, the base station may include a base station receiver 29-00, a base station processor 29-05, and a base station transmitter 29-10. Also, the base station may further include a memory (not shown). The base station receiver 29-00 and the base station transmitter 29-10 may be referred to as a transceiver. According to the communication method of the base station described above, the base station receiver 29-00, the base station processor 29-05, and the base station transmitter 29-10 of the base station may operate. However, components of the BS are not limited to the above example. For example, the base station may include more or fewer elements than those described above. In addition, the base station receiver 29-00, the base station processor 29-05, and the base station transmitter 29-10 may be implemented in the form of a single chip.

The transceiver may transmit and receive a signal to and from the UE. Here, the signal may include control information and data. To this end, the transceiver may include an RF transmitter configured to up-convert and amplify a frequency of a signal to be transmitted, and an RF receiver configured to low-noise amplify a received signal and down-convert a frequency thereof. However, the configuration of the transceiver is merely an example, and components of the transceiver are not limited to the RF transmitter and the RF receiver.

Also, the base station receiver 29-00 may receive and output, to the base station processor 29-05, a signal through a wireless channel, and the base station transmitter 29-10 may transmit a signal output from the base station processor 29-05 through the wireless channel.

The memory may store a program and data required for an operation of the base station. Also, the memory may store control information or data included in a signal transmitted or received by the base station. The memory may include a storage medium such as ROM, RAM, a hard disk, CD-ROM, and a DVD, or any combination thereof. Also, the memory may include a plurality of memories.

The base station processor 29-05 may control a series of processes for the base station to operate according to the embodiments of the disclosure described above. For example, the base station the processor 29-05 may control each component of the base station to configure and transmit DCI of two layers including allocation information with respect to a plurality of PDSCHs.

According to an embodiment, the base station processor 29-05 may transmit, to the UE, configuration information with respect to PUCCH repetitive transmission through at least one of a plurality of transmission points, a plurality of panels, or a plurality of beams, may transmit, to the UE, an indication with respect to the PUCCH repetitive transmission through at least one of the plurality of transmission points, the plurality of panels, or the plurality of beams, may repetitively receive PUCCHs from the UE, and may decode the repetitively received PUCCHs based on the configuration information with respect to the PUCCH repetitive transmission.

The base station processor 29-05 may include a plurality of processors, and the base station processor 29-05 may perform control operations of components of the base station by executing a program stored in the memory.

The methods according to embodiments as described in the specification or in the following claims of the disclosure may be implemented as hardware, software, or a combination of hardware and software.

When the electrical structures and methods are implemented in software, a computer-readable recording medium having one or more programs (software modules) recorded thereon may be provided. One or more programs stored in the computer-readable storage medium are configured to be executable by one or more processors in an electronic device. The one or more programs may include instructions for the electronic device to execute the methods according to the embodiments of the disclosure described in the claims and the specification.

The programs (software modules or software) may be stored in non-volatile memories including RAM, flash memory, etc., ROM, electrically erasable programmable ROM (EEPROM), a magnetic disc storage device, CD-ROM, DVDs other optical storage devices, or magnetic cassettes. Alternatively, the programs may be stored in a memory composed of part or all of the memories described above. Also, each of the memories included in the memory may be provided in a multiple number.

Also, the programs may be stored in an attachable storage device, which may be accessed through a communication network, such as the Internet, the Intranet, a local area network (LAN), a wide LAN (WLAN), or a storage area network (SAN), or through a communication network combining the communication networks described above. The storage device may access a device configured to perform the embodiment of the disclosure through an external port. Furthermore, a separate storage device on the communication network may access the electronic device performing the embodiments of the disclosure.

In the specific embodiments of the disclosure described above, elements included in the disclosure are expressed in a singular or plural form according to the specific embodiments. However, the singular term or the plural term may be appropriately selected according to situations that are provided, for convenience of explanation. The disclosure is not limited to the singular components or the plural components. A component referred to by the plural term may be configured as a single component, and a component referred to by the singular term may be configured as a plurality of component.

Meanwhile, the embodiments of the disclosure described with reference to the present specification and the drawings are merely illustrative of specific examples to easily facilitate description and understanding of the disclosure, and are not intended to limit the scope of the disclosure. That is, it will be obvious to one of ordinary skill in the art that various modifications may be made based on the technical spirit of the disclosure. Also, each embodiment may be executed in combination with another embodiment according to necessity. For example, a base station and a UE may operate according to a combination of parts of embodiments of the disclosure. For example, the base station and the UE may operate according to a combination of parts of a first embodiment and a second embodiment of the disclosure. Also, although the embodiments described above are based on an FDD LTE system, modified embodiments may be possible in a TDD LTE system, a 5G or NR system, etc. based on the technical concept of the embodiments described above.

In the drawings for describing the methods of the disclosure, orders of descriptions do not necessarily correspond to orders of implementation, and the former and latter relationship may be changed, or the implementation may be parallel.

Alternatively, the drawings for describing the methods of the disclosure may omit one or more components and may include just one or more components, in a range not deviating from the essence of the disclosure.

Also, the methods of the disclosure may be implemented by combining part or all of the configurations included in the embodiments in a range not deviating from the essence of the disclosure.

Clauses:

Clause 1. A user equipment (UE) performing repetitive transmission in a wireless communication system, the UE comprising:

a transceiver; and
at least one processor configured to:

receive, from a base station, configuration information for repetitively transmitting a physical uplink control channel (PUCCH) to a plurality of transmission reception points (TRPs);

receive, from the base station, an indication with respect to repetitive transmission of a first PUCCH through the plurality of TRPs;

based on the configuration information for repetitively transmitting the PUCCH, identify that the repetitive transmission of the first PUCCH overlaps other uplink transmission;

based on at least one of a repetitive transmission unit, a number of times of repetitive transmission, a number of TRPs, a type of uplink control information (UCI), a scheduling time point, and a number of activated transmission beams of each of the repetitive transmission of the first PUCCH and the other uplink transmission, determine which transmission between the repetitive transmission of the first PUCCH and the other uplink transmission is to be performed; and

according to a result of the determining, perform the determined transmission between the repetitive transmission of the first PUCCH and the other uplink transmission, to the base station.

Clause 2. The UE of Clause 1, wherein the other uplink transmission comprises at least one of repetitive transmission of a second PUCCH through a plurality of TRPs, repetitive transmission of the second PUCCH through a single TRP, single transmission of the second PUCCH through a single TRP, and physical uplink shared channel (PUSCH) transmission, and

the repetitive transmission of the first PUCCH is performed with a higher priority than the other uplink transmission, when the repetitive transmission unit of the repetitive transmission of the first PUCCH is shorter than the repetitive transmission unit of the other uplink transmission.

Clause 3. The UE of Clause 1, wherein the other uplink transmission comprises at least one of repetitive transmission of a second PUCCH through a plurality of TRPs, repetitive transmission of the second PUCCH through a single TRP, single transmission of the second PUCCH through a single TRP, and PUSCH transmission, and

the repetitive transmission of the first PUCCH is performed with a higher priority than the other uplink transmission, when the number of times of repetitive transmission of the repetitive transmission of the first PUCCH is less than a reference value or the number of times of repetitive transmission of the other uplink transmission.

Clause 4. The UE of Clause 1, wherein the other uplink transmission comprises at least one of uplink transmission through a plurality of TRPs and uplink transmission through a single TRP, and

the repetitive transmission of the first PUCCH is performed with a higher priority than the other uplink transmission, when the number of TRPs for the repetitive transmission of the first PUCCH and the number of activated transmission beams with respect to a used PUCCH resource are greater than the number of TRPs and the number of activated transmission beams for the other uplink transmission.

Clause 5. The UE of claim 1, wherein the configuration information for repetitively transmitting the PUCCH to the plurality of TRPs comprises transmission beam information with respect to a resource of the PUCCH, and

the at least one processor is further configured to:

receive, from the base station a medium access control (MAC) control element (CE) comprising a plurality of pieces of transmission beam information with respect to the resource of the PUCCH; and

based on the transmission beam information with respect to the resource of the PUCCH and the plurality of pieces of transmission beam information with respect to the resource of the PUCCH included in the MAC CE, determine a plurality of transmission beams for the repetitive transmission of the PUCCH.

Clause 6. The UE of Clause 1, wherein the configuration information for repetitively transmitting the PUCCH comprises at least one hopping identifier and at least one scrambling identifier, and

the at least one processor is further configured to:

identify whether at least one of a number of the at least one hopping identifier and a number of the at least one scrambling identifier is less than the number of TRPs and the number of activated transmission beams with respect to a PUCCH resource used for the repetitive transmission of the first PUCCH;

when the number of the at least one hopping identifier is less than the number of TRPs and the number of activated transmission beams with respect to the PUCCH resource used for the repetitive transmission of the first PUCCH, with respect to one or more TRPs remaining after mapping at least one TRP corresponding to the number of the at least one hopping identifier with the at least one hopping identifier, determine one or more hopping identifiers of the remaining one or more TRPs, based on at least one of one hopping identifier from among the at least one hopping identifier and a physical cell identity (PCI) of a serving cell; and

when the number of the at least one scrambling identifier is less than the number of TRPs and the number of activated transmission beams with respect to the PUCCH resource used for the repetitive transmission of the first PUCCH, with respect to one or more TRPs remaining after mapping at least one TRP corresponding to the number of the at least one scrambling identifier with the at least one scrambling identifier, determine one or more scrambling identifiers of the remaining one or more TRPs, based on at least one of one scrambling identifier from among the at least one scrambling identifier and the PCI of the serving cell.

Clause 7. A base station transmitting and receiving a signal to and from a user equipment (UE) in a wireless communication system, the base station comprising:

a transceiver; and
at least one processor configured to:

transmit, to the UE, configuration information for repetitively transmitting a physical uplink control channel (PUCCH) to a plurality of transmission reception points (TRPs);
transmit, to the UE, an indication with respect to repetitive transmission of a first PUCCH through the plurality of TRPs; and
receive one of the repetitive transmission of the first PUCCH and other uplink transmission, the one being determined based on a result in which the UE identifies that the repetitive transmission of the first PUCCH overlaps the other uplink transmission,
wherein the one of the repetitive transmission of the first PUCCH and the other uplink transmission, the one being determined based on the result of the identifying is determined based on at least one of a repetitive transmission unit, a number of times of repetitive transmission, a number of TRPs, a type of uplink control information (UCI), a scheduling time point, and a number of activated transmission beams of each of the repetitive transmission of the first PUCCH and the other uplink transmission.

Clause 8. The base station of Clause 7, wherein the other uplink transmission comprises at least one of repetitive transmission of a second PUCCH through a plurality of TRPs, repetitive transmission of the second PUCCH through a single TRP, single transmission of the second PUCCH through a single TRP, and physical uplink shared channel (PUSCH) transmission, and
the repetitive transmission of the first PUCCH is performed with a higher priority than the other uplink transmission, when the repetitive transmission unit of the repetitive transmission of the first PUCCH is shorter than the repetitive transmission unit of the other uplink transmission.

Clause 9. The base station of Clause 7, wherein the other uplink transmission comprises at least one of repetitive transmission of a second PUCCH through a plurality of TRPs, repetitive transmission of the second PUCCH through a single TRP, single transmission of the second PUCCH through a single TRP, and PUSCH transmission, and
the repetitive transmission of the first PUCCH is performed with a higher priority than the other uplink transmission, when the number of times of repetitive transmission of the repetitive transmission of the first PUCCH is less than a reference value or the number of times of repetitive transmission of the other uplink transmission.

Clause 10. The base station of Clause 7, wherein the other uplink transmission comprises at least one of uplink transmission through a plurality of TRPs and uplink transmission through a single TRP, and
the repetitive transmission of the first PUCCH is performed with a higher priority than the other uplink transmission, when the number of TRPs for the repetitive transmission of the first PUCCH and the number of activated transmission beams with respect to a used PUCCH resource are greater than the number of TRPs and the number of activated transmission beams for the other uplink transmission.

Clause 11. The base station of Clause 7, wherein the configuration information for repetitively transmitting the PUCCH to the plurality of TRPs comprises transmission beam information with respect to a resource of the PUCCH,

the at least one processor is further configured to transmit, to the UE, a medium access control (MAC) control element (CE) comprising a plurality of pieces of transmission beam information with respect to the resource of the PUCCH, and
a plurality of pieces of antenna activation information with respect to the resource of the PUCCH are used to determine a plurality of transmission beams for the repetitive transmission of the PUCCH, based on the transmission beam information with respect to the resource of the PUCCH and the plurality of pieces of transmission beam information with respect to the resource of the PUCCH included in the MAC CE.

Clause 12. The base station of Clause 7, wherein the configuration information for repetitively transmitting the PUCCH comprises at least one hopping identifier and at least one scrambling identifier,

a hopping identifier from among the at least one hopping identifier or a physical cell identity (PCI) of a serving cell is used, when a number of the at least one hopping identifier is less than the number of TRPs and the number of activated transmission beams with respect to the PUCCH resource used for the repetitive transmission of the first PUCCH, in order to determine one or more hopping identifiers of one or more TRPs remaining after mapping at least one TRP corresponding to the number of the at least one hopping identifier with the at least one hopping identifier, and
a scrambling identifier from among the at least one scrambling identifier or the PCI of the serving cell is used, when a number of the at least one scrambling identifier is less than the number of TRPs and the number of activated transmission beams with respect to the PUCCH resource used for the repetitive transmission of the first PUCCH, in order to determine one or more scrambling identifiers of one or more TRPs remaining after mapping at least one TRP corresponding to the number of the at least one scrambling identifier with the at least one scrambling identifier.

Clause 13. An operating method of a user equipment (UE) performing data transmission and reception in a wireless communication system, the operating method comprising:

receiving, from a base station, configuration information for repetitively transmitting a physical uplink control channel (PUCCH) to a plurality of transmission reception points (TRPs);
receiving, from the base station, an indication with respect to repetitive transmission of a first PUCCH through the plurality of TRPs;
based on the configuration information for repetitively transmitting the PUCCH, identifying that the repetitive transmission of the first PUCCH overlaps other uplink transmission;
based on at least one of a repetitive transmission unit, a number of times of repetitive transmission, a number of TRPs, a type of uplink control information (UCI), a scheduling time point, and a number of activated transmission beams of each of the repetitive transmission of the first PUCCH and the other uplink transmission, determining which transmission between the repetitive transmission of the first PUCCH and the other uplink transmission is to be performed; and
according to a result of the determining, performing the determined transmission between the repetitive transmission of the first PUCCH and the other uplink transmission, to the base station.

Clause 14. The operating method of Clause 13, wherein the configuration information for repetitively transmitting the PUCCH to the plurality of TRPs comprises transmission beam information with respect to a resource of the PUCCH, the operating method further comprising:

receiving, from the base station a medium access control (MAC) control element (CE) comprising a plurality of pieces of transmission beam information with respect to the resource of the PUCCH; and
based on antenna-related information with respect to the resource of the PUCCH and the plurality of pieces of transmission beam information with respect to the resource of the PUCCH included in the MAC CE, determining a plurality of transmission beams for the repetitive transmission of the PUCCH.

Clause 15. The operating method of Clause 13, wherein the configuration information for repetitively transmitting the PUCCH comprises at least one hopping identifier and at least one scrambling identifier,
the operating method further comprising:

identifying whether at least one of a number of the at least one hopping identifier and a number of the at least one scrambling identifier is less than the number of TRPs and the number of activated transmission beams with respect to a PUCCH resource used for the repetitive transmission of the first PUCCH;
when the number of the at least one hopping identifier is less than the number of TRPs and the number of activated transmission beams with respect to the PUCCH resource used for the repetitive transmission of the first PUCCH, with respect to one or more TRPs remaining after mapping at least one TRP corresponding to the number of the at least one hopping identifier with the at least one hopping identifier, determining a hopping identifier of the remaining one or more TRPs, based on at least one of one hopping identifier from among the at least one hopping identifier and a physical cell identity (PCI) of a serving cell; and

when the number of the at least one scrambling identifier is less than the number of TRPs and the number of activated transmission beams with respect to the PUCCH resource used for the repetitive transmission of the first PUCCH, with respect to one or more TRPs remaining after mapping at least one TRP corresponding to the number of the at least one scrambling identifier with the at least one scrambling identifier, determining a scrambling identifier of the remaining one or more TRPs, based on at least one of one scrambling identifier from among the at least one scrambling identifier and the PCI of the serving cell.

**Claims**

1. A method performed by a user equipment, UE, in a wireless communication system, the method comprising:

   transmitting, to a base station, UE capability information indicating that the UE supports physical uplink control channel, PUCCH, repetitions related to multiple transmission and reception points, TRPs;
   receiving, from the base station, a medium access control, MAC, control element, CE, associated with a PUCCH spatial relation activation for the PUCCH repetitions, the MAC CE including a first PUCCH spatial relation information identifier, ID, a second PUCCH spatial relation information ID and a PUCCH resource ID which is to be activated with first spatial relation information and second spatial relation information, wherein the MAC CE is applied to all PUCCH resources in a PUCCH resource group including the PUCCH resource ID; and
   performing a PUCCH transmission associated with the PUCCH repetitions,
   wherein the first spatial relation information and the second spatial relation information are used for the PUCCH repetitions, based on information associated with a transmission order and configured by a higher layer signaling.

2. The method of claim 1, wherein the MAC CE is received via a physical downlink shared channel, PDSCH.

3. The method of claim 2, further comprising:
   transmitting, to the base station, hybrid automatic repeat request-acknowledgement, HARQ-ACK, information corresponding to the PDSCH.

4. The method of claim 3, wherein the first spatial relation information and the second spatial relation information are applied to transmit uplink data in a first slot that is after a number of slots from a slot in which the HARQ-ACK information is transmitted, the number of slots corresponding to a value of a number of slots in a subframe multiplied by three.

5. The method of claim 1, wherein the PUCCH repetitions are associated with an inter-slot repetition or an intra-slot repetition.

6. The method of claim 1, wherein the first spatial relation information and the second spatial relation information are respectively used for a first PUCCH repetition and a second PUCCH repetition of the PUCCH transmission.

7. The method of claim 1, wherein the first spatial relation information is used for a first PUCCH repetition and a second PUCCH repetition of the PUCCH transmission, and the second spatial relation information is used for a third PUCCH repetition and a fourth PUCCH repetition of the PUCCH transmission.

8. A method performed by a base station in a wireless communication system, the method comprising:

   receiving, from a user equipment, UE, UE capability information indicating that the UE supports physical uplink control channel, PUCCH, repetitions related to multiple transmission and reception points, TRPs;
   transmitting, to the UE, a medium access control, MAC, control element, CE, associated with a PUCCH spatial relation activation for the PUCCH repetitions, the MAC CE including a first PUCCH spatial relation information identifier, ID, a second PUCCH spatial relation information ID and a PUCCH resource ID which is to be activated with first spatial relation information and second spatial relation information, wherein the MAC CE is applied to all PUCCH resources in a PUCCH resource group including the PUCCH resource ID; and
   receiving, from the UE, uplink data associated with the PUCCH repetitions,
   wherein the first spatial relation information and the second spatial relation information are used for the PUCCH repetitions, based on information associated with a transmission order and configured by a higher layer signaling.

9. The method of claim 8, wherein the MAC CE is transmitted via a physical downlink shared channel, PDSCH.

10. The method of claim 9, further comprising:
receiving, from the UE, hybrid automatic repeat request-acknowledgement, HARQ-ACK, information corresponding to the PDSCH.

11. The method of claim 10, wherein the first spatial relation information and the second spatial relation information are configured to be applied to receive the uplink data in a first slot that is after a number of slots from a slot in which the HARQ-ACK information is transmitted, the number of slots corresponding to a value of a number of slots in a subframe multiplied by three.

12. The method of claim 8, wherein the PUCCH repetitions are associated with an inter-slot repetition or an intra-slot repetition.

13. A user equipment, UE, in a wireless communication system, the UE comprising:

a transceiver; and
at least one processor coupled with the transceiver and configured to:

transmit, to a base station, UE capability information indicating that the UE supports physical uplink control channel, PUCCH, repetitions related to multiple transmission and reception points, TRPs,
receive, from the base station, a medium access control, MAC, control element, CE, associated with a PUCCH spatial relation activation for the PUCCH repetitions, the MAC CE including a first PUCCH spatial relation information identifier, ID, a second PUCCH spatial relation information ID and a PUCCH resource ID which is to be activated with first spatial relation information and second spatial relation information, wherein the MAC CE is applied to all PUCCH resources in a PUCCH resource group including the PUCCH resource ID, and
perform a PUCCH transmission associated with the PUCCH repetitions,
wherein the first spatial relation information and the second spatial relation information are used for the PUCCH repetitions, based on information associated with a transmission order and configured by a higher layer signaling.

14. A base station in a wireless communication system, the base station comprising:

a transceiver; and
at least one processor coupled with the transceiver and configured to:

receive, from a user equipment, UE, UE capability information indicating that the UE supports physical uplink control channel, PUCCH, repetitions related to multiple transmission and reception points, TRPs,
transmit, to the UE, a medium access control, MAC, control element, CE, associated with a PUCCH spatial relation activation for the PUCCH repetitions, the MAC CE including a first PUCCH spatial relation information identifier, ID, a second PUCCH spatial relation information ID and a PUCCH resource ID which is to be activated with first spatial relation information and second spatial relation information, wherein the MAC CE is applied to all PUCCH resources in a PUCCH resource group including the PUCCH resource ID, and
receive, from the UE, uplink data associated with the PUCCH repetitions,
wherein the first spatial relation information and the second spatial relation information are used for the PUCCH repetitions, based on information associated with a transmission order and configured by a higher layer signaling.

# FIG. 1

One Subframe ——1–10

$N_{symb}^{subframe,\mu}$ OFDM symbols

1 OFDM symbols ——1–02

$k = N_{RB,x}^{max,\mu} N_{sc}^{RB} - 1$

1 subcarrier
1–03

$N_{RB}^{\mu} N_{sc}^{RB}$ subcarriers

1–04
Resource block $N_{sc}^{RB}$ subcarriers

Resource element [k, $l$) — 1–01

Frequemcy

Time

k = 0

$\tilde{l} = 0$

$\tilde{l} = 14 \cdot 2^{\mu} - 1$

# FIG. 2

EP 4 665 036 A2

# FIG. 3

# FIG. 4

Duration
4-04

Frequency
resource
4-03

UE
bandwidth
part
4-10

Slot
4-20

Frequency

Time

control resource set#1 —4-01

control resource set#2 —4-02

# FIG. 5

1 symbol
5-01

DMRS
5-05

1 PRB
5-02

CCE
5-04

REG
5-03

# FIG. 6

6-15

RA type 0
6-00 | Bitmap

6-20 | 6-25

RA type 1
6-05 | Starting VRB | Length

6-30 | 6-35

Both RA
type 0 & 1
6-10 | 1 bit for RA type indication | Max{payload for RA type 0, payload for RA type 1}

# FIG. 7

$$\mathrm{Slot}\left[ n \cdot \frac{2^{\mu}{}_{PDSCH}}{2^{\mu}{}_{PDCCH}} \right] + K_0 \quad\text{---}\quad 7\text{-}10$$

# FIG. 8

8-00

$\mu_{PDCCH}$ =1

PDCCH

Slot n  Slot n + 1  ...  t

$\mu_{PDSCH}$ =1

PDSCH

...  Slot n + k$_0$  t

8-05

$\mu_{PDCCH}$ =1

PDCCH

Slot n  Slot n + 1  ...  t

$\mu_{PDSCH}$ =2

PDSCH

...  t

$\text{Slot}\left[n \cdot \dfrac{2^{\mu_{PDSCH}}}{2^{\mu_{PDCCH}}}\right]$

$\text{Slot}\left[n \cdot \dfrac{2^{\mu_{PDSCH}}}{2^{\mu_{PDCCH}}}\right] + K_0$

EP 4 665 036 A2

# FIG. 9

Uplink

PRI#2 — 9-41

PRI#1 — 9-40

9-30 — PUCCH    PUCCH — 9-31

t

$K_1$ for PDSCH#1 — 9-50

$K_1$ for PDSCH#2 — 9-51

9-10 — PD CCH

9-11 — PD CCH

9-20 — PDSCH#1

9-21 — PDSCH#2

Downlink

Slot#n

t

# FIG. 10A

Case 2-1)

PRI#2

PRI#1

10-30  10-31  10-40  10-41

PUCCH #1  PUCCH #2  PUCCH #1  PUCCH #2    Uplink

t

$K_1$ for PDSCH#1

$K_1$ for PDSCH#2

10-10        10-11        10-20

PU CCH      PU CCH      PDSCH#1      PDSCH#2   10-21    Downlink

t

Slot#n    Slot#n+1

EP 4 665 036 A2

# FIG. 10B

Case 2-2)

Overlapped symbol(s) within a slot

10-60

PUCCH#2

10-61

PUCCH#2

10-50 — PUCCH #1

10-51 — PUCCH #1

Downlink

t

Slot#n-2

One PUCCH having higher-priority UCI is transmitted

Slot#n

Slot#n+1

Slot#n-1 — 10-70

EP 4 665 036 A2

## FIG. 11A

| TAG ID | TIMING ADVANCE COMMAND | Oct 1 |
|---|---|---|

11A-00                    11A-05

# FIG. 11B

11B-10

11B-15

DOWNLINK FRAME 11B-00

UPLINK FRAME 11B-05

11B-20

# FIG. 12

Single cell LTE/NR — S00

gNB — S25
- SDAP — S30
- PDCP — S35
- RLC — S40
- MAC — S45
- PHY

UE — S50
- PHY — S55
- MAC — S60
- RLC — S65
- PDCP — S70
- SDAP

Carrier aggregation — S10

gNB
- SDAP
- PDCP
- RLC
- MAC
- PHY · · · PHY

UE
- PHY · · · PHY
- MAC
- RLC
- PDCP
- SDAP

Dual connectivity — S20

MgNB
- SDAP
- PDCP
- RLC
- MAC
- PHY

SgNB
- RLC
- MAC
- PHY

UE
- PHY
- MAC
- RLC
- PDCP
- SDAP

- PHY
- MAC
- RLC

EP 4 665 036 A2

FIG. 13

# FIG. 14

| Control information for TRP #0 | — | DCI #0 |

| Control information for TRP #1 | — | DCI #1 |

⋮   ⋮

| Control information for TRP #(N−1) | — | DCI #(N−1) |

Case #1 — 14-100

| Control information for TRP #0 | — | DCI #0 |

| Control information for TRP #1 | — | sDCI #0 |

⋮   ⋮

| Control information for TRP #(N−1) | — | sDCI #(N−2) |

Case #2 — 14-105

| Control information for TRP #0 | — | DCI |

| Control information for TRP #1 | |
| Control information for TRP #(N−1) | — | sDCI |

Case #3 — 14-110

| Control information for TRP #0 | |
| Control information for TRP #1 | — | Long DCI |
| Control information for TRP #(N−1) | |

Case #4 — 14-115

EP 4 665 036 A2

# FIG. 15A

Option #1: HARQ-ACK for single-PDCCH NC-JT — 15A-00

# FIG. 15B

Option #2: joint HARQ-ACK — 15B-20

# FIG. 15C

Option #3: inter-slot TDMed separate HARQ-ACK — 15C-40

# FIG. 15D

Option #4: intra-slot TDMed separate HARQ-ACK — 15D-60

# FIG. 15E

EP 4 665 036 A2

# FIG. 16A

Option #1: CONFIGURE n PIECES OF PUCCH-spatialRelationInfo
IN ONE PUCCH RESOURCE, PERFORM PUCCH REPEATED TRANSMISSION
WITH RESPECT TO n TRPS BY SELECTING ONE PUCCH RESOURCE ─ 16-00

PERFORM CONNECTION BETWEEN PUCCH RESOURCE
AND PUCCH-spatialRelationInfo (e.g. USE MAC-CE) ─ 16-05

INDICATE BY BASE STATION TO UE WITH RESPECT TO
PUCCH REPEATED TRANSMISSION WITH RESPECT TO n TRPS ─ 16-10

SELECT ONE OF PUCCH RESOURCES CONFIGURED
WITH n PIECES OF PUCCH-spatialRelationInfo ─ 16-15

PERFORM PUCCH REPEATED TRANSMISSION ACCORDING
TO ORDER OF PUCCH-spatialRelationInfo
TO BE APPLIED TO EACH PUCCH TRANSMISSION ─ 16-20

# FIG. 16B

Option #2: CONFIGURE ONE PIECE OF PUCCH-spatialRelationInfo
IN ONE PUCCH RESOURCE, PERFORM PUCCH REPEATED TRANSMISSION
WITH RESPECT TO n TRPS BY SELECTING n PUCCH RESOURCES ─ 16-25

PERFORM CONNECTION BETWEEN PUCCH RESOURCE
AND PUCCH-spatialRelationInfo (e.g. USE MAC-CE) ─ 16-30

INDICATE BY BASE STATION TO UE WITH RESPECT TO
PUCCH REPEATED TRANSMISSION WITH RESPECT TO n TRPS ─ 16-35

SELECT n PUCCH RESOURCES FROM
AMONG TOTAL PUCCH RESOURCES ─ 16-40

PERFORM PUCCH REPEATED TRANSMISSION
ACCORDING TO ORDER OF PUCCH RESOURCES
TO BE APPLIED TO EACH PUCCH TRANSMISSION ─ 16-45

# FIG. 17

# FIG. 18

| PUCCH RESOURCE FOR TRP 0 | PUCCH RESOURCE FOR TRP 1 |
|---|---|

18-00 · 18-05 · 18-10 · PUCCH RESOURCE FOR TRP 0 · 18-15 · PUCCH RESOURCE FOR TRP 1 · 18-20 · 18-30 · 18-25

# FIG. 19

Option #1 — 19-00

| SLOT | SLOT | SLOT |
|---|---|---|

— 19-01

PUCCH FRAME FOR TRP 0

— 19-10

PUCCH FRAME FOR TRP 1

19-10

— 19-15

PUCCH TRANSMISSION FOR TRP 0

— 19-20

PUCCH TRANSMISSION FOR TRP 1

Option #2 — 19-05

| SLOT | SLOT | SLOT |
|---|---|---|

— 19-30

PUCCH RESOURCE FOR TRP 0

19-25   — 19-35

PUCCH RESOURCE FOR TRP 1

k OFDM SYMBOLS

— 19-40

PUCCH TRANSMISSION FOR TRP 0

— 19-45

PUCCH TRANSMISSION FOR TRP 1

# FIG. 20

| SLOT | | SLOT | | SLOT |
|---|---|---|---|---|

PUCCH RESOURCE FOR TRP 0    PUCCH RESOURCE FOR TRP 1

20-00    k OFDM SYMBOLS    20-10    k OFDM SYMBOLS    20-20

20-05    20-15

EP 4 665 036 A2

# FIG. 21

SLOT

OFDM SYMBOL

21-00

PUCCH RESOURCE FOR TRP 0          PUCCH RESOURCE FOR TRP 1

21-05          PROTECTION TIME          21-15

21-105

EP 4 665 036 A2

EP 4 665 036 A2

# FIG. 22

93

FIG. 23

EP 4 665 036 A2

# FIG. 24

24-00

24-30

24-05

PUCCH RESOURCE FOR TRP 0

PUCCH RESOURCE FOR TRP 1

24-10

PUCCH RESOURCE FOR TRP 0

24-15

PUCCH TRANSMISSION FOR TRP 1

24-20

24-35

24-25

24-40

24-70

24-45

PUCCH RESOURCE FOR TRP 0

PUCCH RESOURCE FOR TRP 1

24-50

PUCCH RESOURCE FOR TRP 0

24-55

PUCCH RESOURCE FOR TRP 1

24-60

24-75

24-65

FIG. 25

EP 4 665 036 A2

| TAG ID 1 | TIMING ADVANCE COMMAND 1 | TAG ID 2 | TIMING ADVANCE COMMAND 2 | PUCCH SIGNAL ID |
|---|---|---|---|---|
| 25-00 | 25-05 | 25-10 | 25-15 | 25-20 |

FIG. 26

26-00

Case #1: Intra-cell Multi-TRP

TRP 1 (ServCellIndex#1,PCI #1)

TRP 2 (ServCellIndex#1,PCI #1)

26-10

Case #2: Intra-cell Multi-TRP with non-CA framework

TRP 1 (ServCellIndex#1,PCI #1)

TRP 2 (noServCellIndex, PCI #2)

26-20

Case #3: Intra-cell Multi-TRP with CA framework

TRP 1 (ServCellIndex#1,PCI #1)

TRP 2 (ServCellIndex#2,PCI #2)

26-30

Case #4: Conventional CA operation

TRP 1 (ServCellIndex#1,PCI #1)

TRP 2 (ServCellIndex#2,PCI #2)

Freq.domain

Spatial domain

# FIG. 27

27-00

WHEN PUCCH REPEATED TRANSMISSION (A) TAKING INTO ACCOUNT PLURALITY OF TRPS OVERLAPS OTHER PUCCH REPEATED TRANSMISSION (B) TAKING INTO ACCOUNT PLURALITY OF TRPS OR PUCCH REPEATED TRANSMISSION (C) TAKING INTO ACCOUNT SINGLE TRP

27-05

REPEATED TRANSMISSION UNIT OF A = REPEATED TRANSMISSION UNIT OF B OR C

NO →

27-10

REPEATED TRANSMISSION UNIT OF A > REPEATED TRANSMISSION UNIT OF B OR C

YES → DROP A

NO → DROP B OR C

YES ↓

27-15

UCI PRIORITY ORDER OF A = UCI PRIORITY ORDER OF B OR C

NO →

27-20

UCI PRIORITY ORDER OF A < UCI PRIORITY ORDER OF B OR C

YES → DROP A

NO → DROP B OR C

YES ↓

27-25

SCHEDULING TIME POINT OF A = SCHEDULING TIME POINT OF B OR C

NO →

27-30

SCHEDULING TIME POINT OF A > SCHEDULING TIME POINT OF B OR C

YES → DROP A

NO → DROP B OR C

YES ↓

27-35

NUMBER OF TIMES OF REPETITION OF A > NUMBER OF TIMES OF REPETITION OF B OR C

YES → DROP A

NO → DROP B OR C

EP 4 665 036 A2

# FIG. 28

28-05
28-00
28-10

UE PROCESSOR

UE RECEIVER

UE TRANSMITTER

# FIG. 29

**REFERENCES CITED IN THE DESCRIPTION**

**Patent documents cited in the description**

- EP 21753010
- KR 2021001884 W